(19) Europäisches Patentamt
European Patent Office
Office européen des brevets

(11) **EP 4 401 349 A1**

(12) **EUROPEAN PATENT APPLICATION**
published in accordance with Art. 153(4) EPC

(43) Date of publication:
**17.07.2024  Bulletin 2024/29**

(21) Application number: **22874803.4**

(22) Date of filing: **23.09.2022**

(51) International Patent Classification (IPC):
**H04L 5/00** (2006.01)

(52) Cooperative Patent Classification (CPC):
**H04L 5/00; H04W 72/21**

(86) International application number:
**PCT/CN2022/121083**

(87) International publication number:
**WO 2023/051417 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2021  CN 202111162151**

(71) Applicant: **Huawei Technologies Co., Ltd.
Shenzhen, Guangdong 518129 (CN)**

(72) Inventors:
• **LU, Shaozhong
  Shenzhen, Guangdong 518129 (CN)**
• **GUO, Zhiheng
  Shenzhen, Guangdong 518129 (CN)**
• **SUN, Yue
  Shenzhen, Guangdong 518129 (CN)**

(74) Representative: **Epping - Hermann - Fischer
Patentanwaltsgesellschaft mbH
Schloßschmidstraße 5
80639 München (DE)**

(54) **COMMUNICATION METHOD AND APPARATUS**

(57)    This application discloses a communication method and apparatus, used for transmission of UCI through a channel that occupies a plurality of time units. The method is as follows: After determining a quantity of coded modulation symbols of first UCI, a terminal device may send the first UCI to a network device through a first channel that occupies a plurality of time units. The quantity of coded modulation symbols of the first UCI is determined based on a quantity N of time units occupied by the first channel and/or a scaling factor K of a transport block carried on the first channel. In this way, transmission of the UCI can be performed through the channel that occupies the plurality of time units.

FIG. 2

**Description**

**CROSS-REFERENCE TO RELATED APPLICATIONS**

This application claims priority to Chinese Patent Application No. 202111162151.3, filed with the China National Intellectual Property Administration on September 30, 2021 and entitled "COMMUNICATION METHOD AND APPARATUS", which is incorporated herein by reference in its entirety.

**TECHNICAL FIELD**

This application relates to the field of communication technologies, and in particular, to a communication method and apparatus.

**BACKGROUND**

To improve uplink coverage performance of a terminal device, a technology for a channel (for example, a transport block over multi-slot (transport block over multi-slot, TBoMS) physical uplink shared channel (physical uplink shared channel, PUSCH)) that occupies a plurality of time units is introduced in a mobile communication system (for example, the 5th generation (the 5th generation, 5G) communication system).

Time at which the terminal device transmits a data packet through a PUSCH that occupies a plurality of time units may overlap time at which the terminal device transmits uplink control information (uplink control information, UCI) through a physical uplink control channel (physical uplink control channel, PUCCH). When the PUSCH that occupies the plurality of time units and through which the terminal device transmits the data packet and the PUCCH through which the terminal device transmits the UCI meet a multiplexing condition, the terminal device multiplexes the UCI carried by the PUCCH onto the PUSCH that occupies the plurality of time units, that is, transmit the data packet and the UCI through the PUSCH that occupies the plurality of time units. Therefore, how to transmit the UCI through the PUSCH that occupies the plurality of time units is an urgent problem to be resolved.

**SUMMARY**

This application provides a communication method and apparatus, used for transmission of UCI through a channel (for example, a PUSCH) that occupies a plurality of time units.

According to a first aspect, an embodiment of this application provides a communication method. The method includes the following.

A terminal device may send first UCI after determining a quantity of coded modulation symbols of the first UCI. The first UCI may be carried on a first channel, a quantity of time units occupied by the first channel is N, a scaling factor of a transport block carried on the first channel is K, at least one of N and K may be used to determine the quantity of coded modulation symbols of the first UCI, N is an integer greater than 1, and K is an integer greater than 1.

According to the method, after determining the quantity of coded modulation symbols of the first UCI, the terminal device may transmit the first UCI through the first channel that occupies a plurality of time units.

In a possible design, the terminal device may determine the quantity of coded modulation symbols of the first UCI in at least one of the following manners, but this is not limited.

Manner 1: The terminal device may determine the quantity of coded modulation symbols of the first UCI based on N and/or K.

Manner 2: The terminal device may determine the quantity of coded modulation symbols of the first UCI based on first information and second information.

Manner 3: The terminal device may determine the quantity of coded modulation symbols of the first UCI based on second information, where the second information may be determined based on N and/or K. Optionally, the second information may be determined by the terminal device based on N and/or K, or may be determined by a network device based on N and/or K.

The first information may include at least one of the following: N or K.

The second information may include at least one of the following: a code rate compensation factor of the first UCI, or a parameter for adjusting an upper limit of the quantity of coded modulation symbols of the first UCI.

In this design, the terminal device may determine the quantity of coded modulation symbols of the first UCI based on N and K or based on the second information determined based on N and/or K, so that the quantity of coded modulation symbols of the first UCI can be accurately determined. In a possible design, the terminal device may determine the quantity of coded modulation symbols of the first UCI based on a quantity of first symbols in one transmission occasion. The quantity of first symbols in one transmission occasion may be determined based on L or based on L and N, the first symbol is a symbol occupied by the first channel in a time unit, L is a length of the first symbols, and L is a positive integer.

In a possible design, when the first UCI is a HARQ-ACK, the terminal device may determine that a quantity of coded modulation symbols of the HARQ-ACK is:

$$Q'_{ACK} = min \left\{ \left\lceil \frac{(O_{ACK}+L_{ACK})\beta_{offset}^{PUSCH} \cdot \sum_{l=0}^{N_{symb,all}^{PUSCH}-1} M_{sc}^{UCI}(l)}{\frac{1}{K}\sum_{r=0}^{C_{UL-SCH}-1} K_r} \right\rceil, \left\lceil \alpha \cdot \sum_{l=l_0}^{N_{symb,all}^{PUSCH}-1} M_{sc}^{UCI}(l) \right\rceil \right\},$$

where

min() represents taking a minimum value, and ⌈ ⌉ represents rounding up.

$O_{ACK}$ is a quantity of HARQ-ACK bits.

$L_{ACK}$ is a quantity of cyclic redundancy check CRC bits for the HARQ-ACK.

$\beta_{offset}^{PUSCH} = \beta_{offset}^{HARQ-ACK}$, where $\beta_{offset}^{HARQ-ACK}$ is a code rate compensation factor of the HARQ-ACK.

$C_{UL-SCH}$ is a quantity of code blocks of the transport block carried on the first channel.

$K_r$ is a size of the $r^{th}$ code block of the transport block carried on the first channel.

$M_{sc}^{UCI}(l)$ is a quantity of resource elements REs that can be used for transmission of UCI in a symbol $l$ occupied by the first channel, and $l = 0,1,2, ..., N_{symb,all}^{PUSCH} - 1$.

$N_{symb,all}^{PUSCH}$ is the quantity of first symbols in one transmission occasion, and the first symbol is a symbol occupied by the first channel in a time unit.

$\alpha$ is a parameter for adjusting an upper limit of the quantity of coded modulation symbols of the HARQ-ACK.

$l_0$ is a symbol index of the 1st symbol that does not carry a demodulation reference signal DMRS after the 1st symbol that carries a DMRS in first symbols in one time unit. According to this design, the quantity of coded modulation symbols of the HARQ-ACK can be accurately determined.

In a possible design, when the first UCI is a CSI part 1, the terminal device may determine that a quantity of coded modulation symbols of the CSI part 1 is:

$$Q'_{CSI-1} = min \left\{ \left\lceil \frac{(O_{CSI-1}+L_{CSI-1})\beta_{offset}^{PUSCH} \cdot \sum_{l=0}^{N_{symb,all}^{PUSCH}-1} M_{sc}^{UCI}(l)}{\frac{1}{K}\sum_{r=0}^{C_{UL-SCH}-1} K_r} \right\rceil, \left\lceil \alpha \cdot \sum_{l=0}^{N_{symb,all}^{PUSCH}-1} M_{sc}^{UCI}(l) \right\rceil - Q'_{ACK/CG-UCI} \right\}$$

, where

min() represents taking a minimum value, and ⌈ ⌉ represents rounding up.

$O_{CSI-1}$ is a quantity of bits for the CSI part 1.

$L_{CSI-1}$ is a quantity of CRC bits for the CSI part 1.

$Q'_{ACK/CG-UCI}$ is a quantity of coded modulation symbols of a HARQ-ACK or configured grant-uplink control information CG-UCI carried on the first channel.

$\beta_{offset}^{PUSCH} = \beta_{offset}^{CSI-part1}$, where $\beta_{offset}^{CSI-part1}$ is a code rate compensation factor of the CSI part 1.

$C_{UL-SCH}$ is a quantity of code blocks of the transport block carried on the first channel.

$K_r$ is a size of the $r^{th}$ code block of the transport block carried on the first channel.

$M_{sc}^{UCI}(l)$ is a quantity of REs that can be used for transmission of UCI in a symbol $l$ occupied by the first channel, and $l = 0,1,2, ..., N_{symb,all}^{PUSCH} - 1$.

$N_{symb,all}^{PUSCH}$ is the quantity of first symbols in one transmission occasion, and the first symbol is a symbol occupied by the first channel in a time unit.

$\alpha$ is a parameter for adjusting an upper limit of the quantity of coded modulation symbols of the CSI part 1.

According to this design, the quantity of coded modulation symbols of the CSI part 1 can be accurately determined.

In a possible design, when the first UCI is a CSI part 2, the terminal device may determine that a quantity of coded modulation symbols of the CSI part 2 is:

$$Q'_{CSI-2} = min \left\{ \left\lceil \frac{(O_{CSI-2}+L_{CSI-2})\beta_{offset}^{PUSCH} \cdot \Sigma_{l=0}^{N_{symb,all}^{PUSCH}-1} M_{sc}^{UCI}(l)}{\frac{1}{K}\Sigma_{r=0}^{C_{UL-SCH}-1} K_r} \right\rceil, \left\lceil \alpha \cdot \Sigma_{l=0}^{N_{symb,all}^{PUSCH}-1} M_{sc}^{UCI}(l) \right\rceil - Q'_{ACK/CG-UCI} - Q'_{CSI-1} \right\}$$

, where

min() represents taking a minimum value, and ⌈ ⌉ represents rounding up.

$O_{CSI-2}$ is a quantity of bits for the CSI part 2.

$L_{CSI-2}$ is a quantity of CRC bits for the CSI part 2.

$Q'_{CSI-1}$ is a quantity of coded modulation symbols of a CSI part 1 carried on the first channel.

$Q'_{ACK/CG-UCI}$ is a quantity of coded modulation symbols of a HARQ-ACK or CG-UCI carried on the first channel.

$\beta_{offset}^{PUSCH} = \beta_{offset}^{CSI-part2}$, where $\beta_{offset}^{CSI-part2}$ is a code rate compensation factor of the CSI part 2.

$C_{UL-SCH}$ is a quantity of code blocks of the transport block carried on the first channel.

$K_r$ is a size of the $r^{th}$ code block of the transport block carried on the first channel.

$M_{sc}^{UCI}(l)$ is a quantity of REs that can be used for transmission of UCI in a symbol $l$ occupied by the first channel, and $l = 0,1,2, ..., N_{symb,all}^{PUSCH} - 1$.

$N_{symb,all}^{PUSCH}$ is the quantity of first symbols in one transmission occasion, and the first symbol is a symbol occupied by the first channel in a time unit.

$\alpha$ is a parameter for adjusting an upper limit of the quantity of coded modulation symbols of the CSI part 2.

According to this design, the quantity of coded modulation symbols of the CSI part 2 can be accurately determined.

In a possible design, when the first UCI is CG-UCI, the terminal device may determine that a quantity of coded modulation symbols of the CG-UCI is:

$$Q'_{CG-UCI} = min \left\{ \left\lceil \frac{(O_{CG-UCI}+L_{CG-UCI})\beta_{offset}^{PUSCH} \cdot \Sigma_{l=0}^{N_{symb,all}^{PUSCH}-1} M_{sc}^{UCI}(l)}{\frac{1}{K}\Sigma_{r=0}^{C_{UL-SCH}-1} K_r} \right\rceil, \left\lceil \alpha \cdot \Sigma_{l=l_0}^{N_{symb,all}^{PUSCH}-1} M_{sc}^{UCI}(l) \right\rceil \right\}$$

, where

min() represents taking a minimum value, and ⌈ ⌉ represents rounding up.

$O_{CG-UCI}$ is a quantity of CG-UCI bits.

$L_{CG-UCI}$ is a quantity of CRC bits for the CG-UCI.

$\beta_{offset}^{PUSCH} = \beta_{offset}^{CG-UCI}$ where $\beta_{offset}^{CG-UCI}$ is a code rate compensation factor of the CG-UCI. $C_{UL-SCH}$ is a quantity of code blocks of the transport block carried on the first channel. $K_r$ is a size of the $r^{th}$ code block of the transport block carried on the first channel.

$M_{sc}^{UCI}(l)$ is a quantity of REs that can be used for transmission of UCI in a symbol $l$ occupied by the first channel, and $l = 0,1,2, \dots, N_{symb,all}^{PUSCH} - 1$.

$N_{symb,all}^{PUSCH}$ is the quantity of first symbols in one transmission occasion, and the first symbol is a symbol occupied by the first channel in a time unit.

$\alpha$ is a parameter for adjusting an upper limit of the quantity of coded modulation symbols of the CG-UCI.

$l_0$ is a symbol index of the 1st symbol that does not carry a DMRS after the 1st symbol that carries a DMRS in first symbols in one time unit.

According to this design, the quantity of coded modulation symbols of the CG-UCI can be accurately determined.

In a possible design, when the first UCI is a HARQ-ACK and CG-UCI, the terminal device may determine that a quantity of coded modulation symbols of the HARQ-ACK and the CG-UCI is:

$$Q_{ACK}' = min \left\{ \left\lceil \frac{(O_{ACK} + O_{CG-UCI} + L_{ACK})\beta_{offset}^{PUSCH} \cdot \sum_{l=0}^{N_{symb,all}^{PUSCH}-1} M_{sc}^{UCI}(l)}{\frac{1}{K}\sum_{r=0}^{C_{UL-SCH}-1} K_r} \right\rceil, \left\lceil \alpha \cdot \sum_{l=l_0}^{N_{symb,all}^{PUSCH}-1} M_{sc}^{UCI}(l) \right\rceil \right\}$$

, where

min() represents taking a minimum value, and ⌈ ⌉ represents rounding up.

$O_{ACK}$ is a quantity of HARQ-ACK bits.

$O_{CG-UCI}$ is a quantity of CG-UCI bits.

$L_{ACK}$ is a quantity of CRC bits for the HARQ-ACK.

$\beta_{offset}^{PUSCH} = \beta_{offset}^{HARQ-ACK}$, where $\beta_{offset}^{HARQ-ACK}$ is a code rate compensation factor of the HARQ-ACK.

$C_{UL-SCH}$ is a quantity of code blocks of the transport block carried on the first channel.

$K_r$ is a size of the $r^{th}$ code block of the transport block carried on the first channel.

$M_{sc}^{UCI}(l)$ is a quantity of REs that can be used for transmission of UCI in a symbol $l$ occupied by the first channel, and $l = 0,1,2, \dots, N_{symb,all}^{PUSCH} - 1$.

$N_{symb,all}^{PUSCH}$ is the quantity of first symbols in one transmission occasion, and the first symbol is a symbol occupied by the first channel in a time unit.

$\alpha$ is a parameter for adjusting the upper limit of the quantity of coded modulation symbols of the first UCI.

$l_0$ is a symbol index of the 1st symbol that does not carry a DMRS after the 1st symbol that carries a DMRS in first symbols in one time unit.

According to this design, the quantity of coded modulation symbols of the HARQ-ACK and the CG-UCI can be accurately determined.

In a possible design, K is equal to N. In other words, a value of the quantity N of time units occupied by the first channel is equal to a value of the scaling factor K of the transport block carried on the first channel.

In a possible design, the terminal device may send the first UCI to the network device on one transmission occasion. The transmission occasion may include N time units or first symbols in N time units, the N time units may be N slots, and the first symbol may be a symbol occupied by the first channel in a time unit.

In this design, one transmission occasion of the first channel may include the N time units occupied by the first channel or the first symbols in the N time units. In this way, the terminal device can determine the quantity of first symbols in one transmission occasion, so that the quantity of coded modulation symbols of the first UCI can be accurately determined based on the quantity of first symbols in one transmission occasion.

In a possible design, the terminal device may determine the quantity of coded modulation symbols of the first UCI based on at least one set. The at least one set may be determined based on at least one of N, S, and L, S is a start symbol of the first symbols, L is the length of the first symbols, and L is a positive integer.

The at least one set includes at least one of the following: a first set, a second set, a third set, or a fourth set.

The first set includes sequence numbers, in a first symbol set, of the first symbols in the N time units in the transmission occasion.

The second set includes a sequence number, in the first symbol set, of a first symbol in the $i^{th}$ time unit in the transmission occasion.

The third set includes sequence numbers, in a second symbol set, of second symbols in the N time units in the transmission occasion.

The fourth set includes a sequence number, in the second symbol set, of a second symbol in the $i^{th}$ time unit in the transmission occasion.

i is a positive integer, and i is greater than or equal to 1 and less than or equal to N.

The first symbol set includes the first symbols in the N time units in the transmission occasion.

The second symbol set includes the second symbols in the N time units in the transmission occasion.

The second symbol is a symbol that meets a first condition in a time unit.

The first condition is: The symbol is the $1^{st}$ symbol that does not carry a DMRS after the $1^{st}$ symbol that carries a DMRS in first symbols in one time unit, or the symbol is a symbol after the $1^{st}$ symbol that does not carry a DMRS after the $1^{st}$ symbol that carries a DMRS in first symbols in one time unit.

Optionally, before determining the quantity of coded modulation symbols of the first UCI, the terminal device may obtain the at least one set. For example, the terminal device may determine the at least one set based on at least one of N, S, and L. For another example, after determining the at least one set based on at least one of N, S, and L, the network device may send the at least one set to the terminal device. Correspondingly, the terminal device receives the at least one set from the network device.

This design introduces the at least one set, to simplify modification for a formula for calculating the quantity of coded modulation symbols of the first UCI.

In a possible design, the $i^{th}$ time unit may be a time unit in which the first channel overlaps a PUCCH carrying the first UCI.

The $i^{th}$ time unit may be used to determine the second set and/or the fourth set. When the time unit in which the first channel overlaps the PUCCH carrying the first UCI is some time units (referred to as overlapping time units for short below) in the N time units, the second set and/or the fourth set may be determined for only the overlapping time units, and there is no need to determine the second set and/or the fourth set for the N time units. Therefore, according to this design, computing resources used to determine the second set and/or the fourth set can be saved.

In addition, when the terminal device receives the at least one set from the network device, the terminal device may receive the second set and/or the fourth set from the network device for only the overlapping time units. Therefore, transmission resources can be further saved according to this design.

In a possible design, when frequency hopping is configured for the first channel, before sending the first UCI to the network device, the terminal device may multiplex the first UCI onto the first channel based on third information, fourth information, fifth information, and sixth information.

The third information may be a sequence number, in the first symbol set, of the $1^{st}$ symbol after a first group of consecutive symbols that carry a DMRS in the $1^{st}$ frequency hopping in the time unit in which the first channel overlaps the PUCCH carrying the first UCI.

The fourth information may be a sequence number, in the first symbol set, of the $1^{st}$ symbol after a first group of consecutive symbols that carry a DMRS in the $2^{nd}$ frequency hopping in the time unit in which the first channel overlaps the PUCCH carrying the first UCI.

The fifth information may be a sequence number, in the first symbol set, of the $1^{st}$ symbol that does not carry a DMRS in the $1^{st}$ frequency hopping in the time unit in which the first channel overlaps the PUCCH carrying the first UCI.

The sixth information may be a sequence number, in the first symbol set, of the $1^{st}$ symbol that does not carry a DMRS in the $2^{nd}$ frequency hopping in the time unit in which the first channel overlaps the PUCCH carrying the first UCI.

The first symbol set includes the first symbols in the N time units in the transmission occasion. According to this design, when frequency hopping is configured for the first channel, the terminal device may multiplex the first UCI onto the time unit in which the first channel overlaps the PUCCH carrying the first UCI on the first channel.

In a possible design, when frequency hopping is not configured for the first channel, before sending the first UCI to the network device, the terminal device may multiplex the first UCI onto the first channel based on seventh information and eighth information.

The seventh information is a sequence number, in the first symbol set, of the $1^{st}$ symbol after a first group of consecutive symbols that carry a DMRS in the time unit in which the first channel overlaps the PUCCH carrying the first UCI.

The eighth information is a sequence number, in the first symbol set, of the 1st symbol that does not carry a DMRS in the time unit in which the first channel overlaps the PUCCH carrying the first UCI.

The first symbol set includes the first symbols in the N time units in the transmission occasion. According to this design, when frequency hopping is not configured for the first channel, the terminal device may multiplex the first UCI onto the time unit in which the first channel overlaps the PUCCH carrying the first UCI on the first channel.

According to a second aspect, an embodiment of this application provides a communication method. The method includes: A network device may determine a quantity of coded modulation symbols of first UCI, and receive the first UCI. The first UCI may be carried on a first channel, a quantity of time units occupied by the first channel is N, a scaling factor of a transport block carried on the first channel is K, at least one of N and K may be used to determine the quantity of coded modulation symbols of the first UCI, N is an integer greater than 1, and K is an integer greater than 1.

According to the method, the network device may receive the first UCI through the first channel that occupies a plurality of time units.

In a possible design, the network device may determine the quantity of coded modulation symbols of the first UCI in at least one of the following manners, but this is not limited.

Manner 1: The network device may determine the quantity of coded modulation symbols of the first UCI based on N and/or K.

Manner 2: The network device may determine the quantity of coded modulation symbols of the first UCI based on first information and second information.

Manner 3: The network device may determine the quantity of coded modulation symbols of the first UCI based on second information, where the second information is determined based on N and/or K.

The first information includes at least one of the following: N or K.

The second information includes at least one of the following: a code rate compensation factor of the first UCI, or a parameter for adjusting an upper limit of the quantity of coded modulation symbols of the first UCI.

In this design, the network device may determine the quantity of coded modulation symbols of the first UCI based on N and K or based on the second information determined based on N and/or K, so that the quantity of coded modulation symbols of the first UCI can be accurately determined.

In a possible design, the network device may determine the quantity of coded modulation symbols of the first UCI based on a quantity of first symbols in one transmission occasion. The quantity of first symbols in one transmission occasion is determined based on L or based on L and N, the first symbol may be a symbol occupied by the first channel in a time unit, L is a length of the first symbols, and L is a positive integer.

In a possible design, when the first UCI is a HARQ-ACK, the network device may determine that a quantity of coded modulation symbols of the HARQ-ACK is:

$$
Q'_{ACK} = min \left\{ \left\lceil \frac{(O_{ACK}+L_{ACK})\beta_{offset}^{PUSCH} \cdot \sum_{l=0}^{N_{symb,all}^{PUSCH}-1} M_{sc}^{UCI}(l)}{\frac{1}{K}\sum_{r=0}^{C_{UL-SCH}-1} K_r} \right\rceil, \left\lceil \alpha \cdot \sum_{l=l_0}^{N_{symb,all}^{PUSCH}-1} M_{sc}^{UCI}(l) \right\rceil \right\},
$$

where

min() represents taking a minimum value, and ⌈ ⌉ represents rounding up.

$O_{ACK}$ is a quantity of HARQ-ACK bits.

$L_{ACK}$ is a quantity of cyclic redundancy check CRC bits for the HARQ-ACK.

$\beta_{offset}^{PUSCH} = \beta_{offset}^{HARQ-ACK}$, where $\beta_{offset}^{HARQ-ACK}$ is a code rate compensation factor of the HARQ-ACK.

$C_{UL-SCH}$ is a quantity of code blocks of the transport block carried on the first channel.

$K_r$ is a size of the $r$th code block of the transport block carried on the first channel.

$M_{sc}^{UCI}(l)$ is a quantity of resource elements REs that can be used for transmission of UCI in a symbol $l$ occupied by the first channel, and $l$ = 0,1,2, ..., $l = 0,1,2, ..., N_{symb,all}^{PUSCH} - 1$.

$N_{symb,all}^{PUSCH}$ is the quantity of first symbols in one transmission occasion, and the first symbol is a symbol occupied by the first channel in a time unit.

$\alpha$ is a parameter for adjusting an upper limit of the quantity of coded modulation symbols of the HARQ-ACK.

$l_0$ is a symbol index of the 1st symbol that does not carry a demodulation reference signal DMRS after the 1st symbol that carries a DMRS in first symbols in one time unit. According to this design, the quantity of coded modulation symbols of the HARQ-ACK can be accurately determined.

In a possible design, when the first UCI is a CSI part 1, the network device may determine that a quantity of coded modulation symbols of the CSI part 1 is:

$$Q'_{CSI-1} = min \left\{ \left\lceil \frac{(O_{CSI-1}+L_{CSI-1})\beta^{PUSCH}_{offset} \cdot \Sigma^{N^{PUSCH}_{symb,all}-1}_{l=0} M^{UCI}_{sc}(l)}{\frac{1}{K}\Sigma^{C_{UL-SCH}-1}_{r=0} K_r} \right\rceil, \left\lceil \alpha \cdot \Sigma^{N^{PUSCH}_{symb,all}-1}_{l=0} M^{UCI}_{sc}(l) \right\rceil - Q'_{ACK/CG-UCI} \right\},$$

where

min() represents taking a minimum value, and $\lceil \rceil$ represents rounding up.

$O_{CSI-1}$ is a quantity of bits for the CSI part 1.

$L_{CSI-1}$ is a quantity of CRC bits for the CSI part 1.

$Q'_{ACK/CG-UCI}$ is a quantity of coded modulation symbols of a HARQ-ACK or configured grant-uplink control information CG-UCI carried on the first channel.

$\beta^{PUSCH}_{offset} = \beta^{CSI-part1}_{offset}$, where $\beta^{CSI-part1}_{offset}$ is a code rate compensation factor of the CSI part 1.

$C_{UL-SCH}$ is a quantity of code blocks of the transport block carried on the first channel. $K_r$ is a size of the $r$th code block of the transport block carried on the first channel.

$M^{UCI}_{sc}(l)$ is a quantity of REs that can be used for transmission of UCI in a symbol $l$ occupied by the first channel, and $l = 0,1,2, ..., N^{PUSCH}_{symb,all} - 1$.

$N^{PUSCH}_{symb,all}$ is the quantity of first symbols in one transmission occasion, and the first symbol is a symbol occupied by the first channel in a time unit.

$\alpha$ is a parameter for adjusting an upper limit of the quantity of coded modulation symbols of the CSI part 1.

According to this design, the quantity of coded modulation symbols of the CSI part 1 can be accurately determined.

In a possible design, when the first UCI is a CSI part 2, the network device may determine that a quantity of coded modulation symbols of the CSI part 2 is:

$$Q'_{CSI-2} = min \left\{ \left\lceil \frac{(O_{CSI-2}+L_{CSI-2})\beta^{PUSCH}_{offset} \cdot \Sigma^{N^{PUSCH}_{symb,all}-1}_{l=0} M^{UCI}_{sc}(l)}{\frac{1}{K}\Sigma^{C_{UL-SCH}-1}_{r=0} K_r} \right\rceil, \left\lceil \alpha \cdot \Sigma^{N^{PUSCH}_{symb,all}-1}_{l=0} M^{UCI}_{sc}(l) \right\rceil - Q'_{ACK/CG-UCI} - Q'_{CSI-1} \right\},$$

where

min() represents taking a minimum value, and $\lceil \rceil$ represents rounding up.

$O_{CSI-2}$ is a quantity of bits for the CSI part 2.

$L_{CSI-2}$ is a quantity of CRC bits for the CSI part 2.

$Q'_{CSI-1}$ is a quantity of coded modulation symbols of a CSI part 1 carried on the first channel.

$Q'_{ACK/CG-UCI}$ is a quantity of coded modulation symbols of a HARQ-ACK or CG-UCI carried on the first channel.

$$\beta_{offset}^{PUSCH} = \beta_{offset}^{CSI-part2}$$ , where $\beta_{offset}^{CSI-part2}$ is a code rate compensation factor of the CSI part 2.

$C_{UL-SCH}$ is a quantity of code blocks of the transport block carried on the first channel.

$K_r$ is a size of the $r$th code block of the transport block carried on the first channel.

$M_{sc}^{UCI}(l)$ is a quantity of REs that can be used for transmission of UCI in a symbol $l$ occupied by the first channel, and $l = 0,1,2,\ldots,N_{symb,all}^{PUSCH} - 1$.

$N_{symb,all}^{PUSCH}$ is the quantity of first symbols in one transmission occasion, and the first symbol is a symbol occupied by the first channel in a time unit.

$\alpha$ is a parameter for adjusting an upper limit of the quantity of coded modulation symbols of the CSI part 2.

According to this design, the quantity of coded modulation symbols of the CSI part 2 can be accurately determined.

In a possible design, when the first UCI is CG-UCI, the network device may determine that a quantity of coded modulation symbols of the CG-UCI is:

$$Q_{CG-UCI}' = min \left\{ \left\lceil \frac{(O_{CG-UCI}+L_{CG-UCI})\beta_{offset}^{PUSCH} \cdot \sum_{l=0}^{N_{symb,all}^{PUSCH}-1} M_{sc}^{UCI}(l)}{\frac{1}{K}\sum_{r=0}^{C_{UL-SCH}-1} K_r} \right\rceil, \left\lceil \alpha \cdot \sum_{l=l_0}^{N_{symb,all}^{PUSCH}-1} M_{sc}^{UCI}(l) \right\rceil \right\}$$

, where

min() represents taking a minimum value, and ⌈ ⌉ represents rounding up.

$O_{CG-UCI}$ is a quantity of CG-UCI bits.

$L_{CG-UCI}$ is a quantity of CRC bits for the CG-UCI.

$\beta_{offset}^{PUSCH} = \beta_{offset}^{CG-UCI}$ where $\beta_{offset}^{CG-UCI}$ is a code rate compensation factor of the CG-UCI.

$C_{UL-SCH}$ is a quantity of code blocks of the transport block carried on the first channel.

$K_r$ is a size of the $r$th code block of the transport block carried on the first channel.

$M_{sc}^{UCI}(l)$ is a quantity of REs that can be used for transmission of UCI in a symbol $l$ occupied by the first channel, and $l = 0,1,2,\ldots,N_{symb,all}^{PUSCH} - 1$.

$N_{symb,all}^{PUSCH}$ is the quantity of first symbols in one transmission occasion, and the first symbol is a symbol occupied by the first channel in a time unit.

$\alpha$ is a parameter for adjusting an upper limit of the quantity of coded modulation symbols of the CG-UCI.

$l_0$ is a symbol index of the 1st symbol that does not carry a DMRS after the 1st symbol that carries a DMRS in first symbols in one time unit.

According to this design, the quantity of coded modulation symbols of the CG-UCI can be accurately determined.

In a possible design, when the first UCI is a HARQ-ACK and CG-UCI, the network device may determine that a quantity of coded modulation symbols of the HARQ-ACK and the CG-UCI is:

$$Q_{ACK}' = min \left\{ \left\lceil \frac{(O_{ACK}+O_{CG-UCI}+L_{ACK})\beta_{offset}^{PUSCH} \cdot \sum_{l=0}^{N_{symb,all}^{PUSCH}-1} M_{sc}^{UCI}(l)}{\frac{1}{K}\sum_{r=0}^{C_{UL-SCH}-1} K_r} \right\rceil, \left\lceil \alpha \cdot \sum_{l=l_0}^{N_{symb,all}^{PUSCH}-1} M_{sc}^{UCI}(l) \right\rceil \right\},$$

where

min() represents taking a minimum value, and $\lceil \ \rceil$ represents rounding up.

$O_{ACK}$ is a quantity of HARQ-ACK bits.

$O_{CG\text{-}UCI}$ is a quantity of CG-UCI bits.

$L_{ACK}$ is a quantity of CRC bits for the HARQ-ACK.

$\beta_{offset}^{PUSCH} = \beta_{offset}^{HARQ-ACK}$, where $\beta_{offset}^{HARQ-ACK}$ is a code rate compensation factor of the HARQ-ACK.

$C_{UL\text{-}SCH}$ is a quantity of code blocks of the transport block carried on the first channel.

$K_r$ is a size of the $r^{th}$ code block of the transport block carried on the first channel.

$M_{sc}^{UCI}(l)$ is a quantity of REs that can be used for transmission of UCI in a symbol $l$ occupied by the first channel, and $l = 0,1,2, \ldots, N_{symb,all}^{PUSCH} - 1$.

$N_{symb,all}^{PUSCH}$ is the quantity of first symbols in one transmission occasion, and the first symbol is a symbol occupied by the first channel in a time unit.

$\alpha$ is a parameter for adjusting the upper limit of the quantity of coded modulation symbols of the first UCI.

$l_0$ is a symbol index of the 1st symbol that does not carry a DMRS after the 1st symbol that carries a DMRS in first symbols in one time unit.

According to this design, the quantity of coded modulation symbols of the HARQ-ACK and the CG-UCI can be accurately determined.

In a possible design, K is equal to N. In other words, a value of the quantity N of time units occupied by the first channel is equal to a value of the scaling factor K of the transport block carried on the first channel.

In a possible design, the network device may receive the first UCI from the terminal device on one transmission occasion. The transmission occasion may include N time units or first symbols in N time units, the N time units may be N slots, and the first symbol may be a symbol occupied by the first channel in a time unit.

In this design, one transmission occasion of the first channel may include the N time units occupied by the first channel or the first symbols in the N time units. In this way, the network device can determine the quantity of first symbols in one transmission occasion, so that the quantity of coded modulation symbols of the first UCI can be accurately determined based on the quantity of first symbols in one transmission occasion.

In a possible design, the network device may determine the quantity of coded modulation symbols of the first UCI based on at least one set. The at least one set may be determined based on at least one of N, S, and L, S is a start symbol of the first symbols, L is the length of the first symbols, and L is a positive integer.

The at least one set includes at least one of the following: a first set, a second set, a third set, or a fourth set.

The first set includes sequence numbers, in a first symbol set, of the first symbols in the N time units in the transmission occasion.

The second set includes a sequence number, in the first symbol set, of a first symbol in the $i^{th}$ time unit in the transmission occasion.

The third set includes sequence numbers, in a second symbol set, of second symbols in the N time units in the transmission occasion.

The fourth set includes a sequence number, in the second symbol set, of a second symbol in the $i^{th}$ time unit in the transmission occasion.

i is a positive integer, and i is greater than or equal to 1 and less than or equal to N.

The first symbol set includes the first symbols in the N time units in the transmission occasion.

The second symbol set includes the second symbols in the N time units in the transmission occasion.

The second symbol is a symbol that meets a first condition in a time unit.

The first condition is: The symbol is the 1st symbol that does not carry a DMRS after the 1st symbol that carries a DMRS in first symbols in one time unit, or the symbol is a symbol after the 1st symbol that does not carry a DMRS after the 1st symbol that carries a DMRS in first symbols in one time unit.

Optionally, before determining the quantity of coded modulation symbols of the first UCI, the network device may obtain the at least one set. For example, the network device may determine the at least one set based on at least one of N, S, and L.

This design introduces the at least one set, to simplify modification for a formula for calculating the quantity of coded modulation symbols of the first UCI.

In a possible design, the $i^{th}$ time unit may be a time unit in which the first channel overlaps a PUCCH carrying the first UCI.

The $i^{th}$ time unit may be used to determine the second set and/or the fourth set. When the time unit in which the first channel overlaps the PUCCH carrying the first UCI is some time units (referred to as overlapping time units for short below) in the N time units, the second set and/or the fourth set may be determined for only the overlapping time units, and there is no need to determine the second set and/or the fourth set for the N time units. Therefore, according to this design, computing resources used to determine the second set and/or the fourth set can be saved.

In a possible design, when frequency hopping is configured for the first channel, after receiving the first UCI from the terminal device, the network device may further obtain the first UCI from the first channel based on third information, fourth information, fifth information, and sixth information.

The third information is a sequence number, in the first symbol set, of the $1^{st}$ symbol after a first group of consecutive symbols that carry a DMRS in the $1^{st}$ frequency hopping in the time unit in which the first channel overlaps the PUCCH carrying the first UCI.

The fourth information is a sequence number, in the first symbol set, of the $1^{st}$ symbol after a first group of consecutive symbols that carry a DMRS in the $2^{nd}$ frequency hopping in the time unit in which the first channel overlaps the PUCCH carrying the first UCI.

The fifth information is a sequence number, in the first symbol set, of the $1^{st}$ symbol that does not carry a DMRS in the $1^{st}$ frequency hopping in the time unit in which the first channel overlaps the PUCCH carrying the first UCI.

The sixth information is a sequence number, in the first symbol set, of the $1^{st}$ symbol that does not carry a DMRS in the $2^{nd}$ frequency hopping in the time unit in which the first channel overlaps the PUCCH carrying the first UCI.

The first symbol set includes the first symbols in the N time units in the transmission occasion.

According to this design, when frequency hopping is configured for the first channel, the network device may obtain the first UCI from the time unit in which the first channel overlaps the PUCCH carrying the first UCI on the first channel.

In a possible design, when frequency hopping is not configured for the first channel, after receiving the first UCI from the terminal device, the network device may obtain the first UCI from the first channel based on seventh information and eighth information.

The seventh information is a sequence number, in the first symbol set, of the $1^{st}$ symbol after a first group of consecutive symbols that carry a DMRS in the time unit in which the first channel overlaps the PUCCH carrying the first UCI.

The eighth information is a sequence number, in the first symbol set, of the $1^{st}$ symbol that does not carry a DMRS in the time unit in which the first channel overlaps the PUCCH carrying the first UCI.

The first symbol set includes the first symbols in the N time units in the transmission occasion.

According to this design, when frequency hopping is not configured for the first channel, the network device may obtain the first UCI from the time unit in which the first channel overlaps the PUCCH carrying the first UCI on the first channel.

According to a third aspect, an embodiment of this application provides a communication apparatus, including units configured to perform the steps in any one of the foregoing aspects.

According to a fourth aspect, an embodiment of this application provides a communication apparatus, including a processor and a memory. The memory is configured to store a computer program or instructions, and the processor is configured to execute the computer program or the instructions in the memory, so that the method provided in the first aspect is performed, or the method provided in the second aspect is performed.

According to a fifth aspect, an embodiment of this application provides a communication system, including a terminal device configured to perform the method provided in the first aspect, and a network device configured to perform the method provided in the second aspect.

According to a sixth aspect, an embodiment of this application further provides a computer program. When the computer program is run on a computer, the computer is enabled to perform the method provided in the first aspect or the method provided in the second aspect.

According to a seventh aspect, an embodiment of this application further provides a computer program product, including computer program code. When the computer program code is run by a computer, the computer is enabled to perform the method provided in the first aspect or the method provided in the second aspect.

According to an eighth aspect, an embodiment of this application further provides a computerreadable storage medium, storing a computer program or instructions. The computer program or the instructions are used to implement the method provided in the first aspect, or implement the method provided in the second aspect.

According to a ninth aspect, an embodiment of this application further provides a chip. The chip is configured to read a computer program stored in a memory, to perform the method provided in any one of the foregoing aspects.

According to a tenth aspect, an embodiment of this application further provides a chip system. The chip system includes a processor, configured to support a computer apparatus in implementing the method provided in any one of the foregoing aspects. In a possible design, the chip system further includes a memory, and the memory is configured to store a program and data that are necessary for the computer apparatus. The chip system may include a chip, or may include a chip and another discrete component.

For technical effects that can be achieved in any one of the third aspect to the tenth aspect, refer to the technical effects that can be achieved in any possible design in either of the first aspect and the second aspect. No repeated description is provided.

## BRIEF DESCRIPTION OF DRAWINGS

FIG. 1A is a schematic diagram of an available slot according to an embodiment of this application;

FIG. 1B is a schematic diagram of another available slot according to an embodiment of this application;

FIG. 1C is a diagram of an architecture of a communication system according to an embodiment of this application;

FIG. 2 is a flowchart of a communication method according to an embodiment of this application;

FIG. 3 is a schematic diagram of a transmission occasion in a communication method according to an embodiment of this application;

FIG. 4 is a schematic diagram of another transmission occasion in a communication method according to an embodiment of this application;

FIG. 5 is a flowchart of another communication method according to an embodiment of this application;

FIG. 6 is a schematic diagram of a multiplexing condition in another communication method according to an embodiment of this application;

FIG. 7 is a diagram of a structure of a communication apparatus according to an embodiment of this application; and

FIG. 8 is a diagram of a structure of another communication apparatus according to an embodiment of this application.

## DESCRIPTION OF EMBODIMENTS

This application provides a communication method and apparatus, used for transmission of UCI through a channel that occupies a plurality of time units. The method and the apparatus are based on a same technical concept. Because problem-resolving principles are similar, mutual reference may be made to implementations of the apparatus and the method, and repeated parts are not described again.

According to the solutions provided in embodiments of this application, after determining a quantity of coded modulation symbols of first UCI, a terminal device may send the first UCI to a network device through a first channel that occupies a plurality of time units. The quantity of coded modulation symbols of the first UCI is determined based on a quantity N of time units occupied by the first channel and/or a scaling factor K of a transport block carried on the first channel. In this way, transmission of the UCI can be performed through the channel that occupies the plurality of time units.

The following describes some terms in embodiments of this application, to facilitate understanding of a person skilled in the art.

(1) A terminal device is a device that provides voice and/or data connectivity for a user. The terminal device may also be referred to as user equipment (user equipment, UE), a terminal (terminal), an access terminal, a terminal unit, a terminal station, a mobile station (mobile station, MS), a remote station, a remote terminal, a mobile terminal (mobile terminal, MT), a wireless communication device, a terminal agent, a terminal device, or the like.

For example, the terminal device may be a handheld device with a wireless connection function, or may be a vehicle, an in-vehicle device (for example, an in-vehicle communication apparatus or an in-vehicle communication chip), or the like with a communication function. Currently, examples of some terminal devices are: a mobile phone (mobile phone), a cordless phone, a session initiation protocol (session initiation protocol, SIP) phone, a wireless local loop (wireless local loop, WLL) station, a personal digital assistant (personal digital assistant, PDA) device, a handheld device with a wireless communication function, a computing device or another processing device connected to a wireless modem, a tablet computer, a computer with wireless sending and receiving functions, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and the like.

(2) A network device is a device that connects a terminal device to a wireless network in a mobile communication system. As a node in a radio access network, the network device may also be referred to as a base station, a radio access network (radio access network, RAN) node (or device), an access point (access point, AP), or an access network (access network, AN) device.

Currently, examples of some network devices are: a new generation NodeB (generation NodeB, gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a transmitting and receiving point (transmitting and receiving point, TRP), a transmitting point (transmitting point, TP), a mobile switching center, a home base station (for example, a home evolved NodeB or a home NodeB, HNB), a baseband unit (baseband unit, BBU), or the like.

In addition, in a network structure, the network device may include a central unit (central unit, CU) node and a distributed unit (distributed unit, DU). In this structure, protocol layers of the network device are split. Functions of some protocol layers are controlled by the CU in a centralized manner. Functions of some or all remaining protocol layers are distributed in the DU, and the CU controls the DU in a centralized manner. For example, the CU is responsible for processing a non-real-time protocol and service, and implementing functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a media access control (media access control, MAC) layer, and a physical (physical, PHY) layer.

Optionally, the network device may further include an active antenna unit (active antenna unit, AAU). The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU.

It may be understood that the network device may include one or more of the CU, the DU, and the AAU. In addition, the CU may be classified into a network device in an access network, or the CU may be classified into a network device in a CN. This is not limited in this application.

(3) A time unit generally refers to a unit of time. For example, the time unit may be but is not limited to a subframe (subframe), a slot (slot), a symbol, a physical slot, an available slot, a first symbol of a slot, a first symbol of a physical slot, a first symbol of an available slot, or the like. The symbol (for example, a first symbol) may be a time domain symbol (for example, an orthogonal frequency division multiplexing (orthogonal frequency division multiplexing, OFDM) symbol) or the like.

(4) Slot (slot)

One slot may include several symbols. For example, one slot may include 14 OFDM symbols; one slot may include 12 OFDM symbols; or one slot may include seven OFDM symbols.

In one slot, all OFDM symbols may be used for uplink transmission; all OFDM symbols may be used for downlink transmission; or some OFDM symbols may be used for downlink transmission, some OFDM symbols may be used for uplink transmission, and some OFDM symbols may be flexible time domain symbols (which may be flexibly configured to be used for uplink or downlink transmission). It should be understood that the foregoing examples are merely examples for description, and shall not constitute any limitation on this application.

In consideration of system forward compatibility, a quantity of OFDM symbols included in a slot and whether the slot is used for uplink transmission and/or downlink transmission are not limited to the foregoing examples.

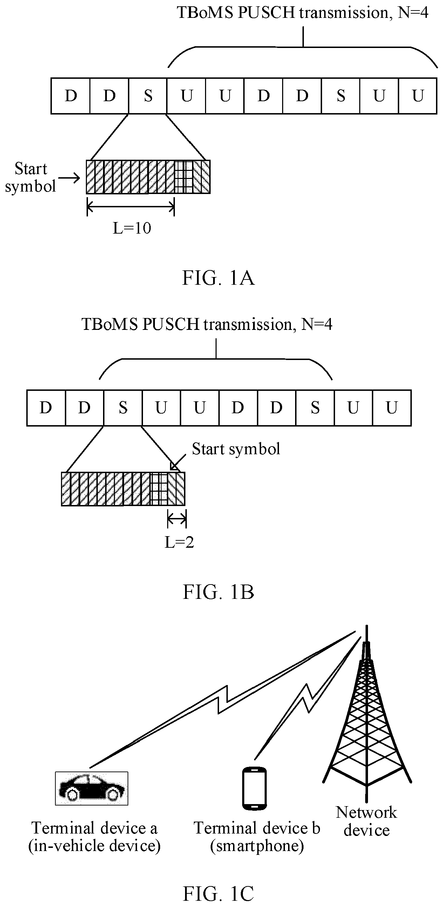

For ease of description, in embodiments of this application, an OFDM symbol used for uplink transmission is referred to as an uplink symbol, an OFDM symbol used for downlink transmission is referred to as a downlink symbol, and a symbol that can be flexibly configured for uplink or downlink transmission is referred to as a flexible symbol. In embodiments of this application, a slot in which all included symbols are uplink symbols is referred to as an uplink slot (for example, U in FIG. 1A, FIG. 1B, FIG. 3, FIG. 4, and FIG. 6 is an uplink slot), and a slot in which all included symbols are downlink symbols is referred to as a downlink slot (for example, D in FIG. 1A, FIG. 1B, FIG. 3, FIG. 4, and FIG. 6 is a downlink slot). In embodiments of this application, a slot that includes an uplink symbol and a downlink symbol or a flexible symbol or a slot that includes only a flexible symbol is referred to as a special slot (for example, S in FIG. 1A, FIG. 1B, FIG. 3, FIG. 4, and FIG. 6 is a special slot).

It should be understood that naming of the foregoing slot and symbol is merely an example, and is not limited thereto.

(5) In embodiments of this application, a first symbol may be a symbol occupied by a first channel in a time unit. The first channel may be a channel that occupies a plurality of time units, for example, a TBoMS PUSCH. The first symbol may include at least one symbol.

A second symbol may be a symbol that meets a first condition in a time unit. The first condition is: The symbol is the 1st symbol that does not carry a demodulation reference signal (demodulation reference signal, DMRS) after the

$1^{st}$ symbol that carries a DMRS in first symbols in one time unit, or the symbol is a symbol after the $1^{st}$ symbol that does not carry a DMRS after the $1^{st}$ symbol that carries a DMRS in first symbols in one time unit. The second symbol may include at least one symbol.

A first transport block may be a transport block carried on the first channel. Optionally, the first transport block may be a TBoMS. The first transport block may include at least one transport block.

(6) A physical slot may be understood as a slot in a new radio (new radio, NR) frame structure.

(7) An available slot may be a slot actually occupied by an uplink transport block, or may be a slot based on both an uplink-downlink slot configuration and time domain resource allocation (time domain resource allocation, TDRA). The uplink-downlink slot configuration may be semistatically configured by a network device using RRC signaling. The TDRA may be indicated by indication information such as downlink control information (downlink control information, DCI), or may be indicated by RRC signaling.

For example, as shown in FIG. 1A, when a start symbol of first symbols is a symbol whose symbol index is 0, a length of the first symbols is 10, a first channel occupies four slots, and an uplink-downlink slot configuration is DDSUU, if first 10 symbols are downlink symbols, two intermediate symbols are flexible symbols, and last two symbols are uplink symbols in a special slot, and a start slot is the $1^{st}$ downlink slot, first four uplink slots after the $1^{st}$ downlink slot are available slots for the first channel.

For another example, as shown in FIG. 1B, when a start symbol of first symbols is a symbol whose symbol index is 12, a length of the first symbols is 2, a first channel occupies four slots, and an uplink-downlink slot configuration is DDSUU, if first 10 symbols are downlink symbols, two intermediate symbols are flexible symbols, and last two symbols are uplink symbols in a special slot, and a start slot is the $1^{st}$ downlink slot, first two special slots and first two uplink slots after the $1^{st}$ downlink slot are available slots for the first channel.

(8) A transmission occasion (transmission occasion, TO) is a time domain range in which a terminal device or a network device sends a transport block.

(9) In embodiments of this application, there may be at least one of the following types of UCI: a hybrid automatic repeat request-acknowledgement (hybrid automatic repeat request-acknowledgement, HARQ-ACK), a channel state information (channel state information, CSI) part 1 (CSI part 1), a CSI part 2 (CSI part 2), configured grant-uplink control information (configured grant-uplink control information, CG-UCI), or a joint code of a HARQ-ACK and CG-UCI (referred to as HARQ and CG-UCI for short below). CSI may include the CSI part 1 (CSI part 1) and/or the CSI part 2 (CSI part 2).

For different types of UCI, formulas for calculating a quantity of coded modulation symbols may be different. For one type of UCI, embodiments of this application may provide a plurality of possible formulas for calculating a quantity of coded modulation symbols of the UCI. In this case, the quantity of coded modulation symbols of the UCI may be calculated by using one formula corresponding to the type of UCI.

(10) In a multiple-input multiple-output (multiple-input multiple-output, MIMO) technology, a layer may be a quantity of different data streams transmitted in parallel. The layer in MIMO may be referred to as a transport layer, a data layer, a data stream, a spatial stream, or the like.

When the MIMO technology is used, a terminal device and/or a network device may select a corresponding modulation and coding scheme (modulation and coding scheme, MCS) for each layer based on channel quality of a transmission channel, to improve a system throughput.

(11) The following describes some parameters in embodiments of this application.

$O_{ACK}$ is a quantity of HARQ-ACK bits.

$L_{ACK}$ is a quantity of cyclic redundancy check (cyclic redundancy check, CRC) bits for the HARQ-ACK. $\beta_{offset}^{PUSCH}$ is a code rate compensation factor of first UCI carried on a first channel, where N is an integer greater than 1. $\beta_{offset}^{HARQ-ACK}$ is a code rate compensation factor of the HARQ-ACK. $\beta_{offset}^{CSI-part1}$ is a code rate compensation factor of a CSI part 1. $\beta_{offset}^{CSI-part2}$ is a code rate compensation factor of a CSI part 2. $\beta_{offset}^{CG-UCI}$ is a code rate compensation factor of CG-UCI.

$C_{UL-SCH}$ is a quantity of code blocks of a first transport block carried on the first channel, and the first transport block may be carried on an uplink shared channel (Uplink Shared Channel, UL-SCH) in the first channel.

$K_r$ is a size of the $r^{th}$ code block of the first transport block carried on the first channel. $M_{sc}^{UCI}(l)$ is a quantity of resource elements (Resource Element, RE) that can be used for transmission of UCI in a symbol l occupied by the first channel, and $l = 0, 1, 2, ..., N_{symb,all}^{PUSCH} - 1$. $N_{symb,all}^{PUSCH}$ is a quantity of first symbols in one transmission occasion.

$\alpha$ is a parameter for adjusting an upper limit of a quantity of coded modulation symbols of the first UCI.

$l_0$ may be a symbol index of the $1^{st}$ symbol that does not carry a DMRS after the $1^{st}$ symbol that carries a DMRS in first symbols in one time unit.

$O_{CSI-1}$ is a quantity of bits for the CSI part 1.

$L_{CSI-1}$ is a quantity of CRC bits for the CSI part 1. $Q'_{ACK/CG-UCI}$ is a quantity of coded modulation symbols of a HARQ-ACK or CG-UCI carried on the first channel.

$O_{CSI-2}$ is a quantity of bits for the CSI part 2.

$L_{CSI-2}$ is a quantity of CRC bits for the CSI part 2. $Q'_{CSI-1}$ is a quantity of coded modulation symbols of the CSI part 1 carried on the first channel. $O_{CG-UCI}$ is a quantity of CG-UCI bits.

$L_{CG-UCI}$ is a quantity of CRC bits for the CG-UCI.

In embodiments of this application, unless otherwise specified, a quantity of nouns represents "a singular noun or a plural noun", that is, "one or more". "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists. The character "/" usually indicates an "or" relationship between the associated objects. For example, A/B indicates A or B. "At least one of the following items (pieces)" or a similar expression thereof refers to any combination of these items (pieces), including a single item (piece) or any combination of a plurality of items (pieces).

In addition, it should be understood that in the descriptions of this application, words such as "first" and "second" are merely used for distinguishing, and should not be understood as an indication or implication of relative importance or an indication or implication of a sequence.

In addition, in embodiments of this application, "greater than" and "greater than or equal to" are interchangeable with each other, and "less than or equal to" and "less than" are interchangeable with each other.

The following describes, with reference to the accompanying drawings, a communication system to which embodiments of this application are applied.

FIG. 1C shows a structure of a mobile communication system to which a method according to an embodiment of this application is applicable. As shown in FIG. 1C, the system includes a network device and a terminal device (for example, a terminal device a and a terminal device b shown in FIG. 1C).

The network device is an entity that can receive and transmit radio signals on a network side, and is responsible for providing a radio access-related service for a terminal device in a coverage area of the network device, and implementing a physical layer function, resource scheduling and radio resource management, quality of service (Quality of Service, QoS) management, radio access control, and a mobility management function.

The terminal device is an entity that can receive and transmit radio signals on a user side, and accesses a network via the network device. The terminal device may include various devices that provide voice and/or data connectivity for a user. For example, as shown in FIG. 1C, the terminal device may be an in-vehicle device, a smartphone, or the like.

The terminal device has a multi-transmission capability, and can transmit a signal through a plurality of transmit channels. Certainly, the terminal device may also have a multi-receiving capability, that is, can receive a signal through a plurality of receive channels.

The network device may also have a multi-transmission capability and/or a multi-receiving capability. When the terminal device and the network device both have a multi-transmission capability and a multi-receiving capability, the system may also be referred to as a MIMO system. In addition, the terminal device may establish a connection to one network device to form a singleconnectivity communication system, or may establish connections to two network devices to form a dual-connectivity (dual connectivity, DC) communication system.

It should be further noted that the mobile communication system shown in FIG. 1C is used as an example, and does not constitute any limitation on a communication system to which a method provided in embodiments of this application is applicable. In conclusion, the method and the apparatus provided in embodiments of this application are applicable to communication systems and application scenarios in which various terminal devices support a multiple-transmission capability. To be specific, embodiments of this application may be further applied to communication systems of various types and standards, for example, a 5th generation (The 5th Generation, 5G) communication system, a long term evolution (Long Term Evolution, LTE) communication system, NR, wireless fidelity (wireless fidelity, Wi-Fi), vehicle to everything (vehicle to everything, V2X), long term evolution-vehicle (LTE-vehicle, LTE-V), vehicle to vehicle (vehicle to vehicle, V2V), internet of vehicles, machine type communication (Machine Type Communications, MTC), internet of things (internet of things, IoT), long term evolutionmachine to machine (LTE-machine to machine, LTE-M), machine to machine (machine to machine, M2M), wireless communication related to the 3rd generation partnership project (3rd generation partnership project, 3GPP), or other wireless communication that may occur in the future. This is not limited in embodiments of this application.

In the foregoing wireless communication system, the terminal device may communicate with the network device through a channel that occupies a plurality of time units. An example of the channel that occupies the plurality of time units is a TBoMS. The following describes the TBoMS.

In the TBoMS technology, smaller data packets in slots may be aggregated into one larger data packet, and transmission of the larger data packet is completed over a plurality of slots. Smallpacket aggregation can reduce packet header overheads. Reducing a quantity of times of transport block (transport block, TB) splitting can reduce cyclic redundancy code overheads. Increasing a transport block size (transport block size, TBS) can improve a coding gain. Reducing a quantity of physical resource blocks (physical resource block, PRB) can increase a power spectrum density. Finally, uplink coverage performance can be enhanced.

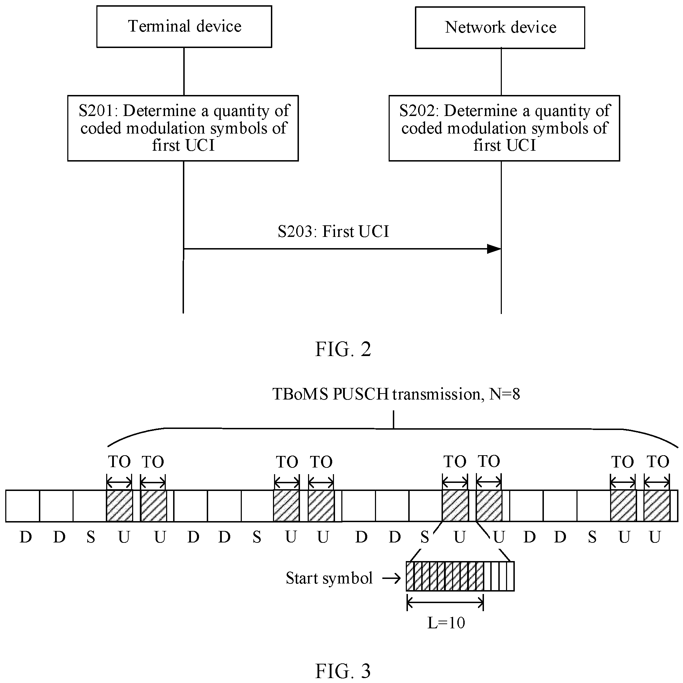

The following describes the solutions provided in this application with reference to the accompanying drawings. An embodiment of this application provides a communication method. The method may be applied to the communication system shown in FIG. 1C, and transmission of UCI is performed through a channel that occupies a plurality of time units. The following specifically describes a procedure of the method with reference to a flowchart shown in FIG. 2.

S201: A terminal device determines a quantity of coded modulation symbols of first UCI.

The quantity of coded modulation symbols of the first UCI may be determined based on first information.

The first information may include one or more parameters.

Optionally, the first information may include at least one of the following: N or K, where N is a quantity of time units occupied by a first channel, K is a scaling factor of a transport block carried on the first channel, N is an integer greater than 1, and K is an integer greater than 1. In other words, at least one of N and K may be used to determine the quantity of coded modulation symbols of the first UCI.

K may indicate that transport blocks in K time units are aggregated into one large transport block, N may indicate that the transport block aggregated based on the K time units is transmitted in the N time units, and $K \leq N$.

Optionally, the first information may further include at least one of the following: S or L, where S is a start symbol of a first symbol, L is a length of the first symbol, L is a positive integer, and the first symbol is a symbol occupied by the first channel in a time unit.

For example, for the first channel, the first information may include only one S and one L. In this case, start symbols of first symbols in all time units occupied by the first channel are symbols with a same symbol index (for example, the start symbols of the first symbols in all the time units occupied by the first channel are symbols with a symbol index 0), and lengths of the first symbols in all the time units occupied by the first channel are the same (for example, the lengths of the first symbols in all the time units occupied by the first channel are 10 symbols).

For another example, for the first channel, the first information may include one L and a plurality of Ss. In this case, lengths of first symbols in all time units occupied by the first channel are the same (for example, the lengths of the first symbols in all the time units occupied by the first channel are 10 symbols), start symbols of first symbols in different time units occupied by the first channel may be different, and each of the plurality of Ss may indicate a start symbol of a first symbol in one time unit.

For another example, for the first channel, the first information may include one S and a plurality of Ls. In this case, start symbols of first symbols in all time units occupied by the first channel are symbols with a same symbol index (for example, the start symbols of the first symbols in all the time units occupied by the first channel are symbols with a symbol index 0), lengths of first symbols in different time units occupied by the first channel may be different, and each of the plurality of Ls may indicate a length of a first symbol in one time unit.

For another example, for the first channel, the first information may include a plurality of combinations. Each combination includes one S and one L, and each combination may indicate a start symbol and a length of a first symbol in one time unit occupied by the first channel.

For another example, for a special slot occupied by the first channel, the first information may include a first combination, and the first combination includes one S and one L; and for an uplink slot occupied by the first channel, the first information may include a second combination, and the second combination may include one S and one L. S in the first combination and S in the second combination may be the same, or may be different. L in the first combination and L in the second combination may be the same, or may be different.

In some possible manners, the first information or indication information of the first information may be sent by a network device to the terminal device. For example, the first information or the indication information of the first information may be included in RRC signaling sent by the network device to the terminal device, or the first information or the indication information of the first information may be included in DCI sent by the network device to the terminal device.

Optionally, when the first information includes S and L, the indication information of the first information may be a start and length indicator value (start and length indicator value, SLIV). The SLIV may be included in a PUSCH allocation list (puschAllocationList) in the RRC signaling. For example, the PUSCH allocation list includes at least one of the following fields: startSymbol and Length, where startSymbol indicates a start symbol S of a first symbol, and Length indicates a length L of the first symbol.

Optionally, when the first information includes N, the indication information of the first information may be a field slotNum in the PUSCH allocation list, that is, slotNum indicates the quantity N of time units occupied by the first channel.

Optionally, the PUSCH allocation list may further include a field indicating the scaling factor K of the transport block carried on the first channel.

In some other possible manners, the first information may be determined by the terminal device based on an indication of the network device. For example, when K = N, the network device may send only one of N and K to the terminal device. In this case, when the terminal device receives only one of N and K from the network device, the terminal device may determine that K = N, and may determine the other of N and K based on one of N and K.

In this embodiment of this application, the terminal device may determine the quantity of coded modulation symbols of the first UCI based on a quantity of first symbols in one transmission occasion. A manner of determining the quantity of first symbols in one transmission occasion may be but is not limited to the following manners.

Manner 1

The quantity of first symbols in one transmission occasion is determined based on L.

For example, when the terminal device sends the first UCI on at least one of N transmission occasions, the first UCI and the first transport block are carried on the first channel, and each of the N transmission occasions may include one time unit or a first symbol in one time unit, the quantity of first symbols in one transmission occasion may be a quantity of first symbols in one time unit, that is, $N_{symb,all}^{PUSCH} = L$. Both the first transport block and the first UCI are carried on the first channel.

Optionally, the time unit may be a physical slot or an available slot. Before determining the quantity of first symbols in one transmission occasion, the terminal device may determine the $k^{th}$ transmission occasion based on the following information: a slot index $n_{s,f}^{\mu}$ of the $k^{th}$ slot for sending the first transport block, a system frame number (system frame number, SFN) of the $k^{th}$ slot, S, and L. The $k^{th}$ transmission occasion includes L consecutive symbols starting from S in the $k^{th}$ slot for sending the first transport block, where k is greater than or equal to 1 and less than or equal to N.

For example, as shown in FIG. 3, when N = 8, S = 0, and L = 10, each transmission occasion includes first 10 symbols of one uplink slot. In this case, $N_{symb,all}^{PUSCH} = 10$.

Manner 2

The quantity of first symbols in one transmission occasion is determined based on L and N.

For example, when the terminal device sends the first UCI on one transmission occasion, the first UCI and the first transport block are carried on the first channel, and the transmission occasion includes N time units or first symbols in N time units, the quantity of first symbols in one transmission occasion is a sum of quantities of first symbols in the N time units, that is, $N_{symb,all}^{PUSCH} = N \times L$. Both the first transport block and the first UCI are carried on the first channel.

In this case, the terminal device sends the first UCI on one transmission occasion.

Optionally, the time unit may be a physical slot or an available slot. Before determining the quantity of first symbols in one transmission occasion, the terminal device may determine the transmission occasion based on the following information: slot indices $n_{s,f}^{\mu}$ of N slots for sending the first transport block, SFNs of the N slots, S, and L. In other words, the transmission occasion includes a set of L consecutive symbols starting from S in each of the N slots for sending the first transport block.

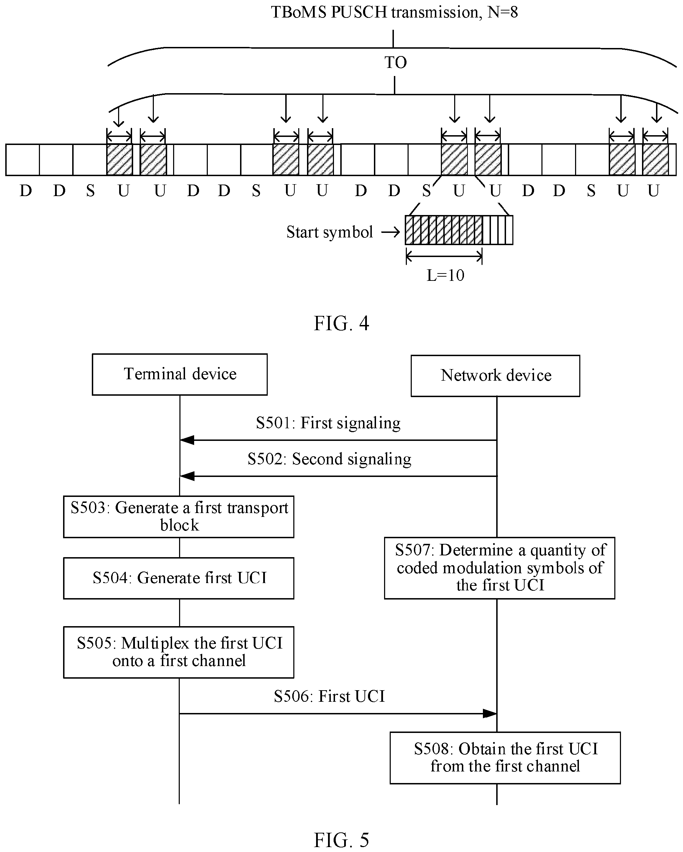

For example, as shown in FIG. 4, when N = 8, S = 0, and L = 10, one transmission occasion includes first 10 symbols in each of eight uplink slots. In this case, $N_{symb,all}^{PUSCH} = 80$.

One transmission occasion in Manner 2 may be a union set of N transmission occasions in Manner 1.

Optionally, in Manner 1 and Manner 2, the quantity of first symbols in one transmission occasion may be determined by the terminal device, or may be determined by another device (for example, the network device). When the another device determines the quantity of first symbols in one transmission occasion, the terminal device may receive the quantity of first symbols in one transmission occasion from the another device.

For a manner in which the terminal device determines the quantity of coded modulation symbols of the first UCI based on the quantity of first symbols in one transmission occasion, refer to Implementation 1, Implementation 2, and Implementation 3 below.

Currently, a transmission occasion of a channel that occupies a plurality of time units is unclear. Consequently, the quantity of first symbols in one transmission occasion is unclear. According to the method, the terminal device may determine the transmission occasion of the first channel, so that the terminal device can accurately determine the quantity of coded modulation symbols of the first UCI based on the quantity of first symbols in one transmission occasion, and then may transmit the first UCI through the first channel that occupies more than one time unit.

In this embodiment of this application, when the terminal device sends the first UCI on one transmission occasion, the first UCI and the first transport block are carried on the first channel, and one transmission occasion includes the N time units or the first symbols in the N time units, the terminal device may further determine the quantity of coded modulation symbols of the first UCI based on at least one set. The following describes the at least one set.

Optionally, the at least one set includes but is not limited to at least one of the following: a first set (for example, $\Psi$), a second set (for example, $\Psi_i$), a third set (for example, $\Phi$), or a fourth set (for example, $\Phi_i$).

The first set may include sequence numbers, in a first symbol set, of the first symbols in the N time units in the transmission occasion.

The second set may include a sequence number, in the first symbol set, of a first symbol in the $i^{th}$ time unit in the transmission occasion.

The third set may include sequence numbers, in a second symbol set, of second symbols in the N time units in the transmission occasion.

The fourth set may include a sequence number, in the second symbol set, of a second symbol in the $i^{th}$ time unit in the transmission occasion.

i is a positive integer, and i is greater than or equal to 1 and less than or equal to N.

The first symbol set may include the first symbols in the N time units in the transmission occasion. The second symbol set may include the second symbols in the N time units in the transmission occasion.

Optionally, the at least one set may be determined based on at least one of the quantity N of time units occupied by the first channel, a start symbol S of the first symbols, and a length L of the first symbols.

Optionally, the $i^{th}$ time unit may be a time unit in which the first channel overlaps a PUCCH carrying the first UCI.

The time unit in which the first channel overlaps the PUCCH carrying the first UCI may be at least one time unit. For example, the time unit in which the first channel overlaps the physical uplink control channel PUCCH carrying the first UCI is the $2^{nd}$ time unit in the N time units. For another example, the time unit in which the first channel overlaps the physical uplink control channel PUCCH carrying the first UCI is the $2^{nd}$ to the $4^{th}$ time units in the N time units.

The at least one set may be related to the first symbol set and the second symbol set. Therefore, the at least one set may be determined based on the first symbol set and the second symbol set. For ease of understanding of this embodiment of this application, the following describes the first symbol set and the second symbol set.

The first symbol set and the second symbol set may be determined based on N, S, and L.

For example, N=4, S is the $1^{st}$ symbol in each slot, and L=10. In other words, the first channel occupies four slots (for example, a slot 1, a slot 2, a slot 3, and a slot 4), the first symbols are 10 consecutive symbols (that is, symbols whose symbol indices are 0 to 9) starting from the $1^{st}$ symbol in each slot, and the slot 2 is a slot in which the first channel overlaps the PUCCH carrying the first UCI. The $1^{st}$ symbol that does not carry a DMRS after the $1^{st}$ symbol that carries a DMRS in each slot is a symbol whose symbol index is 4.

In this case, the first symbol set may include first 10 symbols in each of the four slots. Sequence numbers of the symbols in the first symbol set may be 0, 1, and $N_{symb,all}^{PUSCH} - 1$, and $N_{symb,all}^{PUSCH} = 40$. Symbols whose sequence numbers are 0 to 9 are symbols whose symbol indices are 0 to 9 in the slot 1, symbols whose sequence numbers are 10 to 19 are symbols whose symbol indices are 0 to 9 in the slot 2, symbols whose sequence numbers are 20 to 29 are symbols whose symbol indices are 0 to 9 in the slot 3, and symbols whose sequence numbers are 30 to 39 are symbols whose symbol indices are 0 to 9 in the slot 4. In this way, the terminal device may determine the first set and/or the second set based on the first symbol set.

The second symbol set may include symbols whose symbol indices are 4 to 9 in each of the four slots. Sequence numbers of the symbols in the second symbol set may be 0, 1, ..., and 23. Symbols whose sequence numbers are 0 to 5 are symbols whose symbol indices are 4 to 9 in the slot 1, symbols whose sequence numbers are 6 to 11 are symbols whose symbol indices are 4 to 9 in the slot 2, symbols whose sequence numbers are 12 to 17 are symbols whose symbol indices are 4 to 9 in the slot 3, and symbols whose sequence numbers are 18 to 23 are symbols whose symbol indices are 4 to 9 in the slot 4. In this way, the terminal device may determine the third set and/or the fourth set based on the second symbol set.

For example, when the time unit is a physical slot or an available slot, the first set may be $\Psi = \{\Psi_n | n = 1, ..., N\} = \{0, 1, 2, ..., N_{symb,all}^{PUSCH} - 1\}$, and $n = 1, 2, ..., N$.

$\Psi_n = \{(n - 1) \cdot L, (n - 1) \cdot L + 1, ..., (n - 1) \cdot L + L - 1\}$, where $n = 1, ..., N$.

The second set may be $\Psi_i = \{(i - 1) \cdot L, (i - 1) \cdot L + 1, ..., (i - 1) \cdot L + L - 1\}$.

The third set may be $\Phi = \{\Phi_n | n = 1, 2, \ldots, N\}$.

$\Phi_n = \{(n-1) \bullet L + l_0, (n-1) \bullet L + l_0 + 1, \ldots, (n-1) \bullet L + L - 1\}$, where $n = 1, 2, \ldots, N$. $l_0$ is a symbol index of the 1st OFDM symbol that does not carry a DMRS after the 1st DMRS symbol in one slot occupied by the first channel.

The fourth set may be $\Phi_i = \{(i-1) \bullet L + l_0, (i-1) \bullet L + l_0 + 1, \ldots, (i-1) \bullet L + L - 1\}$. Optionally, when the first UCI includes a HARQ-ACK and/or CG-UCI, the at least one set includes at least one of the first set, the second set, the third set, or the fourth set.

For example, the at least one set includes the second set and the fourth set, and the terminal device may determine the quantity of coded modulation symbols of the first UCI based on the second set and the fourth set. For example, the terminal device may determine the quantity of coded modulation symbols of the first UCI based on

$$\sum_{l \in \Psi_i} M_{sc}^{UCI}(l) \text{ and } \sum_{l \in \Phi_i} M_{sc}^{UCI}(l) .$$

For another example, the at least one set includes the first set and the third set, and the terminal device may determine the quantity of coded modulation symbols of the first UCI based on the first set, the third set, and N. For example, the terminal device may determine the quantity of coded modulation symbols of the first UCI based on

$$\frac{1}{N} \cdot \sum_{l \in \Psi} M_{sc}^{UCI}(l) \text{ and } \frac{1}{N} \cdot \sum_{l \in \Phi} M_{sc}^{UCI}(l) .$$

For another example, the at least one set includes the first set and the fourth set, and the terminal device may determine the quantity of coded modulation symbols of the first UCI based on the first set, the fourth set, and N. For example, the terminal device may determine the quantity of coded modulation symbols of the first UCI based on

$$\frac{1}{N} \cdot \sum_{l \in \Psi} M_{sc}^{UCI}(l) \text{ and } \sum_{l \in \Phi_i} M_{sc}^{UCI}(l) .$$

For another example, the at least one set includes the second set and the third set, and the terminal device may determine the quantity of coded modulation symbols of the first UCI based on the second set, the third set, and N. For example, the terminal device may determine the quantity of coded modulation symbols of the first UCI based on

$$\sum_{l \in \Psi_i} M_{sc}^{UCI}(l) \text{ and } \frac{1}{N} \cdot \sum_{l \in \Phi} M_{sc}^{UCI}(l) .$$

For another example, the at least one set is one set, and the terminal device may determine the quantity of coded modulation symbols of the first UCI based on the at least one set, the quantity of first symbols in one transmission occasion, and N. For example, the terminal device may determine the quantity of coded modulation symbols of the first UCI based on $\sum_{l \in \Psi_i} M_{sc}^{UCI}(l)$ and

$$\sum_{l=l_0}^{N_{symb,all}^{PUSCH}/N - 1} M_{sc}^{UCI}(l).$$

For another example, the at least one set is one set, and the terminal device may determine the quantity of coded modulation symbols of the first UCI based on the at least one set and L. For example, the terminal device may determine the quantity of coded modulation symbols of the first UCI based on $\sum_{l \in \Psi_i} M_{sc}^{UCI}(l)$ and $\sum_{l=l_0}^{L-1} M_{sc}^{UCI}(l)$ .

Optionally, when the first UCI includes a CSI part 1 and/or a CSI part 2, the at least one set includes the first set and/or the second set.

For example, the at least one set includes the second set, and the terminal device may determine

the quantity of coded modulation symbols of the first UCI based on the second set. For example, the terminal device may determine the quantity of coded modulation symbols of the first UCI based on $\sum_{l \in \Psi_i} M_{sc}^{UCI}(l)$ .

For another example, the at least one set includes the first set, and the terminal device may determine the quantity of coded modulation symbols of the first UCI based on the first set and N. For example, the terminal device may determine the quantity of coded modulation symbols of the first UCI based on $\frac{1}{N} \cdot \sum_{l \in \Psi} M_{sc}^{UCI}(l)$ .

For another example, the at least one set includes the first set and the second set, and the terminal device may determine the quantity of coded modulation symbols of the first UCI based on the first set, the second set, and N. For example, the terminal device may determine the quantity of coded modulation symbols of the first UCI based on

$$\frac{1}{N} \cdot \sum_{l \in \Psi} M_{sc}^{UCI}(l) \text{ and } \sum_{l \in \Psi_i} M_{sc}^{UCI}(l) .$$

It should be understood that in this application, any two of $\sum_{l\in\Psi_i} M_{sc}^{UCI}(l)$, $\frac{1}{N}\cdot\sum_{l\in\Psi} M_{sc}^{UCI}(l)$, $\sum_{l=0}^{N_{symb,all}^{PUSCH}/N-1} M_{sc}^{UCI}(l)$, $\sum_{l=0}^{L-1} M_{sc}^{UCI}(l)$, $\sum_{l=i\cdot N}^{N_{symb,all}^{PUSCH}/N+i\cdot N-1} M_{sc}^{UCI}(l)$, and $\sum_{l=i\cdot N}^{L+i\cdot N-1} M_{sc}^{UCI}(l)$ are interchangeable with each other; and any two of $\sum_{l\in\Phi_i} M_{sc}^{UCI}(l)$, $\frac{1}{N}\cdot\sum_{l\in\Phi} M_{sc}^{UCI}(l)$, $\sum_{l=l_0}^{N_{symb,all}^{PUSCH}/N-1} M_{sc}^{UCI}(l)$, $\sum_{l=l_0}^{L-1} M_{sc}^{UCI}(l)$, $\sum_{l=l_0+i\cdot N}^{N_{symb,all}^{PUSCH}/N+i\cdot N-1} M_{sc}^{UCI}(l)$ and $\sum_{l=l_0+i\cdot N}^{L+i\cdot N-1} M_{sc}^{UCI}(l)$ are interchangeable with each other.

For a manner in which the terminal device determines the quantity of coded modulation symbols of the first UCI based on the at least one set, refer to Implementation 1 and Implementation 2 below.

In this embodiment of this application, the terminal device may determine the quantity of coded modulation symbols of the first UCI in the following implementations, but this is not limited. Implementation 1: The terminal device may determine the quantity of coded modulation symbols of the first UCI based on second information.

The second information may include one or more parameters. For example, the second information may include at least one of the following: a code rate compensation factor of the first UCI, and a parameter for adjusting an upper limit of the quantity of coded modulation symbols of the first UCI. The second information may be determined based on N and/or K in the first information.

In Implementation 1, the terminal device may determine the quantity of coded modulation symbols of the first UCI based on the second information in the following implementations, but this is not limited.

Implementation 1

When the terminal device sends the first UCI on at least one of the N transmission occasions, the first UCI and the first transport block are carried on the first channel, and each of the N transmission occasions may include one time unit or a first symbol in one time unit, the terminal device may select, from Table 1 based on a type of the first UCI, a formula for calculating a quantity of coded modulation symbols of UCI, and determine the quantity of coded modulation symbols of the first UCI. The second information may be the code rate compensation factor of the first UCI. For a relationship between the code rate compensation factor of the first UCI and K, refer to Table 2. $\alpha$ may be a scaling ratio (scaling) configured by a higher layer, and $N_{symb,all}^{PUSCH} = L$.

**Table 1**

| UCI type | Quantity of coded modulation symbols of UCI |
|---|---|
| HARQ-ACK | $Q'_{ACK} = min\left\{ \left\lceil \dfrac{(O_{ACK}+L_{ACK})\beta_{offset}^{PUSCH}\cdot\sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha\cdot\sum_{l=l_0}^{N_{symb,all}^{PUSCH}-1} M_{sc}^{UCI}(l) \right\rceil \right\}$ |
| CSI part 1 | $Q'_{CSI-1} = min\left\{ \left\lceil \dfrac{(O_{CSI-1}+L_{CSI-1})\beta_{offset}^{PUSCH}\cdot\sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha\cdot\sum_{l=0}^{N_{symb,all}^{PUSCH}-1} M_{sc}^{UCI}(l) \right\rceil - Q'_{ACK/CG-UCI} \right\}$ |

(continued)

| UCI type | Quantity of coded modulation symbols of UCI |
|---|---|
| CSI part 2 | $$Q'_{CSI-2} = min\left\{ \left\lceil \frac{(O_{CSI-2} + L_{CSI-2})\beta^{PUSCH}_{offset} \cdot \sum_{l=0}^{N^{PUSCH}_{symb,all}-1} M^{UCI}_{sc}(l)}{\sum_{r=0}^{C_{UL-SCH}-1} K_r} \right\rceil, \left\lceil \alpha \cdot \sum_{l=0}^{N^{PUSCH}_{symb,all}-1} M^{UCI}_{sc}(l) \right\rceil - Q'_{ACK/CG-UCI} - Q'_{CSI-1} \right\}$$ |
| CG-UCI | $$Q'_{CG-UCI} = min\left\{ \left\lceil \frac{(O_{CG-UCI} + L_{CG-UCI})\beta^{PUSCH}_{offset} \cdot \sum_{l=0}^{N^{PUSCH}_{symb,all}-1} M^{UCI}_{sc}(l)}{\sum_{r=0}^{C_{UL-SCH}-1} K_r} \right\rceil, \left\lceil \alpha \cdot \sum_{l=l_0}^{N^{PUSCH}_{symb,all}-1} M^{UCI}_{sc}(l) \right\rceil \right\}$$ |
| HARQ-ACK and CG-UCI | $$Q'_{ACK} = min\left\{ \left\lceil \frac{(O_{ACK} + O_{CG-UCI} + L_{ACK})\beta^{PUSCH}_{offset} \cdot \sum_{l=0}^{N^{PUSCH}_{symb,all}-1} M^{UCI}_{sc}(l)}{\sum_{r=0}^{C_{UL-SCH}-1} K_r} \right\rceil, \left\lceil \alpha \cdot \sum_{l=l_0}^{N^{PUSCH}_{symb,all}-1} M^{UCI}_{sc}(l) \right\rceil \right\}$$ |

**Table 2**

| UCI type | $\beta^{PUSCH}_{offset}$ |
|---|---|
| HARQ-ACK | $\beta^{PUSCH}_{offset} = \beta^{HARQ-ACK}_{offset} \times K$ |
| CSI part 1 | $\beta^{PUSCH}_{offset} = \beta^{CSI-part1}_{offset} \times K$ |
| CSI part 2 | $\beta^{PUSCH}_{offset} = \beta^{CSI-part2}_{offset} \times K$ |
| CG-UCI | $\beta^{PUSCH}_{offset} = \beta^{CG-UCI}_{offset} \times K$ |
| HARQ-ACK and CG-UCI | $\beta^{PUSCH}_{offset} = \beta^{HARQ-ACK}_{offset} \times K$ |

Implementation 2

When the terminal device sends the first UCI on one transmission occasion, the first UCI and the first transport block are carried on the first channel, and one transmission occasion includes the N time units or the first symbols in the N time units, the terminal device may determine the quantity of coded modulation symbols of the first UCI based on a first resource quantity and the second information. The first resource quantity may be a resource quantity of a first symbol in one time unit and/or a resource quantity of a second symbol in one time unit. In other words, the terminal device may determine the quantity of coded modulation symbols of the first UCI based on a resource in one time unit.

Optionally, the first resource quantity may be determined based on the at least one set.

For example, the resource quantity of the first symbol in one time unit may be determined based on the first set (for example, the resource quantity of the first symbol in one time unit is $\frac{1}{N} \cdot \sum_{l \in \Psi} M_{sc}^{UCI}(l))$, or may be determined based on the second set (for example, the resource quantity of the first symbol in one time unit is $\sum_{l \in \Psi_i} M_{sc}^{UCI}(l))$.

For another example, the resource quantity of the second symbol in one time unit may be determined based on the third set (for example, the resource quantity of the second symbol in one time unit is $\frac{1}{N} \cdot \sum_{l \in \Phi} M_{sc}^{UCI}(l))$, or may be determined based on the fourth set (for example, the resource quantity of the second symbol in one time unit is $\sum_{l \in \Phi_i} M_{sc}^{UCI}(l))$.

Optionally, the first resource quantity may alternatively be determined based on L.

For example, the resource quantity of the first symbol in one time unit may be $\sum_{l=0}^{L-1} M_{sc}^{UCI}(l)$ or $\sum_{l=i \cdot N}^{L+i \cdot N-1} M_{sc}^{UCI}(l)$.

For another example, the resource quantity of the second symbol in one time unit may be $\sum_{l=l_0}^{L-1} M_{sc}^{UCI}(l)$ or $\sum_{l=l_0+i \cdot N}^{L+i \cdot N-1} M_{sc}^{UCI}(l)$.

Optionally, the first resource quantity may alternatively be determined based on the quantity of first symbols in one transmission occasion and N.

For example, the resource quantity of the first symbol in one time unit may be PUSCH PUSCH $\sum_{l=0}^{N_{symb,all}^{PUSCH}/N-1} M_{sc}^{UCI}(l)$ or $\sum_{l=i \cdot N}^{N_{symb,all}^{PUSCH}/N+i \cdot N-1} M_{sc}^{UCI}(l)$.

For another example, the resource quantity of the second symbol in one time unit may be $\sum_{l=l_0}^{N_{symb,all}^{PUSCH}/N-1} M_{sc}^{UCI}(l)$ or $\sum_{l=l_0+i \cdot N}^{N_{symb,all}^{PUSCH}/N+i \cdot N-1} M_{sc}^{UCI}(l)$.

Optionally, the first resource quantity may alternatively be a resource quantity in the $i^{th}$ time unit, that is, a resource quantity of a first symbol in the $i^{th}$ time unit and/or a resource quantity of a second symbol in the $i^{th}$ time unit. The $i^{th}$ time unit is a time unit in which the first channel overlaps the physical uplink control channel PUCCH carrying the first UCI.

It should be understood that when the terminal device sends the first UCI on one transmission occasion, $N_{symb,all}^{PUSCH}/N$ and L are interchangeable with each other in the formula for calculating a quantity of coded modulation symbols of UCI in this application.

In Implementation 2, the terminal device may determine the quantity of coded modulation symbols of the first UCI in at least one of the following manners, but this is not limited.

Manner 1: When the terminal device sends the first UCI on one transmission occasion, the first UCI and the first transport block are carried on the first channel, the transmission occasion includes the N time units or the first symbols in the N time units, and the second information may be the code rate compensation factor of the first UCI, the terminal device may select, from Table 3 based on a type of the first UCI, a formula for calculating a quantity of coded modulation symbols of UCI, and determine the quantity of coded modulation symbols of the first UCI. A relationship between the code rate compensation factor of the first UCI and K may be shown in Table 2, $\alpha$ may be scaling configured by a higher layer, and $N_{symb,all}^{PUSCH} = N \times L$.

**Table 3**

| UCI type | Quantity of coded modulation symbols of UCI |
|---|---|
| HARQ-ACK | $$Q'_{ACK} = min\left\{\left\lceil\frac{(O_{ACK} + L_{ACK})\beta_{offset}^{PUSCH} \cdot \sum_{l=0}^{N_{symb,all}^{PUSCH}/N-1} M_{sc}^{UCI}(l)}{\sum_{r=0}^{C_{UL-SCH}-1} K_r}\right\rceil, \left\lceil\alpha \cdot \sum_{l=l_0}^{N_{symb,all}^{PUSCH}/N-1} M_{sc}^{UCI}(l)\right\rceil\right\}$$ |
| | $$Q'_{ACK} = min\left\{\left\lceil\frac{(O_{ACK} + L_{ACK})\beta_{offset}^{PUSCH} \cdot \sum_{l=0}^{L-1} M_{sc}^{UCI}(l)}{\sum_{r=0}^{C_{UL-SCH}-1} K_r}\right\rceil, \left\lceil\alpha \cdot \sum_{l=l_0}^{L-1} M_{sc}^{UCI}(l)\right\rceil\right\}$$ |
| | $$Q'_{ACK} = min\left\{\left\lceil\frac{(O_{ACK} + L_{ACK})\beta_{offset}^{PUSCH} \cdot \sum_{l=i\cdot N}^{N_{symb,all}^{PUSCH}/N+i\cdot N-1} M_{sc}^{UCI}(l)}{\sum_{r=0}^{C_{UL-SCH}-1} K_r}\right\rceil, \left\lceil\alpha \cdot \sum_{l=l_0+i\cdot N}^{N_{symb,all}^{PUSCH}/N+i\cdot N-1} M_{sc}^{UCI}(l)\right\rceil\right\}$$ |
| | $$Q'_{ACK} = min\left\{\left\lceil\frac{(O_{ACK} + L_{ACK})\beta_{offset}^{PUSCH} \cdot \sum_{l=i\cdot N}^{L+i\cdot N-1} M_{sc}^{UCI}(l)}{\sum_{r=0}^{C_{UL-SCH}-1} K_r}\right\rceil, \left\lceil\alpha \cdot \sum_{l=l_0+i\cdot N}^{L+i\cdot N-1} M_{sc}^{UCI}(l)\right\rceil\right\}$$ |
| | $$'_{ACK} = min\left\{\left\lceil\frac{(O_{ACK} + L_{ACK})\beta_{offset}^{PUSCH} \cdot \frac{1}{N} \cdot \sum_{l\in\Psi} M_{sc}^{UCI}(l)}{\sum_{r=0}^{C_{UL-SCH}-1} K_r}\right\rceil, \left\lceil\alpha \cdot \frac{1}{N} \cdot \sum_{l\in\Phi} M_{sc}^{UCI}(l)\right\rceil\right\}$$ |
| | $$Q'_{ACK} = min\left\{\left\lceil\frac{(O_{ACK} + L_{ACK})\beta_{offset}^{PUSCH} \cdot \sum_{l\in\Psi_i} M_{sc}^{UCI}(l)}{\sum_{r=0}^{C_{UL-SCH}-1} K_r}\right\rceil, \left\lceil\alpha \cdot \sum_{l\in\Phi_i} M_{sc}^{UCI}(l)\right\rceil\right\}$$ |
| CSI part 1 | $$Q'_{CSI-1} = min\left\{\left\lceil\frac{(O_{CSI-1} + L_{CSI-1})\beta_{offset}^{PUSCH} \cdot \sum_{l=0}^{N_{symb,all}^{PUSCH}/N-1} M_{sc}^{UCI}(l)}{\sum_{r=0}^{C_{UL-SCH}-1} K_r}\right\rceil, \left\lceil\alpha \cdot \sum_{l=0}^{N_{symb,all}^{PUSCH}/N-1} M_{sc}^{UCI}(l)\right\rceil - Q'_{ACK/CG-UCI}\right\}$$ |
| | $$Q'_{CSI-1} = min\left\{\left\lceil\frac{(O_{CSI-1} + L_{CSI-1})\beta_{offset}^{PUSCH} \cdot \sum_{l=0}^{L-1} M_{sc}^{UCI}(l)}{\sum_{r=0}^{C_{UL-SCH}-1} K_r}\right\rceil, \left\lceil\alpha \cdot \sum_{l=0}^{L-1} M_{sc}^{UCI}(l)\right\rceil - Q'_{ACK/CG-UCI}\right\}$$ |

(continued)

| UCI type | Quantity of coded modulation symbols of UCI |
|---|---|
| | $$Q'_{CSI-1} = \min\left\{\left\lceil\frac{(O_{CSI-1}+L_{CSI-1})\beta_{offset}^{PUSCH}\cdot\sum_{l=i\cdot N}^{N_{symb,all}^{PUSCH}/N+i\cdot N-1}M_{sc}^{UCI}(l)}{\sum_{r=0}^{C_{UL-SCH}-1}K_r}\right\rceil,\left\lceil\alpha\cdot\sum_{l=i\cdot N}^{N_{symb,all}^{PUSCH}/N+i\cdot N-1}M_{sc}^{UCI}(l)\right\rceil-Q'_{ACK/CG-UCI}\right\}$$ |
| | $$Q'_{CSI-1} = \min\left\{\left\lceil\frac{(O_{CSI-1}+L_{CSI-1})\beta_{offset}^{PUSCH}\cdot\sum_{l=i\cdot N}^{L+i\cdot N-1}M_{sc}^{UCI}(l)}{\sum_{r=0}^{C_{UL-SCH}-1}K_r}\right\rceil,\left\lceil\alpha\cdot\sum_{l=i\cdot N}^{L+i\cdot N-1}M_{sc}^{UCI}(l)\right\rceil-Q'_{ACK/CG-UCI}\right\}$$ |
| | $$Q'_{CSI-1} = \min\left\{\left\lceil\frac{(O_{CSI-1}+L_{CSI-1})\beta_{offset}^{PUSCH}\cdot\frac{1}{N}\cdot\sum_{l=0}^{N_{symb,all}^{PUSCH}-1}M_{sc}^{UCI}(l)}{\sum_{r=0}^{C_{UL-SCH}-1}K_r}\right\rceil,\left\lceil\alpha\cdot\frac{1}{N}\cdot\sum_{l=0}^{N_{symb,all}^{PUSCH}-1}M_{sc}^{UCI}(l)\right\rceil-Q'_{ACK/CG-UCI}\right\}$$ |
| | $$Q'_{CSI-1} = \min\left\{\left\lceil\frac{(O_{CSI-1}+L_{CSI-1})\beta_{offset}^{PUSCH}\cdot\frac{1}{N}\cdot\sum_{l\in\Psi}M_{sc}^{UCI}(l)}{\sum_{r=0}^{C_{UL-SCH}-1}K_r}\right\rceil,\left\lceil\alpha\cdot\frac{1}{N}\cdot\sum_{l\in\Psi}M_{sc}^{UCI}(l)\right\rceil-Q'_{ACK/CG-UCI}\right\}$$ |
| | $$'_{CSI-1} = \min\left\{\left\lceil\frac{(O_{CSI-1}+L_{CSI-1})\beta_{offset}^{PUSCH}\cdot\sum_{l\in\Psi_i}M_{sc}^{UCI}(l)}{\sum_{r=0}^{C_{UL-SCH}-1}K_r}\right\rceil,\left\lceil\alpha\cdot\sum_{l\in\Psi_i}M_{sc}^{UCI}(l)\right\rceil-Q'_{ACK/CG-UCI}\right\}$$ |
| CSI part 2 | $$Q'_{CSI-2} = \min\left\{\left\lceil\frac{(O_{CSI-2}+L_{CSI-2})\beta_{offset}^{PUSCH}\cdot\sum_{l=0}^{N_{symb,all}^{PUSCH}/N-1}M_{sc}^{UCI}(l)}{\sum_{r=0}^{C_{UL-SCH}-1}K_r}\right\rceil,\left\lceil\alpha\cdot\sum_{l=0}^{N_{symb,all}^{PUSCH}/N-1}M_{sc}^{UCI}(l)\right\rceil-Q'_{ACK/CG-UCI}-Q'_{CSI-1}\right\}$$ |
| | $$Q'_{CSI-2} = \min\left\{\left\lceil\frac{(O_{CSI-2}+L_{CSI-2})\beta_{offset}^{PUSCH}\cdot\sum_{l=0}^{L-1}M_{sc}^{UCI}(l)}{\sum_{r=0}^{C_{UL-SCH}-1}K_r}\right\rceil,\left\lceil\alpha\cdot\sum_{l=0}^{L-1}M_{sc}^{UCI}(l)\right\rceil-Q'_{ACK/CG-UCI}-Q'_{CSI-1}\right\}$$ |

(continued)

| UCI type | Quantity of coded modulation symbols of UCI |
|---|---|
| | $$Q'_{CSI-2} = min \left\{ \left\lceil \frac{(O_{CSI-2} + L_{CSI-2})\beta_{offset}^{PUSCH} \cdot \sum_{l=i\cdot N}^{N_{symb,all}^{PUSCH}/N+i\cdot N-1} M_{sc}^{UCI}(l)}{\sum_{r=0}^{C_{UL-SCH}-1} K_r} \right\rceil, \left\lceil \alpha \cdot \sum_{l=i\cdot N}^{N_{symb,all}^{PUSCH}/N+i\cdot N-1} M_{sc}^{UCI}(l) \right\rceil - Q'_{ACK/CG-UCI} - Q'_{CSI-1} \right\}$$ |
| | $$Q'_{CSI-2} = min \left\{ \left\lceil \frac{(O_{CSI-2} + L_{CSI-2})\beta_{offset}^{PUSCH} \cdot \sum_{l=i\cdot N}^{L+i\cdot N-1} M_{sc}^{UCI}(l)}{\sum_{r=0}^{C_{UL-SCH}-1} K_r} \right\rceil, \left\lceil \alpha \cdot \sum_{l=i\cdot N}^{L+i\cdot N-1} M_{sc}^{UCI}(l) \right\rceil - Q'_{ACK/CG-UCI} - Q'_{CSI-1} \right\}$$ |
| | $$Q'_{CSI-2} = min \left\{ \left\lceil \frac{(O_{CSI-2} + L_{CSI-2})\beta_{offset}^{PUSCH} \cdot \frac{1}{N} \cdot \sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha \cdot \frac{1}{N} \cdot \sum_{l=0}^{N_{symb,all}^{PUSCH}-1} M_{sc}^{UCI}(l) \right\rceil - Q'_{ACK/CG-UCI} - Q'_{CSI-1} \right\}$$ |
| | $$Q'_{CSI-2} = min \left\{ \left\lceil \frac{(O_{CSI-2} + L_{CSI-2})\beta_{offset}^{PUSCH} \cdot \frac{1}{N} \cdot \sum_{l\in\Psi} M_{sc}^{UCI}(l)}{\sum_{r=0}^{C_{UL-SCH}-1} K_r} \right\rceil, \left\lceil \alpha \cdot \frac{1}{N} \cdot \sum_{l\in\Psi} M_{sc}^{UCI}(l) \right\rceil - Q'_{ACK/CG-UCI} - Q'_{CSI-1} \right\}$$ |
| | $$Q'_{CSI-2} = min \left\{ \left\lceil \frac{(O_{CSI-2} + L_{CSI-2})\beta_{offset}^{PUSCH} \cdot \sum_{l\in\Psi_i} M_{sc}^{UCI}(l)}{\sum_{r=0}^{C_{UL-SCH}-1} K_r} \right\rceil, \left\lceil \alpha \cdot \sum_{l\in\Psi_i} M_{sc}^{UCI}(l) \right\rceil - Q'_{ACK/CG-UCI} - Q'_{CSI-1} \right\}$$ |
| CG-UCI | $$Q'_{CG-UCI} = min \left\{ \left\lceil \frac{(O_{CG-UCI} + L_{CG-UCI})\beta_{offset}^{PUSCH} \cdot \sum_{l=0}^{N_{symb,all}^{PUSCH}/N-1} M_{sc}^{UCI}(l)}{\sum_{r=0}^{C_{UL-SCH}-1} K_r} \right\rceil, \left\lceil \alpha \cdot \sum_{l=l_0}^{N_{symb,all}^{PUSCH}/N-1} M_{sc}^{UCI}(l) \right\rceil \right\}$$ |
| | $$Q'_{CG-UCI} = min \left\{ \left\lceil \frac{(O_{CG-UCI} + L_{CG-UCI})\beta_{offset}^{PUSCH} \cdot \sum_{l=0}^{L-1} M_{sc}^{UCI}(l)}{\sum_{r=0}^{C_{UL-SCH}-1} K_r} \right\rceil, \left\lceil \alpha \cdot \sum_{l=l_0}^{L-1} M_{sc}^{UCI}(l) \right\rceil \right\}$$ |

(continued)

| UCI type | Quantity of coded modulation symbols of UCI |
|---|---|
| | $$Q'_{CG-UCI} = \min\left\{ \left\lceil \frac{(O_{CG-UCI} + L_{CG-UCI})\beta_{offset}^{PUSCH} \cdot \sum_{l=i\cdot N}^{N_{symb,all}^{PUSCH}/N+i\cdot N-1} M_{sc}^{UCI}(l)}{\sum_{r=0}^{C_{UL-SCH}-1} K_r} \right\rceil, \left\lceil \alpha \cdot \sum_{l=l_0+i\cdot N}^{N_{symb,all}^{PUSCH}/N+i\cdot N-1} M_{sc}^{UCI}(l) \right\rceil \right\}$$ |
| | $$Q'_{CG-UCI} = \min\left\{ \left\lceil \frac{(O_{CG-UCI} + L_{CG-UCI})\beta_{offset}^{PUSCH} \cdot \sum_{l=i\cdot N}^{L+i\cdot N-1} M_{sc}^{UCI}(l)}{\sum_{r=0}^{C_{UL-SCH}-1} K_r} \right\rceil, \left\lceil \alpha \cdot \sum_{l=l_0+i\cdot N}^{L+i\cdot N-1} M_{sc}^{UCI}(l) \right\rceil \right\}$$ |
| | $$Q'_{CG-UCI} = \min\left\{ \left\lceil \frac{(O_{CG-UCI} + L_{CG-UCI})\beta_{offset}^{PUSCH} \cdot \frac{1}{N} \cdot \sum_{l\in\Psi} M_{sc}^{UCI}(l)}{\sum_{r=0}^{C_{UL-SCH}-1} K_r} \right\rceil, \left\lceil \alpha \cdot \frac{1}{N} \cdot \sum_{l\in\Phi} M_{sc}^{UCI}(l) \right\rceil \right\}$$ |
| | $$Q'_{CG-UCI} = \min\left\{ \left\lceil \frac{(O_{CG-UCI} + L_{CG-UCI})\beta_{offset}^{PUSCH} \cdot \sum_{l\in\Psi_i} M_{sc}^{UCI}(l)}{\sum_{r=0}^{C_{UL-SCH}-1} K_r} \right\rceil, \left\lceil \alpha \cdot \sum_{l\in\Phi_i} M_{sc}^{UCI}(l) \right\rceil \right\}$$ |
| HARQ-ACK and CG-UCI | $$Q'_{ACK} = \min\left\{ \left\lceil \frac{(O_{ACK} + O_{CG-UCI} + L_{ACK})\beta_{offset}^{PUSCH} \cdot \sum_{l=0}^{N_{symb,all}^{PUSCH}/N-1} M_{sc}^{UCI}(l)}{\sum_{r=0}^{C_{UL-SCH}-1} K_r} \right\rceil, \left\lceil \alpha \cdot \sum_{l=l_0}^{N_{symb,all}^{PUSCH}/N-1} M_{sc}^{UCI}(l) \right\rceil \right\}$$ |
| | $$Q'_{ACK} = \min\left\{ \left\lceil \frac{(O_{ACK} + O_{CG-UCI} + L_{ACK})\beta_{offset}^{PUSCH} \cdot \sum_{l=0}^{L-1} M_{sc}^{UCI}(l)}{\sum_{r=0}^{C_{UL-SCH}-1} K_r} \right\rceil, \left\lceil \alpha \cdot \sum_{l=l_0}^{L-1} M_{sc}^{UCI}(l) \right\rceil \right\}$$ |
| | $$Q'_{ACK} = \min\left\{ \left\lceil \frac{(O_{ACK} + O_{CG-UCI} + L_{ACK})\beta_{offset}^{PUSCH} \cdot \sum_{l=0}^{N_{symb,all}^{PUSCH}/N+i\cdot N-1} M_{sc}^{UCI}(l)}{\sum_{r=0}^{C_{UL-SCH}-1} K_r} \right\rceil, \left\lceil \alpha \cdot \sum_{l=l_0+i\cdot N}^{N_{symb,all}^{PUSCH}/N+i\cdot N-1} M_{sc}^{UCI}(l) \right\rceil \right\}$$ |

(continued)

| UCI type | Quantity of coded modulation symbols of UCI |
|---|---|
| | $$Q'_{ACK} = min \left\{ \left\lceil \frac{(O_{ACK} + O_{CG-UCI} + L_{ACK})\beta_{offset}^{PUSCH} \cdot \sum_{l=0}^{L+i\cdot N-1} M_{sc}^{UCI}(l)}{\sum_{r=0}^{C_{UL-SCH}-1} K_r} \right\rceil, \left\lceil \alpha \cdot \sum_{l=l_0+i\cdot N}^{L+i\cdot N-1} M_{sc}^{UCI}(l) \right\rceil \right\}$$ |
| | $$Q'_{ACK} = min \left\{ \left\lceil \frac{(O_{ACK} + O_{CG-UCI} + L_{ACK})\beta_{offset}^{PUSCH} \cdot \frac{1}{N} \cdot \sum_{l\in\Psi} M_{sc}^{UCI}(l)}{\sum_{r=0}^{C_{UL-SCH}-1} K_r} \right\rceil, \left\lceil \alpha \cdot \frac{1}{N} \cdot \sum_{l\in\Phi} M_{sc}^{UCI}(l) \right\rceil \right\}$$ |
| | $$Q'_{ACK} = min \left\{ \left\lceil \frac{(O_{ACK} + O_{CG-UCI} + L_{ACK})\beta_{offset}^{PUSCH} \cdot \sum_{l\in\Psi_i} M_{sc}^{UCI}(l)}{\sum_{r=0}^{C_{UL-SCH}-1} K_r} \right\rceil, \left\lceil \alpha \cdot \sum_{l\in\Phi_i} M_{sc}^{UCI}(l) \right\rceil \right\}$$ |

Optionally, when N is equal to K, K and N in Table 2 and Table 3 are interchangeable with each other.

Manner 2

When the terminal device sends the first UCI on one transmission occasion, the first UCI and the first transport block are carried on the first channel, the transmission occasion includes the N time units or the first symbols in the N time units, N is equal to K, and the second information is the parameter for adjusting the upper limit of the quantity of coded modulation symbols of the first UCI, the terminal device may select, from Table 4 based on a type of the first UCI, a formula for calculating a quantity of coded modulation symbols of UCI, and determine the quantity of coded modulation symbols of the first UCI. The parameter for adjusting the upper limit of the quantity of coded modulation symbols of the first UCI may be higher-layer configured scaling divided by N. For the code rate compensation factor of the first UCI, refer to Table 5.  $N_{symb,all}^{PUSCH} = N \times L$ .

**Table 4**

| UCI type | Quantity of coded modulation symbols of UCI |
|---|---|
| HARQ-ACK | $$Q'_{ACK} = min \left\{ \left\lceil \frac{(O_{ACK} + L_{ACK})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha \cdot \sum_{l\in\Phi} M_{sc}^{UCI}(l) \right\rceil \right\}$$ |

(continued)

| UCI type | Quantity of coded modulation symbols of UCI |
|---|---|
| CSI part 1 | $$Q'_{CSI-1} = min\left\{\left\lceil\frac{(O_{CSI-1} + L_{CSI-1})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r}\right\rceil, \left\lceil\alpha \cdot \sum_{l=0}^{N_{symb,all}^{PUSCH}-1} M_{sc}^{UCI}(l)\right\rceil - Q'_{ACK/CG-UCI}\right\}$$ |
| | $$Q'_{CSI-1} = min\left\{\left\lceil\frac{(O_{CSI-1} + L_{CSI-1})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r}\right\rceil, \left\lceil\alpha \cdot \sum_{l\in\Psi} M_{sc}^{UCI}(l)\right\rceil - Q'_{ACK/CG-UCI}\right\}$$ |
| CSI part 2 | $$Q'_{CSI-2} = min\left\{\left\lceil\frac{(O_{CSI-2} + L_{CSI-2})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r}\right\rceil, \left\lceil\alpha \cdot \sum_{l=0}^{N_{symb,all}^{PUSCH}-1} M_{sc}^{UCI}(l)\right\rceil - Q'_{ACK/CG-UCI} - Q'_{CSI-1}\right\}$$ |
| | $$Q'_{CSI-2} = min\left\{\left\lceil\frac{(O_{CSI-2} + L_{CSI-2})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r}\right\rceil, \left\lceil\alpha \cdot \sum_{l\in\Psi} M_{sc}^{UCI}(l)\right\rceil - Q'_{ACK/CG-UCI} - Q'_{CSI-1}\right\}$$ |
| CG-UCI | $$Q'_{CG-UCI} = min\left\{\left\lceil\frac{(O_{CG-UCI} + L_{CG-UCI})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r}\right\rceil, \left\lceil\alpha \cdot \sum_{l\in\Phi} M_{sc}^{UCI}(l)\right\rceil\right\}$$ |
| HARQ-ACK and CG-UCI | $$Q'_{ACK} = min\left\{\left\lceil\frac{(O_{ACK} + O_{CG-UCI} + L_{ACK})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r}\right\rceil, \left\lceil\alpha \cdot \sum_{l\in\Phi} M_{sc}^{UCI}(l)\right\rceil\right\}$$ |

**Table 5**

| UCI type | Definition of $\beta_{offset}^{PUSCH}$ |
|---|---|
| HARQ-ACK | $\beta_{offset}^{PUSCH} = \beta_{offset}^{HARQ-ACK}$ |

(continued)

| CSI part 1 | $\beta_{offset}^{PUSCH} = \beta_{offset}^{CSI-part1}$ |
| CSI part 2 | $\beta_{offset}^{PUSCH} = \beta_{offset}^{CSI-part2}$ |
| CG-UCI | $\beta_{offset}^{PUSCH} = \beta_{offset}^{CG-UCI}$ |
| HARQ-ACK and CG-UCI | $\beta_{offset}^{PUSCH} = \beta_{offset}^{HARQ-ACK}$ |

Manner 3

When the terminal device sends the first UCI on one transmission occasion, the first UCI and the first transport block are carried on the first channel, the transmission occasion includes the N time units or the first symbols in the N time units, and the second information includes the code rate compensation factor of the first UCI and the parameter for adjusting the upper limit of the quantity of coded modulation symbols of the first UCI, the terminal device may select, from Table 6 based on a type of the first UCI, a formula for calculating a quantity of coded modulation symbols of UCI, and determine the quantity of coded modulation symbols of the first UCI. For a relationship between the code rate compensation factor of the first UCI and both K and N, refer to Table 7. The parameter for adjusting the upper limit of the quantity of coded modulation symbols of the first UCI may be higher-layer configured scaling divided by N.

$$N_{symb,all}^{PUSCH} = N \times L .$$

**Table 6**

| UCI type | Quantity of coded modulation symbols of UCI |
| --- | --- |
| HARQ-ACK | $Q'_{ACK} = min\left\{ \left\lceil \dfrac{(O_{ACK} + L_{ACK})\beta_{offset}^{PUSCH} \cdot \sum_{l\in\Psi} M_{sc}^{UCI}(l)}{\sum_{r=0}^{C_{UL-SCH}-1} K_r} \right\rceil, \left\lceil \alpha \cdot \sum_{l\in\Phi} M_{sc}^{UCI}(l) \right\rceil \right\}$ |
| CSI part 1 | $Q'_{CSI-1} = min\left\{ \left\lceil \dfrac{(O_{CSI-1} + L_{CSI-1})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha \cdot \sum_{l=0}^{N_{symb,all}^{PUSCH}-1} M_{sc}^{UCI}(l) \right\rceil - Q'_{ACK/CG-UCI} \right\}$ |
| | $'_{CSI-1} = min\left\{ \left\lceil \dfrac{(O_{CSI-1} + L_{CSI-1})\beta_{offset}^{PUSCH} \cdot \sum_{l\in\Psi} M_{sc}^{UCI}(l)}{\sum_{r=0}^{C_{UL-SCH}-1} K_r} \right\rceil, \left\lceil \alpha \cdot \sum_{l\in\Psi} M_{sc}^{UCI}(l) \right\rceil - Q'_{ACK/CG-UCI} \right\}$ |

(continued)

| UCI type | Quantity of coded modulation symbols of UCI |
|---|---|
| CSI part 2 | $$Q'_{CSI-2} = min \left\{ \left\lceil \frac{(O_{CSI-2} + L_{CSI-2})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \\ \left\lceil \alpha \cdot \sum_{l=0}^{N_{symb,all}^{PUSCH}-1} M_{sc}^{UCI}(l) \right\rceil - Q'_{ACK/CG-UCI} - Q'_{CSI-1} \right\}$$ |
| | $$Q'_{CSI-2} = min \left\{ \left\lceil \frac{(O_{CSI-2} + L_{CSI-2})\beta_{offset}^{PUSCH} \cdot \sum_{l\in\Psi} M_{sc}^{UCI}(l)}{\sum_{r=0}^{C_{UL-SCH}-1} K_r} \right\rceil, \\ \left\lceil \alpha \cdot \sum_{l\in\Psi} M_{sc}^{UCI}(l) \right\rceil - Q'_{ACK/CG-UCI} - Q'_{CSI-1} \right\}$$ |
| CG-UCI | $$Q'_{CG-UCI} = min \left\{ \left\lceil \frac{(O_{CG-UCI} + L_{CG-UCI})\beta_{offset}^{PUSCH} \cdot \sum_{l\in\Psi} M_{sc}^{UCI}(l)}{\sum_{r=0}^{C_{UL-SCH}-1} K_r} \right\rceil, \\ \left\lceil \alpha \cdot \sum_{l\in\Phi} M_{sc}^{UCI}(l) \right\rceil \right\}$$ |
| HARQ-ACK and CG-UCI | $$Q'_{ACK} = min \left\{ \left\lceil \frac{(O_{ACK} + O_{CG-UCI} + L_{ACK})\beta_{offset}^{PUSCH} \cdot \sum_{l\in\Psi} M_{sc}^{UCI}(l)}{\sum_{r=0}^{C_{UL-SCH}-1} K_r} \right\rceil, \\ \left\lceil \alpha \cdot \sum_{l\in\Phi} M_{sc}^{UCI}(l) \right\rceil \right\}$$ |

**Table 7**

| UCI type | $\beta_{offset}^{PUSCH}$ |
|---|---|
| HARQ-ACK | $\beta_{offset}^{PUSCH} = \beta_{offset}^{HARQ-ACK} \times K/N$ |
| CSI part 1 | $\beta_{offset}^{PUSCH} = \beta_{offset}^{CSI-part1} \times K/N$ |
| CSI part 2 | $\beta_{offset}^{PUSCH} = \beta_{offset}^{CSI-part2} \times K/N$ |
| CG-UCI | $\beta_{offset}^{PUSCH} = \beta_{offset}^{CG-UCI} \times K/N$ |
| HARQ-ACK and CG-UCI | $\beta_{offset}^{PUSCH} = \beta_{offset}^{HARQ-ACK} \times K/N$ |

In a possible design, the code rate compensation factor of the first UCI may be shown in Table 5. The formula shown in Table 6 further includes a coefficient $N/K$. The coefficient and the code rate compensation factor of the first UCI may be in a multiplication relationship.

Optionally, in Implementation 1, the second information may be determined by the terminal device based on N and/or K, or may be sent by the network device to the terminal device after being determined by the network device based on N and/or K.

In a possible manner, the terminal device may determine the second information based on ninth information indicated by the network device and at least one of N and K. The ninth information may include at least one of the following: scaling configured by a higher layer, $\beta_{offset}^{HARQ-ACK}$, $\beta_{offset}^{CSI-part1}$, $\beta_{offset}^{CSI-part2}$, $\beta_{offset}^{CG-UCI}$ .

For example, the terminal device may determine the code rate compensation factor of the first UCI in the second information based on at least one of $\beta_{offset}^{HARQ-ACK}$, $\beta_{offset}^{CSI-part1}$, $\beta_{offset}^{CSI-part2}$, $\beta_{offset}^{CG-UCI}$ in the ninth information and at least one of N and K. For a determining manner, refer to Table 2 or Table 7. Details are not described herein again.

For another example, the terminal device may determine, based on the scaling configured by the higher layer in the ninth information, that the parameter that is in the second information and that is used to adjust the upper limit of the quantity of coded modulation symbols of the first UCI is the higher-layer configured scaling divided by N.

In another possible manner, the network device may determine ninth information based on N and/or K, and send the ninth information to the terminal device. The ninth information may include at least one of the following: scaling configured by a higher layer, $\beta_{offset}^{HARQ-ACK}$, $\beta_{offset}^{CSI-part1}$, $\beta_{offset}^{CSI-part2}$, $\beta_{offset}^{CG-UCI}$ . Then the terminal device may determine the code rate compensation factor of the first UCI in the second information based on Table 5, and determine that the parameter that is in the second information and that is used to adjust the upper limit of the quantity of coded modulation symbols of the first UCI is the scaling configured by the higher layer. In another possible manner, the terminal device and the network device store a correspondence between tenth information and indication information. The network device may send the indication information to the terminal device, and the terminal device determines the tenth information based on the correspondence. Then, the terminal device may determine the code rate compensation factor of the first UCI in the second information based on Table 5. The tenth information may include at The indication information least one of the following: $\beta_{offset}^{HARQ-ACK}$, $\beta_{offset}^{CSI-part1}$, $\beta_{offset}^{CSI-part2}$, $\beta_{offset}^{CG-UCI}$ . indicates at least one item in the tenth information. For example, the indication information may include at least one of $I_{offset,0}^{HARQ-ACK}$, $I_{offset,1}^{HARQ-ACK}$, $I_{offset,2}^{HARQ-ACK}$, $I_{offset}^{CG-UCI}$, $I_{offset,0}^{CSI-1}$, $I_{offset,1}^{CSI-1}$, $I_{offset,0}^{CSI-2}$, $I_{offset,1}^{CSI-2}$ .

Optionally, when the tenth information is at least one of $\beta_{offset}^{HARQ-ACK}$, $\beta_{offset}^{CG-UCI}$ , a value of the tenth information may be P times a value in Table 8. Optionally, P may be one or more values. For example, P may include one or more of 2, 4, and 8.

Optionally, when the tenth information is at least one of $\beta_{offset}^{CSI-part1}$, $\beta_{offset}^{CSI-part2}$ , a value of the tenth information may be Q times a value in Table 9. Optionally, Q may be one or more values. For example, P may include one or more of 2, 4, and 8.

Optionally, the correspondences shown in Table 8 and Table 9 are merely examples of the correspondence between the tenth relationship and the indication information. Alternatively, the indication information and the tenth relationship may have another correspondence. This is not limited in this application.

The correspondence between the tenth information and the indication information that is determined in the foregoing manner may be combined with Table 8, to obtain a table; or the correspondence between the tenth information and the indication information that is determined in the foregoing manner may be combined with Table 9, to obtain a table; or the correspondence between the tenth information and the indication information that is determined in the foregoing manner may be included in a new table.

**Table 8**

| $I_{offset,0}^{HARQ-ACK}$ or $I_{offset,1}^{HARQ-ACK}$ or $I_{offset,2}^{HARQ-ACK}$ or $I_{offset}^{CG-UCI}$ | $\beta_{offset}^{HARQ-ACK}$ or $\beta_{offset}^{CG-UCI}$ |
|---|---|
| 0 | 1.000 |
| 1 | 2.000 |
| 2 | 2.500 |
| 3 | 3.125 |
| 4 | 4.000 |
| 5 | 5.000 |
| 6 | 6.250 |

(continued)

| $I_{\text{offset,0}}^{\text{HARQ-ACK}}$ or $I_{\text{offset,1}}^{\text{HARQ-ACK}}$ or $I_{\text{offset,2}}^{\text{HARQ-ACK}}$ or $I_{\text{offset}}^{\text{CG-UCI}}$ | $\beta_{\text{offset}}^{\text{HARQ-ACK}}$ or $\beta_{\text{offset}}^{\text{CG-UCI}}$ |
|---|---|
| 7 | 8.000 |
| 8 | 10.000 |
| 9 | 12.625 |
| 10 | 15.875 |
| 11 | 20.000 |
| 12 | 31.000 |
| 13 | 50.000 |
| 14 | 80.000 |
| 15 | 126.000 |

**Table 9**

| $I_{\text{offset,0}}^{\text{CSI-1}}$ or $I_{\text{offset,1}}^{\text{CSI-1}}$ $I_{\text{offset,0}}^{\text{CSI-2}}$ or $I_{\text{offset,1}}^{\text{CSI-2}}$ | $\beta_{\text{offset}}^{\text{CSI-1}}$ $\beta_{\text{offset}}^{\text{CSI-2}}$ |
|---|---|
| 0 | 1.125 |
| 1 | 1.250 |
| 2 | 1.375 |
| 3 | 1.625 |
| 4 | 1.750 |
| 5 | 2.000 |
| 6 | 2.250 |
| 7 | 2.500 |
| 8 | 2.875 |
| 9 | 3.125 |
| 10 | 3.500 |
| 11 | 4.000 |
| 12 | 5.000 |
| 13 | 6.250 |
| 14 | 8.000 |
| 15 | 10.000 |
| 16 | 12.625 |
| 17 | 15.875 |
| 18 | 20.000 |

In another possible manner, for the first channel, a scaling set is a set of O times of (0.5, 0.65, 0.8, 1). Optionally, O may be one or more values. For example, O may include one or more of 2, 4, and 8. The network device may select one scaling from a locally stored scaling set, and send the selected scaling to the terminal device. The terminal device may determine that the parameter that is in the second information and that is used to adjust the upper limit of the quantity of coded modulation symbols of the first UCI is the selected scaling. For the first channel, an example of the scaling set is (1, 1.3, 1.6, 2, 2.6, 3.2, 4, 5.2, 6.4, 8).

Implementation 2

The terminal device may determine the quantity of coded modulation symbols of the first UCI based on the first information and second information. The second information includes at least one of the following: a code rate compensation factor of the first UCI, or a parameter for adjusting an upper limit of the quantity of coded modulation symbols of the first UCI.

Optionally, for the code rate compensation factor of the first UCI, refer to Table 5. The parameter for adjusting the upper limit of the quantity of coded modulation symbols of the first UCI may be scaling configured by a higher layer.

In Implementation 2, the terminal device may determine the quantity of coded modulation symbols of the first UCI in the following implementations, but this is not limited.

Implementation 1:

When the terminal device sends the first UCI on at least one of the N transmission occasions, the first UCI and the first transport block are carried on the first channel, and each of the N transmission occasions may include one time unit or a first symbol in one time unit, the terminal device may select, from Table 10 based on a type of the first UCI, a formula for calculating a quantity of coded modulation symbols of UCI, and determine the quantity of coded modulation symbols of the first UCI. $N_{symb,all}^{PUSCH} = L$.

**Table 10**

| UCI type | Quantity of coded modulation symbols of UCI |
|---|---|
| HARQ-ACK | $Q'_{ACK} = min\left\{ \left\lceil \frac{(O_{ACK} + L_{ACK})\beta_{offset}^{PUSCH} \cdot \sum_{l=0}^{N_{symb,all}^{PUSCH}-1} M_{sc}^{UCI}(l)}{\frac{1}{K}\sum_{r=0}^{C_{UL-SCH}-1} K_r} \right\rceil, \left\lceil \alpha \cdot \sum_{l=l_0}^{N_{symb,all}^{PUSCH}-1} M_{sc}^{UCI}(l) \right\rceil \right\}$ |
| CSI part 1 | $Q'_{CSI-1} = min\left\{ \left\lceil \frac{(O_{CSI-1} + L_{CSI-1})\beta_{offset}^{PUSCH} \cdot \sum_{l=0}^{N_{symb,all}^{PUSCH}-1} M_{sc}^{UCI}(l)}{\frac{1}{K}\sum_{r=0}^{C_{UL-SCH}-1} K_r} \right\rceil, \left\lceil \alpha \cdot \sum_{l=0}^{N_{symb,all}^{PUSCH}-1} M_{sc}^{UCI}(l) \right\rceil - Q'_{ACK/CG-UCI} \right\}$ |
| CSI part 2 | $Q'_{CSI-2} = min\left\{ \left\lceil \frac{(O_{CSI-2} + L_{CSI-2})\beta_{offset}^{PUSCH} \cdot \sum_{l=0}^{N_{symb,all}^{PUSCH}-1} M_{sc}^{UCI}(l)}{\frac{1}{K}\sum_{r=0}^{C_{UL-SCH}-1} K_r} \right\rceil, \left\lceil \alpha \cdot \sum_{l=0}^{N_{symb,all}^{PUSCH}-1} M_{sc}^{UCI}(l) \right\rceil - Q'_{ACK/CG-UCI} - Q'_{CSI-1} \right\}$ |
| CG-UCI | $Q'_{CG-UCI} = min\left\{ \left\lceil \frac{(O_{CG-UCI} + L_{CG-UCI})\beta_{offset}^{PUSCH} \cdot \sum_{l=0}^{N_{symb,all}^{PUSCH}-1} M_{sc}^{UCI}(l)}{\frac{1}{K}\sum_{r=0}^{C_{UL-SCH}-1} K_r} \right\rceil, \left\lceil \alpha \cdot \sum_{l=l_0}^{N_{symb,all}^{PUSCH}-1} M_{sc}^{UCI}(l) \right\rceil \right\}$ |

(continued)

| UCI type | Quantity of coded modulation symbols of UCI |
|---|---|
| HARQ-ACK and CG-UCI | $$Q'_{ACK} = min \left\{ \left\lceil \frac{(O_{ACK} + O_{CG-UCI} + L_{ACK})\beta_{offset}^{PUSCH} \cdot \sum_{l=0}^{N_{symb,all}^{PUSCH}-1} M_{sc}^{UCI}(l)}{\frac{1}{K}\sum_{r=0}^{C_{UL-SCH}-1} K_r} \right\rceil, \left\lceil \alpha \cdot \sum_{l=l_0}^{N_{symb,all}^{PUSCH}-1} M_{sc}^{UCI}(l) \right\rceil \right\}$$ |

In Implementation 1, a time granularity of a total quantity of bits occupied by the first channel is the same as a time granularity of a total resource, so that the quantity of coded modulation symbols of the first UCI can be accurately calculated, and then the first UCI can be transmitted through the first channel.

It should be understood that a location of K is not limited to the location shown in Table 10, provided that K can be in a multiplication relationship with the code rate compensation factor of the first UCI. For example, K is located before the code rate compensation factor of the first UCI.

Implementation 2

When the terminal device sends the first UCI on one transmission occasion, the first UCI and the first transport block are carried on the first channel, and one transmission occasion includes the N time units or the first symbols in the N time units, the terminal device may determine the quantity of coded modulation symbols of the first UCI based on a first resource quantity and the second information. The first resource quantity may be a resource quantity of a first symbol in one time unit and/or a resource quantity of a second symbol in one time unit. In other words, the terminal device may determine the quantity of coded modulation symbols of the first UCI based on a resource in one time unit.

For specific content of the first resource quantity, refer to Implementation 2 in Implementation 1. Details are not described herein again.

In Implementation 2, the terminal device may determine the quantity of coded modulation symbols of the first UCI in the following implementations, but this is not limited.

Manner 1

When the terminal device sends the first UCI on one transmission occasion, the first UCI and the first transport block are carried on the first channel, the transmission occasion includes the N time units or the first symbols in the N time units, and N is equal to K, the terminal device may select, from Table 11 based on a type of the first UCI, a formula for calculating a quantity of coded modulation symbols of UCI, and determine the quantity of coded modulation symbols of the first UCI. $N_{symb,all}^{PUSCH} = N \times L$.

**Table 11**

| UCI type | Quantity of coded modulation symbols of UCI |
|---|---|
| HARQ-ACK | $$Q'_{ACK} = min \left\{ \left\lceil \frac{(O_{ACK} + L_{ACK})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha \cdot \sum_{l=l_0}^{N_{symb,all}^{PUSCH}/N-1} M_{sc}^{UCI}(l) \right\rceil \right\}$$ |

(continued)

| UCI type | Quantity of coded modulation symbols of UCI |
|---|---|
| | $$Q'_{ACK} = min\left\{\left\lceil\frac{(O_{ACK}+L_{ACK})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r}\right\rceil, \left\lceil\alpha \cdot \sum_{l=l_0}^{L-1} M_{sc}^{UCI}(l)\right\rceil\right\}$$ |
| | $$Q'_{ACK} = min\left\{\left\lceil\frac{(O_{ACK}+L_{ACK})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r}\right\rceil, \left\lceil\alpha \cdot \sum_{l=l_0+i\cdot N}^{N_{symb,all}^{PUSCH}/N+i\cdot N-1} M_{sc}^{UCI}(l)\right\rceil\right\}$$ |
| | $$Q'_{ACK} = min\left\{\left\lceil\frac{(O_{ACK}+L_{ACK})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r}\right\rceil, \left\lceil\alpha \cdot \sum_{l=l_0+i\cdot N}^{L+i\cdot N-1} M_{sc}^{UCI}(l)\right\rceil\right\}$$ |
| | $$Q'_{ACK} = min\left\{\left\lceil\frac{(O_{ACK}+L_{ACK})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r}\right\rceil, \left\lceil\alpha \cdot \frac{1}{N} \cdot \sum_{l\in\Phi} M_{sc}^{UCI}(l)\right\rceil\right\}$$ |
| | $$Q'_{ACK} = min\left\{\left\lceil\frac{(O_{ACK}+L_{ACK})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r}\right\rceil, \left\lceil\alpha \cdot \sum_{l\in\Phi_i} M_{sc}^{UCI}(l)\right\rceil\right\}$$ |

(continued)

| UCI type | Quantity of coded modulation symbols of UCI |
|---|---|
| CSI part 1 | $$Q'_{CSI-1} = min\left\{ \left\lceil \frac{(O_{CSI-1} + L_{CSI-1})\beta^{PUSCH}_{offset} \cdot \sum_{l=0}^{N^{PUSCH}_{symb,all}-1} M^{UCI}_{sc}(l)}{\sum_{r=0}^{C_{UL-SCH}-1} K_r} \right\rceil, \left\lceil \alpha \cdot \sum_{l=0}^{N^{PUSCH}_{symb,all}/N-1} M^{UCI}_{sc}(l) \right\rceil - Q'_{ACK/CG-UCI} \right\}$$ |
| | $$Q'_{CSI-1} = min\left\{ \left\lceil \frac{(O_{CSI-1} + L_{CSI-1})\beta^{PUSCH}_{offset} \cdot \sum_{l=0}^{N^{PUSCH}_{symb,all}-1} M^{UCI}_{sc}(l)}{\sum_{r=0}^{C_{UL-SCH}-1} K_r} \right\rceil, \left\lceil \alpha \cdot \sum_{l=0}^{L-1} M^{UCI}_{sc}(l) \right\rceil - Q'_{ACK/CG-UCI} \right\}$$ |

(continued)

| UCI type | Quantity of coded modulation symbols of UCI |
|---|---|
| | $$Q'_{CSI-1} = min \left\{ \left\lceil \frac{(O_{CSI-1} + L_{CSI-1})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha \cdot \sum_{l=i\cdot N}^{N_{symb,all}^{PUSCH}/N+i\cdot N-1} M_{sc}^{UCI}(l) \right\rceil - Q'_{ACK/CG-UCI} \right\}$$ |
| | $$Q'_{CSI-1} = min \left\{ \left\lceil \frac{(O_{CSI-1} + L_{CSI-1})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha \cdot \sum_{l=i\cdot N}^{L+i\cdot N-1} M_{sc}^{UCI}(l) \right\rceil - Q'_{ACK/CG-UCI} \right\}$$ |
| | $$Q'_{CSI-1} = min \left\{ \left\lceil \frac{(O_{CSI-1} + L_{CSI-1})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha \cdot \frac{1}{N} \cdot \sum_{l=0}^{N_{symb,all}^{PUSCH}-1} M_{sc}^{UCI}(l) \right\rceil - Q'_{ACK/CG-UCI} \right\}$$ |
| | $$Q'_{CSI-1} = min \left\{ \left\lceil \frac{(O_{CSI-1} + L_{CSI-1})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha \cdot \frac{1}{N} \cdot \sum_{l \in \Psi} M_{sc}^{UCI}(l) \right\rceil - Q'_{ACK/CG-UCI} \right\}$$ |
| | $$Q'_{CSI-1} = min \left\{ \left\lceil \frac{(O_{CSI-1} + L_{CSI-1})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha \cdot \sum_{l \in \Psi_i} M_{sc}^{UCI}(l) \right\rceil - Q'_{ACK/CG-UCI} \right\}$$ |

(continued)

| UCI type | Quantity of coded modulation symbols of UCI |
|---|---|
| CSI part 2 | $$Q'_{CSI-2} = min \left\{ \left\lceil \frac{(O_{CSI-2} + L_{CSI-2})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha \cdot \sum_{l=0}^{N_{symb,all}^{PUSCH}/N-1} M_{sc}^{UCI}(l) \right\rceil - Q'_{ACK/CG-UCI} - Q'_{CSI-1} \right\}$$ |
| | $$Q'_{CSI-2} = min \left\{ \left\lceil \frac{(O_{CSI-2} + L_{CSI-2})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha \cdot \sum_{l=0}^{L-1} M_{sc}^{UCI}(l) \right\rceil - Q'_{ACK/CG-UCI} - Q'_{CSI-1} \right\}$$ |

(continued)

| UCI type | Quantity of coded modulation symbols of UCI |
|---|---|
| | $$Q'_{CSI-2} = min \left\{ \begin{array}{l} \left\lceil \dfrac{(O_{CSI-2} + L_{CSI-2})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \\ \left\lceil \alpha \cdot \sum_{l=i\cdot N}^{N_{symb,all}^{PUSCH}/N+i\cdot N-1} M_{sc}^{UCI}(l) \right\rceil - Q'_{ACK/CG-UCI} - Q'_{CSI-1} \end{array} \right\}$$ |
| | $$Q'_{CSI-2} = min \left\{ \begin{array}{l} \left\lceil \dfrac{(O_{CSI-2} + L_{CSI-2})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \\ \left\lceil \alpha \cdot \sum_{l=i\cdot N}^{L+i\cdot N-1} M_{sc}^{UCI}(l) \right\rceil - Q'_{ACK/CG-UCI} - Q'_{CSI-1} \end{array} \right\}$$ |
| | $$Q'_{CSI-2} = min \left\{ \begin{array}{l} \left\lceil \dfrac{(O_{CSI-2} + L_{CSI-2})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \\ \left\lceil \alpha \cdot \dfrac{1}{N} \cdot \sum_{l=0}^{N_{symb,all}^{PUSCH}-1} M_{sc}^{UCI}(l) \right\rceil - Q'_{ACK/CG-UCI} - Q'_{CSI-1} \end{array} \right\}$$ |
| | $$Q'_{CSI-2} = min \left\{ \begin{array}{l} \left\lceil \dfrac{(O_{CSI-2} + L_{CSI-2})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \\ \left\lceil \alpha \cdot \dfrac{1}{N} \cdot \sum_{l \in \Psi} M_{sc}^{UCI}(l) \right\rceil - Q'_{ACK/CG-UCI} - Q'_{CSI-1} \end{array} \right\}$$ |
| | $$Q'_{CSI-2} = min \left\{ \begin{array}{l} \left\lceil \dfrac{(O_{CSI-2} + L_{CSI-2})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \\ \left\lceil \alpha \cdot \sum_{l \in \Psi_i} M_{sc}^{UCI}(l) \right\rceil - Q'_{ACK/CG-UCI} - Q'_{CSI-1} \end{array} \right\}$$ |

(continued)

| UCI type | Quantity of coded modulation symbols of UCI |
|---|---|
| CG-UCI | $$Q'_{CG-UCI} = min\left\{ \left\lceil \frac{(O_{CG-UCI} + L_{CG-UCI})\beta^{PUSCH}_{offset} \cdot \sum_{l=0}^{N^{PUSCH}_{symb,all}-1} M^{UCI}_{sc}(l)}{\sum_{r=0}^{C_{UL-SCH}-1} K_r} \right\rceil, \left\lceil \alpha \cdot \sum_{l=l_0}^{N^{PUSCH}_{symb,all}/N-1} M^{UCI}_{sc}(l) \right\rceil \right\}$$ |
| | $$Q'_{CG-UCI} = min\left\{ \left\lceil \frac{(O_{CG-UCI} + L_{CG-UCI})\beta^{PUSCH}_{offset} \cdot \sum_{l=0}^{N^{PUSCH}_{symb,all}-1} M^{UCI}_{sc}(l)}{\sum_{r=0}^{C_{UL-SCH}-1} K_r} \right\rceil, \left\lceil \alpha \cdot \sum_{l=l_0}^{L-1} M^{UCI}_{sc}(l) \right\rceil \right\}$$ |
| | $$Q'_{CG-UCI} = min\left\{ \left\lceil \frac{(O_{CG-UCI} + L_{CG-UCI})\beta^{PUSCH}_{offset} \cdot \sum_{l=0}^{N^{PUSCH}_{symb,all}-1} M^{UCI}_{sc}(l)}{\sum_{r=0}^{C_{UL-SCH}-1} K_r} \right\rceil, \left\lceil \alpha \cdot \sum_{l=l_0+i\cdot N}^{N^{PUSCH}_{symb,all}/N+i\cdot N-1} M^{UCI}_{sc}(l) \right\rceil \right\}$$ |
| | $$Q'_{CG-UCI} = min\left\{ \left\lceil \frac{(O_{CG-UCI} + L_{CG-UCI})\beta^{PUSCH}_{offset} \cdot \sum_{l=0}^{N^{PUSCH}_{symb,all}-1} M^{UCI}_{sc}(l)}{\sum_{r=0}^{C_{UL-SCH}-1} K_r} \right\rceil, \left\lceil \alpha \cdot \sum_{l_0+i\cdot N}^{L+i\cdot N-1} M^{UCI}_{sc}(l) \right\rceil \right\}$$ |
| | $$Q'_{CG-UCI} = min\left\{ \left\lceil \frac{(O_{CG-UCI} + L_{CG-UCI})\beta^{PUSCH}_{offset} \cdot \sum_{l=0}^{N^{PUSCH}_{symb,all}-1} M^{UCI}_{sc}(l)}{\sum_{r=0}^{C_{UL-SCH}-1} K_r} \right\rceil, \left\lceil \alpha \cdot \frac{1}{N} \cdot \sum_{l\in\Phi} M^{UCI}_{sc}(l) \right\rceil \right\}$$ |
| | $$Q'_{CG-UCI} = min\left\{ \left\lceil \frac{(O_{CG-UCI} + L_{CG-UCI})\beta^{PUSCH}_{offset} \cdot \sum_{l=0}^{N^{PUSCH}_{symb,all}-1} M^{UCI}_{sc}(l)}{\sum_{r=0}^{C_{UL-SCH}-1} K_r} \right\rceil, \left\lceil \alpha \cdot \sum_{l\in\Phi_i} M^{UCI}_{sc}(l) \right\rceil \right\}$$ |

(continued)

| UCI type | Quantity of coded modulation symbols of UCI |
|---|---|
| HARQ-ACK and CG-UCI | $$Q'_{ACK} = min \left\{ \left\lceil \frac{(O_{ACK} + O_{CG-UCI} + L_{ACK})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha \cdot \sum_{l=l_0}^{N_{symb,all}^{PUSCH}/N-1} M_{sc}^{UCI}(l) \right\rceil \right\}$$ |
| | $$Q'_{ACK} = min \left\{ \left\lceil \frac{(O_{ACK} + O_{CG-UCI} + L_{ACK})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha \cdot \sum_{l=l_0}^{L-1} M_{sc}^{UCI}(l) \right\rceil \right\}$$ |
| | $$Q'_{ACK} = min \left\{ \left\lceil \frac{(O_{ACK} + O_{CG-UCI} + L_{ACK})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha \cdot \sum_{l=l_0+i\cdot N}^{N_{symb,all}^{PUSCH}/N+i\cdot N-1} M_{sc}^{UCI}(l) \right\rceil \right\}$$ |
| | $$Q'_{ACK} = min \left\{ \left\lceil \frac{(O_{ACK} + O_{CG-UCI} + L_{ACK})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha \cdot \sum_{l=l_0+i\cdot N}^{L+i\cdot N-1} M_{sc}^{UCI}(l) \right\rceil \right\}$$ |
| | $$Q'_{ACK} = min \left\{ \left\lceil \frac{(O_{ACK} + O_{CG-UCI} + L_{ACK})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha \cdot \frac{1}{N} \cdot \sum_{l\in\Phi} M_{sc}^{UCI}(l) \right\rceil \right\}$$ |
| | $$Q'_{ACK} = min \left\{ \left\lceil \frac{(O_{ACK} + O_{CG-UCI} + L_{ACK})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha \cdot \sum_{l\in\Phi_i} M_{sc}^{UCI}(l) \right\rceil \right\}$$ |

Optionally, N in Table 11 may be replaced with K.

Manner 2

When the terminal device sends the first UCI on one transmission occasion, the first UCI and the first transport block are carried on the first channel, the transmission occasion includes the N time units or the first symbols in the N time units, and K ≤ N, the terminal device may select, from Table 12 based on a type of the first UCI, a formula for calculating a quantity of coded modulation symbols of UCI, and determine the quantity of coded modulation symbols of the first UCI.

$$N_{symb,all}^{PUSCH} = N \times L$$.

**Table 12**

| UCI type | Quantity of coded modulation symbols of UCI |
|---|---|
| HARQ-ACK | $$Q'_{ACK} = min \left\{ \left\lceil \frac{(O_{ACK} + L_{ACK}) \beta_{offset}^{PUSCH} \cdot \sum_{l=0}^{N_{symb,all}^{PUSCH}/N-1} M_{sc}^{UCI}(l)}{\frac{1}{K} \sum_{r=0}^{C_{UL-SCH}-1} K_r} \right\rceil, \left\lceil \alpha \cdot \sum_{l=l_0}^{N_{symb,all}^{PUSCH}/N-1} M_{sc}^{UCI}(l) \right\rceil \right\}$$ |

(continued)

| UCI type | Quantity of coded modulation symbols of UCI |
|---|---|
| | $$Q'_{ACK} = min \left\{ \left\lceil \frac{(O_{ACK} + L_{ACK})\beta_{offset}^{PUSCH} \cdot \sum_{l=0}^{L-1} M_{sc}^{UCI}(l)}{\frac{1}{K} \sum_{r=0}^{C_{UL-SCH}-1} K_r} \right\rceil, \left\lceil \alpha \cdot \sum_{l=l_0}^{L-1} M_{sc}^{UCI}(l) \right\rceil \right\}$$ |
| | $$Q'_{ACK} = min \left\{ \left\lceil \frac{(O_{ACK} + L_{ACK})\beta_{offset}^{PUSCH} \cdot \sum_{l=i \cdot N}^{N_{symb,all}^{PUSCH}/N+i \cdot N-1} M_{sc}^{UCI}(l)}{\frac{1}{K} \sum_{r=0}^{C_{UL-SCH}-1} K_r} \right\rceil, \left\lceil \alpha \cdot \sum_{l=l_0+i \cdot N}^{N_{symb,all}^{PUSCH}/N+i \cdot N-1} M_{sc}^{UCI}(l) \right\rceil \right\}$$ |
| | $$Q'_{ACK} = min \left\{ \left\lceil \frac{(O_{ACK} + L_{ACK})\beta_{offset}^{PUSCH} \cdot \sum_{l=i \cdot N}^{L+i \cdot N-1} M_{sc}^{UCI}(l)}{\frac{1}{K} \sum_{r=0}^{C_{UL-SCH}-1} K_r} \right\rceil, \left\lceil \alpha \cdot \sum_{l=l_0+i \cdot N}^{L+i \cdot N-1} M_{sc}^{UCI}(l) \right\rceil \right\}$$ |
| | $$Q'_{ACK} = min \left\{ \left\lceil \frac{(O_{ACK} + L_{ACK})\beta_{offset}^{PUSCH} \cdot \frac{1}{N} \cdot \sum_{l \in \Psi} M_{sc}^{UCI}(l)}{\frac{1}{K} \sum_{r=0}^{C_{UL-SCH}-1} K_r} \right\rceil, \left\lceil \alpha \cdot \frac{1}{N} \cdot \sum_{l \in \Phi} M_{sc}^{UCI}(l) \right\rceil \right\}$$ |
| | $$Q'_{ACK} = min \left\{ \left\lceil \frac{(O_{ACK} + L_{ACK})\beta_{offset}^{PUSCH} \cdot \sum_{l \in \Psi_i} M_{sc}^{UCI}(l)}{\frac{1}{K} \sum_{r=0}^{C_{UL-SCH}-1} K_r} \right\rceil, \left\lceil \alpha \cdot \sum_{l \in \Phi_i} M_{sc}^{UCI}(l) \right\rceil \right\}$$ |
| CSI part 1 | $$Q'_{CSI-1} = min \left\{ \left\lceil \frac{(O_{CSI-1} + L_{CSI-1})\beta_{offset}^{PUSCH} \cdot \sum_{l=0}^{N_{symb,all}^{PUSCH}/N-1} M_{sc}^{UCI}(l)}{\frac{1}{K} \sum_{r=0}^{C_{UL-SCH}-1} K_r} \right\rceil, \left\lceil \alpha \cdot \sum_{l=0}^{N_{symb,all}^{PUSCH}/N-1} M_{sc}^{UCI}(l) \right\rceil - Q'_{ACK/CG-UCI} \right\}$$ |
| | $$Q'_{CSI-1} = min \left\{ \left\lceil \frac{(O_{CSI-1} + L_{CSI-1})\beta_{offset}^{PUSCH} \cdot \sum_{l=0}^{L-1} M_{sc}^{UCI}(l)}{\frac{1}{K} \sum_{r=0}^{C_{UL-SCH}-1} K_r} \right\rceil, \left\lceil \alpha \cdot \sum_{l=0}^{L-1} M_{sc}^{UCI}(l) \right\rceil - Q'_{ACK/CG-UCI} \right\}$$ |

(continued)

| UCI type | Quantity of coded modulation symbols of UCI |
|---|---|
| | $$Q'_{CSI-1} = min \left\{ \left\lceil \frac{(O_{CSI-1} + L_{CSI-1})\beta_{offset}^{PUSCH} \cdot \sum_{l=i\cdot N}^{N_{symb,all}^{PUSCH}/N+i\cdot N-1} M_{sc}^{UCI}(l)}{\frac{1}{K}\sum_{r=0}^{C_{UL-SCH}-1} K_r} \right\rceil, \right. \\ \left. \left\lceil \alpha \cdot \sum_{l=i\cdot N}^{N_{symb,all}^{PUSCH}/N+i\cdot N-1} M_{sc}^{UCI}(l) \right\rceil - Q'_{ACK/CG-UCI} \right\}$$ |
| | $$Q'_{CSI-1} = min \left\{ \left\lceil \frac{(O_{CSI-1} + L_{CSI-1})\beta_{offset}^{PUSCH} \cdot \sum_{l=i\cdot N}^{L+i\cdot N-1} M_{sc}^{UCI}(l)}{\frac{1}{K}\sum_{r=0}^{C_{UL-SCH}-1} K_r} \right\rceil, \right. \\ \left. \left\lceil \alpha \cdot \sum_{l=i\cdot N}^{L+i\cdot N-1} M_{sc}^{UCI}(l) \right\rceil - Q'_{ACK/CG-UCI} \right\}$$ |
| | $$Q'_{CSI-1} = min \left\{ \left\lceil \frac{(O_{CSI-1} + L_{CSI-1})\beta_{offset}^{PUSCH} \cdot \frac{1}{N} \cdot \sum_{l=0}^{N_{symb,all}^{PUSCH}-1} M_{sc}^{UCI}(l)}{\frac{1}{K}\sum_{r=0}^{C_{UL-SCH}-1} K_r} \right\rceil, \right. \\ \left. \left\lceil \alpha \cdot \frac{1}{N} \cdot \sum_{l=0}^{N_{symb,all}^{PUSCH}-1} M_{sc}^{UCI}(l) \right\rceil - Q'_{ACK/CG-UCI} \right\}$$ |
| | $$Q'_{CSI-1} = min \left\{ \left\lceil \frac{(O_{CSI-1} + L_{CSI-1})\beta_{offset}^{PUSCH} \cdot \frac{1}{N} \cdot \sum_{l\in\Psi} M_{sc}^{UCI}(l)}{\frac{1}{K}\sum_{r=0}^{C_{UL-SCH}-1} K_r} \right\rceil, \right. \\ \left. \left\lceil \alpha \cdot \frac{1}{N} \cdot \sum_{l\in\Psi} M_{sc}^{UCI}(l) \right\rceil - Q'_{ACK/CG-UCI} \right\}$$ |
| | $$Q'_{CSI-1} = min \left\{ \left\lceil \frac{(O_{CSI-1} + L_{CSI-1})\beta_{offset}^{PUSCH} \cdot \sum_{l\in\Psi_i} M_{sc}^{UCI}(l)}{\frac{1}{K}\sum_{r=0}^{C_{UL-SCH}-1} K_r} \right\rceil, \right. \\ \left. \left\lceil \alpha \cdot \sum_{l\in\Psi_i} M_{sc}^{UCI}(l) \right\rceil - Q'_{ACK/CG-UCI} \right\}$$ |

(continued)

| UCI type | Quantity of coded modulation symbols of UCI |
|---|---|
| CSI part 2 | $$Q'_{CSI-2} = min \left\{ \left\lceil \frac{(O_{CSI-2} + L_{CSI-2})\beta_{offset}^{PUSCH} \cdot \sum_{l=0}^{N_{symb,all}^{PUSCH}/N-1} M_{sc}^{UCI}(l)}{\frac{1}{K}\sum_{r=0}^{C_{UL-SCH}-1} K_r} \right\rceil, \left\lceil \alpha \cdot \sum_{l=0}^{N_{symb,all}^{PUSCH}/N-1} M_{sc}^{UCI}(l) \right\rceil - Q'_{ACK/CG-UCI} - Q'_{CSI-1} \right\}$$ |
| | $$Q'_{CSI-2} = min \left\{ \left\lceil \frac{(O_{CSI-2} + L_{CSI-2})\beta_{offset}^{PUSCH} \cdot \sum_{l=0}^{L-1} M_{sc}^{UCI}(l)}{\frac{1}{K}\sum_{r=0}^{C_{UL-SCH}-1} K_r} \right\rceil, \left\lceil \alpha \cdot \sum_{l=0}^{L-1} M_{sc}^{UCI}(l) \right\rceil - Q'_{ACK/CG-UCI} - Q'_{CSI-1} \right\}$$ |

(continued)

| UCI type | Quantity of coded modulation symbols of UCI |
|---|---|
| | $$Q'_{CSI-2} = min \left\{ \left\lceil \frac{(O_{CSI-2} + L_{CSI-2})\beta_{offset}^{PUSCH} \cdot \sum_{l=i\cdot N}^{N_{symb,all}^{PUSCH}/N+i\cdot N-1} M_{sc}^{UCI}(l)}{\frac{1}{K}\sum_{r=0}^{C_{UL-SCH}-1} K_r} \right\rceil, \\ \left\lceil \alpha \cdot \sum_{l=i\cdot N}^{N_{symb,all}^{PUSCH}/N+i\cdot N-1} M_{sc}^{UCI}(l) \right\rceil - Q'_{ACK/CG-UCI} - Q'_{CSI-1} \right\}$$ |
| | $$Q'_{CSI-2} = min \left\{ \left\lceil \frac{(O_{CSI-2} + L_{CSI-2})\beta_{offset}^{PUSCH} \cdot \sum_{l=i\cdot N}^{L+i\cdot N-1} M_{sc}^{UCI}(l)}{\frac{1}{K}\sum_{r=0}^{C_{UL-SCH}-1} K_r} \right\rceil, \\ \left\lceil \alpha \cdot \sum_{l=i\cdot N}^{L+i\cdot N-1} M_{sc}^{UCI}(l) \right\rceil - Q'_{ACK/CG-UCI} - Q'_{CSI-1} \right\}$$ |
| | $$Q'_{CSI-2} = min \left\{ \left\lceil \frac{(O_{CSI-2} + L_{CSI-2})\beta_{offset}^{PUSCH} \cdot \frac{1}{N} \cdot \sum_{l=0}^{N_{symb,all}^{PUSCH}-1} M_{sc}^{UCI}(l)}{\frac{1}{K}\sum_{r=0}^{C_{UL-SCH}-1} K_r} \right\rceil, \\ \left\lceil \alpha \cdot \frac{1}{N} \cdot \sum_{l=0}^{N_{symb,all}^{PUSCH}-1} M_{sc}^{UCI}(l) \right\rceil - Q'_{ACK/CG-UCI} - Q'_{CSI-1} \right\}$$ |
| | $$Q'_{CSI-2} = min \left\{ \left\lceil \frac{(O_{CSI-2} + L_{CSI-2})\beta_{offset}^{PUSCH} \cdot \frac{1}{N} \cdot \sum_{l\in\Psi} M_{sc}^{UCI}(l)}{\frac{1}{K}\sum_{r=0}^{C_{UL-SCH}-1} K_r} \right\rceil, \\ \left\lceil \alpha \cdot \frac{1}{N} \cdot \sum_{l\in\Psi} M_{sc}^{UCI}(l) \right\rceil - Q'_{ACK/CG-UCI} - Q'_{CSI-1} \right\}$$ |
| | $$Q'_{CSI-2} = min \left\{ \left\lceil \frac{(O_{CSI-2} + L_{CSI-2})\beta_{offset}^{PUSCH} \cdot \sum_{l\in\Psi_i} M_{sc}^{UCI}(l)}{\frac{1}{K}\sum_{r=0}^{C_{UL-SCH}-1} K_r} \right\rceil, \\ \left\lceil \alpha \cdot \sum_{l\in\Psi_i} M_{sc}^{UCI}(l) \right\rceil - Q'_{ACK/CG-UCI} - Q'_{CSI-1} \right\}$$ |

(continued)

| UCI type | Quantity of coded modulation symbols of UCI |
|---|---|
| CG-UCI | $$Q'_{CG-UCI} = min \left\{ \left\lceil \frac{(O_{CG-UCI} + L_{CG-UCI})\beta_{offset}^{PUSCH} \cdot \sum_{l=0}^{N_{symb,all}^{PUSCH}/N-1} M_{sc}^{UCI}(l)}{\frac{1}{K}\sum_{r=0}^{C_{UL-SCH}-1} K_r} \right\rceil, \left\lceil \alpha \cdot \sum_{l=l_0}^{N_{symb,all}^{PUSCH}/N-1} M_{sc}^{UCI}(l) \right\rceil \right\}$$ |
| | $$Q'_{CG-UCI} = min \left\{ \left\lceil \frac{(O_{CG-UCI} + L_{CG-UCI})\beta_{offset}^{PUSCH} \cdot \sum_{l=0}^{L-1} M_{sc}^{UCI}(l)}{\frac{1}{K}\sum_{r=0}^{C_{UL-SCH}-1} K_r} \right\rceil, \left\lceil \alpha \cdot \sum_{l=l_0}^{L-1} M_{sc}^{UCI}(l) \right\rceil \right\}$$ |
| | $$Q'_{CG-UCI} = min \left\{ \left\lceil \frac{(O_{CG-UCI} + L_{CG-UCI})\beta_{offset}^{PUSCH} \cdot \sum_{l=i\cdot N}^{N_{symb,all}^{PUSCH}/N+i\cdot N-1} M_{sc}^{UCI}(l)}{\frac{1}{K}\sum_{r=0}^{C_{UL-SCH}-1} K_r} \right\rceil, \left\lceil \alpha \cdot \sum_{l=l_0+i\cdot N}^{N_{symb,all}^{PUSCH}/N+i\cdot N-1} M_{sc}^{UCI}(l) \right\rceil \right\}$$ |
| | $$Q'_{CG-UCI} = min \left\{ \left\lceil \frac{(O_{CG-UCI} + L_{CG-UCI})\beta_{offset}^{PUSCH} \cdot \sum_{l=i\cdot N}^{L+i\cdot N-1} M_{sc}^{UCI}(l)}{\frac{1}{K}\sum_{r=0}^{C_{UL-SCH}-1} K_r} \right\rceil, \left\lceil \alpha \cdot \sum_{l=l_0+i\cdot N}^{L+i\cdot N-1} M_{sc}^{UCI}(l) \right\rceil \right\}$$ |
| | $$Q'_{CG-UCI} = min \left\{ \left\lceil \frac{(O_{CG-UCI} + L_{CG-UCI})\beta_{offset}^{PUSCH} \cdot \frac{1}{N} \cdot \sum_{l\in\Psi} M_{sc}^{UCI}(l)}{\frac{1}{K}\sum_{r=0}^{C_{UL-SCH}-1} K_r} \right\rceil, \left\lceil \alpha \cdot \frac{1}{N} \cdot \sum_{l\in\Phi} M_{sc}^{UCI}(l) \right\rceil \right\}$$ |
| | $$Q'_{CG-UCI} = min \left\{ \left\lceil \frac{(O_{CG-UCI} + L_{CG-UCI})\beta_{offset}^{PUSCH} \cdot \sum_{l\in\Psi_i} M_{sc}^{UCI}(l)}{\frac{1}{K}\sum_{r=0}^{C_{UL-SCH}-1} K_r} \right\rceil, \left\lceil \alpha \cdot \sum_{l\in\Phi_i} M_{sc}^{UCI}(l) \right\rceil \right\}$$ |

(continued)

| UCI type | Quantity of coded modulation symbols of UCI |
|---|---|
| HARQ-ACK and CG-UCI | $Q'_{ACK}$ $$= min \left\{ \left\lceil \frac{(O_{ACK} + O_{CG-UCI} + L_{ACK})\beta_{offset}^{PUSCH} \cdot \sum_{l=0}^{N_{symb,all}^{PUSCH}/N-1} M_{sc}^{UCI}(l)}{\frac{1}{K}\sum_{r=0}^{C_{UL-SCH}-1} K_r} \right\rceil, \left\lceil \alpha \cdot \sum_{l=l_0}^{N_{symb,all}^{PUSCH}/N-1} M_{sc}^{UCI}(l) \right\rceil \right\}$$ |
| | $$Q'_{ACK} = min \left\{ \left\lceil \frac{(O_{ACK} + O_{CG-UCI} + L_{ACK})\beta_{offset}^{PUSCH} \cdot \sum_{l=0}^{L-1} M_{sc}^{UCI}(l)}{\frac{1}{K}\sum_{r=0}^{C_{UL-SCH}-1} K_r} \right\rceil, \left\lceil \alpha \cdot \sum_{l=l_0}^{L-1} M_{sc}^{UCI}(l) \right\rceil \right\}$$ |
| | $Q'_{ACK}$ $$= min \left\{ \left\lceil \frac{(O_{ACK} + O_{CG-UCI} + L_{ACK})\beta_{offset}^{PUSCH} \cdot \sum_{l=0}^{N_{symb,all}^{PUSCH}/N+i\cdot N-1} M_{sc}^{UCI}(l)}{\frac{1}{K}\sum_{r=0}^{C_{UL-SCH}-1} K_r} \right\rceil, \left\lceil \alpha \cdot \sum_{l=l_0+i\cdot N}^{N_{symb,all}^{PUSCH}/N+i\cdot N-1} M_{sc}^{UCI}(l) \right\rceil \right\}$$ |
| | $$Q'_{ACK} = min \left\{ \left\lceil \frac{(O_{ACK} + O_{CG-UCI} + L_{ACK})\beta_{offset}^{PUSCH} \cdot \sum_{l=0}^{L+i\cdot N-1} M_{sc}^{UCI}(l)}{\frac{1}{K}\sum_{r=0}^{C_{UL-SCH}-1} K_r} \right\rceil, \left\lceil \alpha \cdot \sum_{l=l_0+i\cdot N}^{L+i\cdot N-1} M_{sc}^{UCI}(l) \right\rceil \right\}$$ |
| | $$Q'_{ACK} = min \left\{ \left\lceil \frac{(O_{ACK} + O_{CG-UCI} + L_{ACK})\beta_{offset}^{PUSCH} \cdot \frac{1}{N} \cdot \sum_{l \in \Psi} M_{sc}^{UCI}(l)}{\frac{1}{K}\sum_{r=0}^{C_{UL-SCH}-1} K_r} \right\rceil, \left\lceil \alpha \cdot \frac{1}{N} \cdot \sum_{l \in \Phi} M_{sc}^{UCI}(l) \right\rceil \right\}$$ |
| | $$Q'_{ACK} = min \left\{ \left\lceil \frac{(O_{ACK} + O_{CG-UCI} + L_{ACK})\beta_{offset}^{PUSCH} \cdot \sum_{l \in \Psi_i} M_{sc}^{UCI}(l)}{\frac{1}{K}\sum_{r=0}^{C_{UL-SCH}-1} K_r} \right\rceil, \left\lceil \alpha \cdot \sum_{l \in \Phi_i} M_{sc}^{UCI}(l) \right\rceil \right\}$$ |

It should be understood that a location of K is not limited to the location shown in Table 12, provided that K can be in a multiplication relationship with the code rate compensation factor of the first UCI. For example, K may be located before the code rate compensation factor of the first UCI.

Implementation 3

The terminal device determines the quantity of coded modulation symbols of the first UCI based on N and/or K.

For a manner in which the terminal device determines the quantity of coded modulation symbols of the first UCI, refer to the foregoing Implementation 1 and the foregoing Implementation 2.

In the foregoing plurality of implementations, the terminal device can accurately determine the quantity of coded modulation symbols of the first UCI, so that the first UCI can be transmitted through the first channel that occupies the plurality of time units.

S202: The network device determines the quantity of coded modulation symbols of the first UCI.

For a method in which the network device determines the quantity of coded modulation symbols of the first UCI, refer to S201. Details are not described herein again.

S203: The terminal device sends the first UCI to the network device, where the first UCI is carried on the first channel. Correspondingly, the network device receives the first UCI from the terminal device.

In some possible implementations, the terminal device may send the first UCI to the network device on at least one of the N transmission occasions occupied by the first channel. The first UCI and the first transport block are carried on the first channel, and each of the N transmission occasions may include one time unit or a first symbol in one time unit.

Optionally, the first UCI may occupy a transmission occasion on which the first channel overlaps the PUCCH carrying the first UCI in the N transmission occasions; or the first UCI may occupy any one or more of the N transmission occasions; or the first UCI may occupy at least one predetermined transmission occasion in the N transmission occasions; or the first UCI may occupy at least one of the N transmission occasions that is indicated by the network device; or the first UCI may occupy the 1st transmission occasion in the N transmission occasions.

Optionally, before sending the first UCI to the network device, the terminal device may multiplex the first UCI onto the first channel. For a specific manner in which the terminal device multiplexes the first UCI onto the first channel, refer to TS38.212. Details are not described herein again.

In some other possible implementations, the terminal device may send the first UCI to the network device on one transmission occasion. Correspondingly, the network device receives the first UCI from the terminal device on the transmission occasion. The first UCI and the first transport block are carried on the first channel, the one transmission occasion may include N time units or first symbols in N time units, and the N time units are N slots.

It should be understood that although the one transmission occasion includes the N time units, this does not indicate that the first UCI necessarily occupies the N time units. Optionally, the first UCI may occupy the N time units; or the first UCI may occupy a time unit in which the first channel overlaps the PUCCH carrying the first UCI in the N time units; or the first UCI may occupy any one or more of the N time units; or the first UCI may occupy at least one predetermined time unit in the N time units; or the first UCI may occupy at least one of the N time units that is indicated by the network device; or the first UCI may occupy the 1st time unit in the N time units.

Optionally, before sending the first UCI to the network device, the terminal device may multiplex the first UCI onto the first channel. When the terminal device sends the first UCI to the network device on one transmission occasion, the terminal device may multiplex the first UCI onto the first channel in the following manners, but this is not limited.

Manner 1

When frequency hopping is configured for the first channel, the terminal device may multiplex the first UCI onto the first channel based on third information, fourth information, fifth information, and sixth information.

The third information is a sequence number, in the first symbol set, of the 1st symbol after a first group of consecutive symbols that carry a DMRS in the 1st frequency hopping in the time unit in which the first channel overlaps the PUCCH carrying the first UCI.

The fourth information is a sequence number, in the first symbol set, of the 1st symbol after a first group of consecutive symbols that carry a DMRS in the 2nd frequency hopping in the time unit in which the first channel overlaps the PUCCH carrying the first UCI.

The fifth information is a sequence number, in the first symbol set, of the 1st symbol that does not carry a DMRS in the 1st frequency hopping in the time unit in which the first channel overlaps the PUCCH carrying the first UCI.

The sixth information is a sequence number, in the first symbol set, of the 1st symbol that does not carry a DMRS in the 2nd frequency hopping in the time unit in which the first channel overlaps the PUCCH carrying the first UCI.

For example, the first channel occupies four slots (for example, a slot 1, a slot 2, a slot 3, and a slot 4), the first symbols are 10 consecutive symbols starting from the 1st symbol in each slot, and the slot 2 is a slot in which the first channel overlaps the PUCCH carrying the first UCI. The first symbol set may include first 10 symbols in each of the four slots.

When a symbol index of the 1st symbol after a first group of consecutive symbols that carry a DMRS in the 1st frequency hopping is 2 in the slot 2 (that is, in the slot 2, the 1st symbol after the first group of consecutive symbols that carry the DMRS in the 1st frequency hopping is the 3rd symbol in the slot 2), the third information may be $l^{(1)} = 12$.

When a symbol index of the 1st symbol after a first group of consecutive symbols that carry a DMRS in the 2nd frequency hopping is 5 in the slot 2 (that is, in the slot 2, the 1st symbol after the first group of consecutive symbols that carry the DMRS in the 2nd frequency hopping is the 6th symbol in the slot 2), the fourth information may be $l^{(2)} = 15$.

When a symbol index of the 1st symbol that does not carry a DMRS in the 1st frequency hopping is 0 in the slot 2 (that is, in the slot 2, the 1st symbol that does not carry the DMRS in the 1st frequency hopping is the 1st symbol in the slot 2), the fifth information may be $l^{(1)}_{CSI} = 10$.

When a symbol index of the 1st symbol that does not carry a DMRS in the 2nd frequency hopping is 6 in the slot 2 (that is, in the slot 2, the 1st symbol that does not carry the DMRS in the 2nd frequency hopping is the 7th symbol in the slot 2), the sixth information may be $l^{(2)}_{CSI} = 16$.

Manner 2

When frequency hopping is not configured for the first channel, the terminal device may multiplex the first UCI onto the first channel based on seventh information and eighth information.

The seventh information is a sequence number, in the first symbol set, of the 1st symbol after a first group of consecutive symbols that carry a DMRS in the time unit in which the first channel overlaps the PUCCH carrying the first UCI.

The eighth information is a sequence number, in the first symbol set, of the 1st symbol that does not carry a DMRS in the time unit in which the first channel overlaps the PUCCH carrying the first UCI.

For example, the first channel occupies four slots (for example, a slot 1, a slot 2, a slot 3, and a slot 4), the first symbols are 10 consecutively allocated symbols starting from the 1st symbol in each slot, and the slot 2 is a slot in which the first channel overlaps the PUCCH carrying the first UCI. The first symbol set may include first 10 symbols in each of the four slots.

When a symbol index of the 1st symbol after a first group of consecutive symbols that carry a DMRS is 2 in the slot 2 (that is, in the slot 2, the 1st symbol after the first group of consecutive symbols that carry the DMRS is the 3rd symbol in the slot 2), the seventh information may be $l^{(1)} = 12$.

When a symbol index of the 1st symbol that does not carry a DMRS is 0 in the slot 2 (that is, in the slot 2, the 1st symbol that does not carry the DMRS is the 1st symbol in the slot 2), the eighth information may be $l^{(1)}_{CSI} = 10$.

For a specific manner in which the terminal device multiplexes the first UCI onto the first channel, refer to TS38.212. Details are not described herein again.

In Manner 1 and Manner 2, the terminal device may multiplex the first UCI onto the time unit in which the first channel overlaps the PUCCH carrying the first UCI.

It should be understood that after multiplexing the first UCI onto the first channel, the terminal device may send the first UCI through only the first channel, and does not need to send the first UCI through the PUCCH. In this case, the PUCCH carrying the first UCI may be a PUCCH prepared for carrying the first UCI, but not a PUCCH that actually carries the first UCI.

For example, after receiving, in a slot 0, data carried on a first PDSCH, the terminal device prepares to transmit a first HARQ-ACK of the first PDSCH through a first PUCCH in a slot 5. The network device schedules the terminal device to send data through a first TBoMS PUSCH in a slot 5, a slot 6, a slot 9, and a slot 10. In this case, the first PUCCH prepared for carrying the first HARQ-ACK overlaps the first TBoMS PUSCH in the slot 5. After multiplexing the first HARQ-ACK onto the first TBoMS PUSCH, the terminal device may transmit the first HARQ-ACK through only the first TBoMS PUSCH, and does not need to transmit the first HARQ-ACK through the first PUCCH.

Optionally, when the network device receives the first UCI from the terminal device on one transmission occasion, the network device may obtain the first UCI from the first channel in the following manners, but this is not limited.

Manner 1

When frequency hopping is configured for the first channel, the network device may obtain the first UCI from the first channel based on the third information, the fourth information, the fifth information, and the sixth information.

Manner 2

When frequency hopping is not configured for the first channel, the network device may obtain the first UCI from the first channel based on the seventh information and the eighth information. It should be understood that an execution sequence of S202 and S203 is not limited.

It should be understood that the method shown in this embodiment of this application may be applied to MIMO. For example, the terminal device may determine a quantity of coded modulation symbols of each layer of the UCI according to the method shown in this embodiment of this application. The method shown in this embodiment of this application may be further applied to a non-layered (that is, single-layer) scenario.

In the method shown in FIG. 2, after determining the quantity of coded modulation symbols of the first UCI, the terminal device may send the first UCI to the network device through the first channel that occupies the plurality of time units. The quantity of coded modulation symbols of the first UCI is determined based on the quantity N of time units occupied by the first channel and/or the scaling factor K of the transport block carried on the first channel. In this way, transmission of the UCI can be performed through the channel that occupies the plurality of time units.

An embodiment of this application further provides a communication method. The method may be applied to the communication system shown in FIG. 1C. The following describes this embodiment of this application with reference to a flowchart shown in FIG. 5.

S501: A network device sends first signaling to a terminal device. The first signaling indicates the terminal device to send a first transport block through a first channel.

Optionally, the first signaling may indicate first information. For example, the first signaling includes the first information, or the first signaling includes information indicating the first information.

The first transport block may be carried on the first channel (for example, a TBoMS PUSCH).

For specific content of the first information, refer to S201. Details are not described herein again. The first signaling may be RRC signaling. The first signaling may indicate the first information using the RRC signaling. For a specific manner, refer to S201. Details are not described herein again.

S502: The network device sends second signaling to the terminal device. The second signaling is to be used by the terminal device to send first UCI.

In some possible implementations, the second signaling may indicate the terminal device to send the first UCI. For example, when the first UCI includes a CSI part 1 and/or a CSI part 2, the second signaling may indicate a resource that is scheduled by the network device for the terminal device and that is used to send the first UCI.

In some other possible implementations, the second signaling may indicate the terminal device to receive downlink data and/or control information, and the terminal device may send the first UCI to the network device based on the downlink data and/or the control information. For example, the terminal device may send, to the network device based on a timing relationship between the downlink data and/or the control information and a HARQ-ACK, the first UCI including the HARQ-ACK.

It should be understood that an execution sequence of S501 and S502 is not limited.

Optionally, the first channel and a PUCCH carrying the first UCI may overlap in time domain. S503: The terminal device generates, based on the first information, the first transport block carried on the first channel.

Optionally, the terminal device may determine a transmission occasion of the first transport block based on the first information. For a determining method, refer to S201. Details are not described herein again.

A procedure in which the terminal device generates, based on the first information, the first transport block carried on the first channel may include the following steps.

a1: The terminal device determines a transport block size (transport block size, TBS) of the first transport block based on the first information.

Optionally, the terminal device may determine the TBS of the first transport block based on K in the first information.

For example, the terminal device may determine, according to the following formula, an intermediate parameter, that is, an information bit quantity $N_{info}$, for calculating the TBS. In other words, the information bit quantity $N_{info}$ satisfies the following formula:

$$N_{info} = K \cdot N_{RE} \cdot R \cdot Q_m \cdot v$$

$N_{RE}$ is a quantity of resource elements (resource element, RE) allocated to the first transport block in one slot, R represents a code rate, $Q_m$ represents a modulation order, and $v$ represents a quantity of layers.

Then, the terminal device may determine the TBS of the first transport block based on the information bit quantity.

For example, if $N_{info} \leq 3824$, the terminal device may determine a quantized intermediate value $N'_{info}$ of information bits by using a formula $N'_{info} = \max\left(24, 2^m \cdot \left\lfloor \frac{N_{info}}{2^m} \right\rfloor\right)$, and select, from a TBS table in a protocol, a value that is close to $N'_{info}$ and not less than $N'_{info}$ as the TBS of the first transport block. $m = \max(3, \lfloor \log_2(N_{info}) \rfloor - 6)$.

For another example, if $N_{info} > 3824$, the terminal device may determine a quantized intermediate value $N'_{info}$ of information bits by using a formula $N'_{info} = \max\left(3840, 2^m \cdot \text{round}\left(\frac{N_{info}-24}{2^m}\right)\right)$, where $m = \lfloor \log_2(N_{info} - 24) \rfloor - 5$. If the code rate is $R \leq 1/4$, the terminal device may determine that the TBS of the first transport block is: $TBS = 8 \cdot C \cdot \left\lceil \frac{N'_{info}+24}{8 \cdot C} \right\rceil - 24$, where $C = \left\lceil \frac{N'_{info}+24}{3816} \right\rceil$. If $R > 1/4$ and $N'_{info} > 8424$, the terminal device may determine that the TBS of the first transport block is: $TBS = 8 \cdot C \cdot \left\lceil \frac{N'_{info}+24}{8 \cdot C} \right\rceil - 24$, where $C = \left\lceil \frac{N'_{info}+24}{8424} \right\rceil$. If $R > 1/4$ and $N'_{info} \leq 8424$, < 8424, the terminal device may determine that the TBS of the first transport block is: $TBS = 8 \cdot \left\lceil \frac{N'_{info}+24}{8} \right\rceil - 24$.

a2: The terminal device divides code blocks based on the TBS of the first transport block.

For example, the terminal device may divide the code blocks by using the following procedure.

Step A: The terminal device may determine a base graph (Basic Graph, BG) based on the TBS (for ease of description, the TBS of the first transport block is referred to as A below) and the code rate R.

When $A \leq 292$, or $A \leq 3824$ and $R \leq 0.67$, or $R \leq 0.25$, the terminal device may select BG2; otherwise, the terminal device may select BG1.

Step B: The terminal device determines a transport block size of the first transport block including a transport block-cyclic redundancy check (transport block-cyclic redundancy check, TB-CRC). The transport block size of the first transport block including the TB-CRC may be $B = A + E$, where E is a size of the TB-CRC. If $A > 3824$, $E = 24$; otherwise, $E = 16$.

Step C: The terminal device performs code block division on the first transport block including the TB-CRC.

For example, when $B \leq K_{cb}$, the terminal device determines that code block division does not need to be performed on the first transport block including the TB-CRC (that is, a quantity of code blocks of the first transport block including the TB-CRC is $F = 1$, a code block length of the first transport block including the TB-CRC is $B' = B$, and the first transport block is one code block and does not include a code block-cyclic redundancy check (code block-cyclic redundancy check, CB-CRC)); otherwise, the terminal device determines that code block division needs to be performed on the code block including the TB-CRC, and adds a 24-bit (bit) CB-CRC to each code block obtained through division (that is, each code block obtained through division includes the 24-bit (bit) CB-CRC). In this case, a quantity of code blocks of the first transport block including the TB-CRC is $F = \left\lceil \frac{B}{K_{cb}-24} \right\rceil$, and a length of each code block obtained through division is $K' = B/C + 24$. For BG1, $K_{cb} = 8448$; and for BG2, $K_{cb} = 3840$.

Step D: The terminal device may determine a parameter $K_b$ based on the BG and/or the size G of each code block obtained in step C.

Optionally, when the terminal device selects BG1, $K_b = 22$.

Optionally, when the terminal device selects BG2, the terminal device may determine $K_b$ based on G.

For example, when $G \leq 192$, $K_b = 6$. For another example, when $192 < G \leq 560$, $K_b = 8$.

For another example, when $560 < G \leq 640$, $K_b = 9$. For another example, when $640 < G$, $K_b = 10$.

Step E: The terminal device determines the size of each code block based on the parameter $K_b$.

For example, when the terminal device selects BG1, the terminal device finds, based on a table in a protocol, a minimum low-density parity-check code (low density parity check code, LDPC) lifting size (lifting size) Z value (represented by $Z_c$ below) that satisfies the following formula: $K_b Z_c \geq K'$. Then, the terminal device may determine the size of each code block according to the following formula: $K_r = 22 Z_c$.

For another example, when the terminal device selects BG2, the terminal device finds, based on a table in a protocol, a minimum LDPC lifting size (lifting size) Z value (represented by $Z_c$ below) that satisfies the following formula: $K_b Z_c \geq K'$. Then, the terminal device may determine the size of each code block according to the following formula: $K_r = 10 Z_c$ (for BG2).

a3: The terminal device performs LDPC coding, rate matching, and code block concatenation on each code block, to generate the first transport block.

S504: The terminal device generates the first UCI based on the second signaling.

b1: The terminal device determines whether the first UCI needs to be multiplexed onto the first transport block.

Optionally, when the first channel and the PUCCH carrying the first UCI overlap in time domain, and a multiplexing condition is met, the terminal device determines that the first UCI needs to be multiplexed onto the first transport block; or when the first channel and the PUCCH carrying the first UCI do not overlap in time domain, or a multiplexing condition is not met, the terminal device determines that the first UCI does not need to be multiplexed onto the first transport block.

The multiplexing condition may include but is not limited to at least one of the following:

a priority of the PUCCH is equal to a priority of the first channel, an interval between the 1st symbol on which the first channel overlaps a second PUCCH and the last symbol carrying the first signaling is greater than a first threshold, and an interval between the 1st symbol and the last symbol carrying the second signaling is greater than the first threshold; or

when the second signaling indicates the terminal device to receive a PDSCH, and the first UCI includes a HARQ-ACK of the terminal device for the PDSCH, a priority of the PUCCH is equal to a priority of the first channel, an interval between the 1st symbol on which the first channel overlaps a second PUCCH and the last symbol carrying the first signaling is greater than a first threshold, an interval between the 1st symbol and the last symbol carrying the second signaling is greater than the first threshold, and an interval between the 1st symbol and the last symbol carrying the PDSCH is greater than a second threshold.

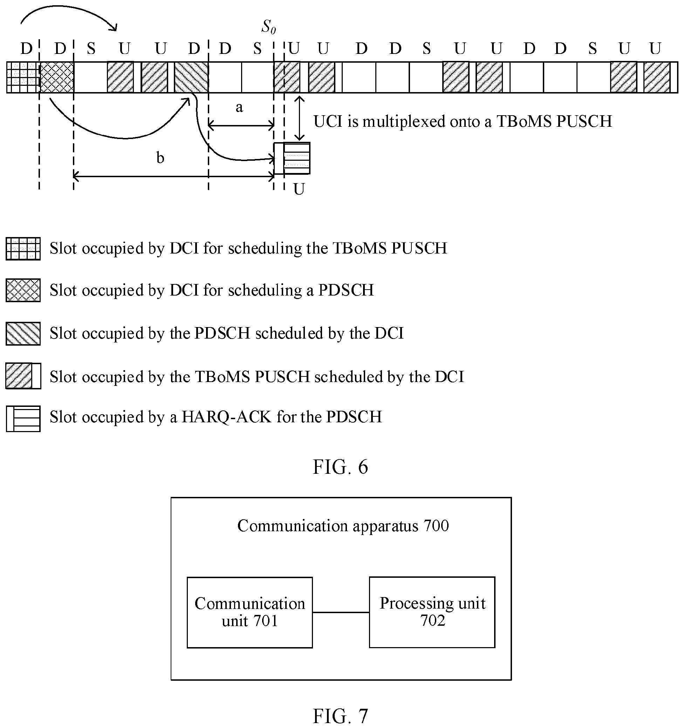

For example, as shown in FIG. 6, the first channel is a TBoMS PUSCH, and the 1st symbol on which the TBoMS PUSCH and the PUCCH carrying the first UCI overlap in time domain is $S_0$ (the 1st symbol in the 3rd slot of the TBoMS PUSCH). When an interval (which may also be referred to as a time domain length) a between $S_0$ and the last symbol of a PDSCH corresponding to a HARQ-ACK is greater than $T_{proc,1}$ symbols, and an interval b between $S_0$ and the last symbol of a slot occupied by a physical downlink control channel (physical downlink control channel, PDCCH) scheduling the TBoMS PUSCH and a slot occupied by a PUCCH scheduling the PDSCH is greater than $T_{proc,2}$ symbols, the terminal device may determine that the first UCI needs to be multiplexed onto a TBoMS PUSCH in the 3rd uplink slot, so that the terminal device may determine that the first UCI needs to be multiplexed onto a first data block carried on the TBoMS PUSCH in the 3rd uplink slot.

$T_{proc,1} = (N_1 + d_{1,1} + d_2)(2048 + 144) \bullet \kappa 2^{-\mu} \bullet T_C + T_{ext}$.

The terminal device may determine PDSCH decoding time $N_1$ based on a UE processing capability of the terminal device. When the terminal device has a UE processing capability 1, the terminal device may determine $N_1$ based on $\mu$ and Table 13. When the terminal device has a UE processing capability 2, the terminal device may determine $N_1$ based on $\mu$ and Table 14. $\mu$ is one of ($\mu_{PDCCH}$, $\mu_{TPDSCH}$, $\mu_{UL}$), $\mu_{PDCCH}$ is a subcarrier spacing of a PDCCH scheduling a PDSCH (the PDCCH carries DCI for scheduling the PDSCH), $\mu_{PDSCH}$ is a subcarrier spacing of a scheduled PDSCH (for example, the PDSCH scheduled using DCI in the figure, which is referred to as the scheduled PDSCH for short below), and $\mu_{UL}$ is a subcarrier spacing of an uplink channel carrying a HARQ-ACK (for example, the HARQ-ACK for the PDSCH in the figure). A value of $\mu$ should satisfy that $T_{proc,1}$ is a maximum value.

When the first channel is a non-shared spectrum channel, $T_{ext} = 0$.

When a type of the scheduled PDSCH is a PDSCH mapping type A, if the last symbol of the scheduled PDSCH is the jth symbol in a slot, and $j < 7$, $d_{1,1} = 7 - j$; otherwise, $d_{1,1} = 0$. When the terminal device has the UE processing capability 1, and a type of the scheduled PDSCH is a PDSCH mapping type B, if a quantity of symbols allocated to the scheduled PDSCH is $M > 7$, $d_{1,1} = 0$; if a quantity of symbols allocated to the scheduled PDSCH is $M > 4$ and $M \leq 6$, $d_{1,1} = 7M$; if a quantity of symbols allocated to the scheduled PDSCH is $M = 3$, $d_{1,1} = 3 + \text{mined}, 1)$, where d is a quantity of overlapping symbols between the PDCCH scheduling the PDSCH and the scheduled PDSCH; or if a quantity of symbols allocated to the scheduled PDSCH is 2, $d_{1,1} = 3 + d$, where d is a quantity of overlapping symbols between the PDCCH scheduling the PDSCH and the scheduled PDSCH.

When a priority of the TBoMS PUSCH is higher than a priority of the PUCCH, $d_2$ of the TBoMS PUSCH may be set by using a value reported by the terminal device. When a priority of the TBoMS PUSCH is not higher than a priority of the PUCCH, $d_2 = 0$.

$T_C = 1/(\Delta f_{max} \cdot N_f)$, where $\Delta f_{max} = 480 \cdot 10^3$ Hz, and $N_f = 4096$.

A constant $\kappa = T_s/T_c = 64$, where $T_s = 1/(\Delta f_{ref} \cdot N_{fref})$, $\Delta f_{ref} = 15 \cdot 10^3$ Hz, and $N_{f,ref} = 2048$.

**Table 13**

| $\mu$ | PDSCH decoding time $N_1$ (measured in symbols) | |
|---|---|---|
| | In "dmrs-DownlinkForPDSCH-MappingTypeA" and "dmrs-DownlinkForPDSCH-MappingTypeB", "dmrs-AdditionalPosition" in "DMRS-DownlinkConfig" is equal to 'pos0' | In at least one of "dmrs-DownlinkForPDSCH-MappingTypeA" and "dmrs-DownlinkForPDSCH-MappingTypeB", a higher layer parameter "dmrs-AdditionalPosition" in "DMRS-DownlinkConfig" is not equal to 'pos0'; or the higher layer parameter is not configured |
| 0 | 8 | $N_{1,0}$ |
| 1 | 10 | 13 |
| 2 | 17 | 20 |
| 3 | 20 | 24 |

**Table 14**

| $\mu$ | PDSCH decoding time $N_1$ (measured in symbols) |
|---|---|
| | In higher layer parameters "dmrs-DownlinkForPDSCH-MappingTypeA" and "dmrs-DownlinkForPDSCH-MappingTypeB", "dmrs-AdditionalPosition" in "DMRS-DownlinkConfig" is equal to 'pos0' |
| 0 | 3 |
| 1 | 4.5 |
| 2 | 9 (for a frequency range 1 (frequency range 1, FR1)) |

A value of $N_{1,0}$ may be 13 or 14. For a method for determining the value of $N_{1,0}$, refer to the existing protocol. A bandwidth of the FR1 may include at least one of the following: 5, 10, 15, 20, 25, 30, 40, 50, 60, 80, or 100 megabytes (M).

In addition, $T_{proc,2} = max\{(N_2 + d_{2,1} + d_2)(2048 + 144) \cdot \kappa 2^{-\mu} \cdot Tc + T_{ext}, d_{2,2}\}$.

The terminal device may determine PDSCH preparation time $N_2$ based on a UE processing capability of the terminal device. When the terminal device has a UE processing capability 1, the terminal device may determine $N_2$ based on $\mu$ and Table 15. When the terminal device has a UE processing capability 2, the terminal device may determine $N_2$ based on $\mu$ and Table 16. $\mu$ is one of $(\mu_{DL}, \mu_{UL})$, and a value of $\mu$ satisfies that $T_{proc,2}$ is a maximum value. $\mu_{DL}$ is a subcarrier spacing of a PDCCH scheduling a PUSCH, and $\mu_{UL}$ is a subcarrier spacing of an uplink channel for transmitting the TBoMS PUSCH.

For processing of non-shared spectrum channel access, $T_{ext} = 0$.

If the 1st symbol of the TBoMS PUSCH includes only a DMRS, $d_{2,1} = 0$; or if the 1st symbol of the TBoMS PUSCH includes not only a DMRS, $d_{2,1} = 1$.

If the DCI for scheduling the TBoMS PUSCH can trigger bandwidth part (bandwidth part, BWP) switching, $d_{2,2}$ is equal to switching time; or if the DCI for scheduling the TBoMS PUSCH cannot trigger bandwidth part switching, $d_{2,2} = 0$.

When a priority of the TBoMS PUSCH is higher than a priority of the PUCCH, $d_2$ of the TBoMS PUSCH may be set by using a value reported by the terminal device. When a priority of the TBoMS PUSCH is not higher than a priority of the PUCCH, $d_2 = 0$.

$T_C = 1/(\Delta f_{max} \cdot N_f)$, where $\Delta f_{max} = 480 \cdot 10^3$ Hz, and $N_f = 4096$.

A constant $\kappa = T_s/T_c = 64$, where $T_s = 1/(\Delta f_{ref} \cdot N_{fref})$, $\Delta f_{ref} = 15 \cdot 10^3$ Hz, and $N_{f,ref} = 2048$.

**Table 15**

| $\mu$ | PUSCH preparation time $N_2$ (measured in symbols) |
|---|---|
| 0 | 10 |
| 1 | 12 |
| 2 | 23 |
| 3 | 36 |

**Table 16**

| $\mu$ | PUSCH preparation time $N_2$ (measured in symbols) |
|---|---|
| 0 | 5 |
| 1 | 5.5 |
| 2 | 11 (for FR1) |

b2: The terminal device determines a quantity of bits of the first UCI, performs code block division on the first transport block, and adds a CRC to the first UCI.

Optionally, the terminal device may determine the quantity of bits of the first UCI based on a type of the first UCI.

Optionally, the terminal device may determine, based on the type of the first UCI, a quantity of bits of the CRC added to the first UCI.

b3: The terminal device performs channel coding on each code block of the first transport block.

Optionally, when the first UCI includes a HARQ-ACK and CSI, the terminal device may independently code the HARQ-ACK and the CSI.

Optionally, when the first UCI includes a CSI part 1 and a CSI part 2, the terminal device may independently code the CSI part 1 and the CSI part 2.

Optionally, when the first UCI includes CG-UCI, and no HARQ-ACK is multiplexed onto the first channel, the terminal device independently codes the CG-UCI.

Optionally, when the first UCI includes CG-UCI and a HARQ-ACK, the terminal device jointly codes the CG-UCI and the HARQ-ACK.

b4: The terminal device determines a quantity of coded modulation symbols of the first UCI based on the first information.

For specific content of b4, refer to S201. Details are not described herein again.

b5: The terminal device generates the first UCI based on the quantity of coded modulation symbols of the first UCI.

Optionally, the terminal device may perform rate matching and code block concatenation on each code block based on the quantity of coded modulation symbols of the first UCI, to generate the first UCI.

S505: The terminal device multiplexes the first UCI onto the first channel.

Optionally, the first channel further carries the first transport block.

For specific content of S505, refer to S203. Details are not described herein again.

S506: The terminal device sends the first UCI to the network device.

After multiplexing the first UCI onto the first channel, the terminal device may generate a first signal that carries the first UCI and the first transport block, and send the first signal through the first channel.

In this case, the terminal device does not need to send, to the network device, the PUCCH carrying the first UCI.

S507: The network device determines the quantity of coded modulation symbols of the first UCI. For specific content of S507, refer to S202. Details are not described herein again.

An execution sequence of S506 and S507 is not limited.

S508: The network device obtains the first UCI from the first channel.

For specific content of S508, refer to S203. Details are not described herein again.

In the method shown in FIG. 5, after determining the quantity of coded modulation symbols of the first UCI, the terminal device may send the first UCI to the network device through the first channel that occupies the plurality of time units. The quantity of coded modulation symbols of the first UCI is determined based on the quantity N of time units occupied by the first channel and/or the scaling factor K of the transport block carried on the first channel. In this way, transmission of the UCI can be performed through the channel that occupies the plurality of time units.

Based on a same technical concept, this application further provides a communication apparatus. A structure of the apparatus is shown in FIG. 7, and includes a communication unit 701 and a processing unit 702. The communication apparatus 700 may be used in the terminal device or the network device in the communication system shown in FIG. 1C, and may implement the communication method provided in the foregoing embodiments and examples of this application. Functions of units in the apparatus 700 are described below.

The communication unit 701 is configured to receive and send data.

When the communication apparatus 700 is used in a terminal device or a network device (in a scenario in which the network device interacts with the terminal device), the communication unit 701 may be implemented by using a transceiver, for example, a mobile communication module. The mobile communication module may provide a solution that is applied to the terminal device and that includes wireless communication such as 2G/3G/4G/5G. The mobile communication module may include at least one antenna, at least one filter, a switch, a power amplifier, a low noise amplifier (low noise amplifier, LNA), and the like. The terminal device may access an AN device in an AN by using the mobile communication module, and interact with the AN device. The AN device may communicate with the accessing terminal device by using the mobile communication module.

In an implementation, the communication apparatus 700 is used in the terminal device in the embodiment of this application shown in FIG. 2 or FIG. 5. The following describes a specific function of the processing unit 702 in this implementation.

The processing unit 702 is configured to: determine a quantity of coded modulation symbols of first UCI; and send the first UCI through the communication unit 701. The first UCI is carried on a first channel, a quantity of time units occupied by the first channel is N, a scaling factor of a transport block carried on the first channel is K, at least one of N and K is used to determine the quantity of coded modulation symbols of the first UCI, N is an integer greater than 1, and K is an integer greater than 1.

Optionally, the processing unit 702 is specifically configured to:

determine the quantity of coded modulation symbols of the first UCI based on N and/or K;

determine the quantity of coded modulation symbols of the first UCI based on first information and second information; or

determine the quantity of coded modulation symbols of the first UCI based on second information, where the second information is determined based on N and/or K.

The first information includes at least one of the following: N or K.

The second information includes at least one of the following: a code rate compensation factor of the first UCI, or a parameter for adjusting an upper limit of the quantity of coded modulation symbols of the first UCI.

Optionally, the processing unit 702 is specifically configured to determine the quantity of coded modulation symbols of the first UCI based on a quantity of first symbols in one transmission occasion. The quantity of first symbols in one transmission occasion is determined based on L or based on L and N, the first symbol is a symbol occupied by the first channel in a time unit, L is a length of the first symbols, and L is a positive integer.

Optionally, the processing unit 702 is specifically configured to send the first UCI to the network device on one transmission occasion through the communication unit 701. The transmission occasion includes N time units or first symbols in N time units, the N time units are N slots, and the first symbol is a symbol occupied by the first channel in a time unit.

Optionally, the processing unit 702 is specifically configured to determine the quantity of coded modulation symbols of the first UCI based on at least one set. The at least one set is determined based on at least one of N, S, and L, S is a start symbol of the first symbols, L is the length of the first symbols, and L is a positive integer.

The at least one set includes at least one of the following: a first set, a second set, a third set, or a fourth set.

The first set includes sequence numbers, in a first symbol set, of the first symbols in the N time units in the transmission occasion.

The second set includes a sequence number, in the first symbol set, of a first symbol in the $i^{th}$ time unit in the transmission occasion.

The third set includes sequence numbers, in a second symbol set, of second symbols in the N time units in the transmission occasion.

The fourth set includes a sequence number, in the second symbol set, of a second symbol in the $i^{th}$ time unit in the transmission occasion.

i is a positive integer, and i is greater than or equal to 1 and less than or equal to N.

The first symbol set includes the first symbols in the N time units in the transmission occasion.

The second symbol set includes the second symbols in the N time units in the transmission occasion.

The second symbol is a symbol that meets a first condition in a time unit.

The first condition is: The symbol is the $1^{st}$ symbol that does not carry a DMRS after the $1^{st}$ symbol that carries a DMRS in first symbols in one time unit, or the symbol is a symbol after the 1st symbol that does not carry a DMRS after the 1st symbol that carries a DMRS in first symbols in one time unit.

Optionally, the $i^{th}$ time unit is a time unit in which the first channel overlaps a PUCCH carrying the first UCI.

Optionally, the processing unit 702 is specifically configured to: when frequency hopping is configured for the first channel, before the first UCI is sent to the network device, multiplex the first UCI onto the first channel based on third information, fourth information, fifth information, and sixth information.

The third information is a sequence number, in the first symbol set, of the 1st symbol after a first group of consecutive symbols that carry a DMRS in the 1st frequency hopping in the time unit in which the first channel overlaps the PUCCH carrying the first UCI.

The fourth information is a sequence number, in the first symbol set, of the 1st symbol after a first group of consecutive symbols that carry a DMRS in the 2nd frequency hopping in the time unit in which the first channel overlaps the PUCCH carrying the first UCI.

The fifth information is a sequence number, in the first symbol set, of the 1st symbol that does not carry a DMRS in the 1st frequency hopping in the time unit in which the first channel overlaps the PUCCH carrying the first UCI.

The sixth information is a sequence number, in the first symbol set, of the 1st symbol that does not carry a DMRS in the 2nd frequency hopping in the time unit in which the first channel overlaps the PUCCH carrying the first UCI.

The first symbol set includes the first symbols in the N time units in the transmission occasion. Optionally, the processing unit 702 is specifically configured to: when frequency hopping is not configured for the first channel, before the first UCI is sent to the network device, multiplex the first UCI onto the first channel based on seventh information and eighth information.

The seventh information is a sequence number, in the first symbol set, of the 1st symbol after a first group of consecutive symbols that carry a DMRS in the time unit in which the first channel overlaps the PUCCH carrying the first UCI.

The eighth information is a sequence number, in the first symbol set, of the 1st symbol that does not carry a DMRS in the time unit in which the first channel overlaps the PUCCH carrying the first UCI.

The first symbol set includes the first symbols in the N time units in the transmission occasion.

In an implementation, the communication apparatus 700 is used in the network device in the embodiment of this application shown in FIG. 2 or FIG. 5. The following describes a specific function of the processing unit 702 in this implementation.

The processing unit 702 is configured to: determine a quantity of coded modulation symbols of first UCI; and receive the first UCI through the communication unit 701. The first UCI is carried on a first channel, a quantity of time units occupied by the first channel is N, a scaling factor of a transport block carried on the first channel is K, at least one of N and K is used to determine the quantity of coded modulation symbols of the first UCI, N is an integer greater than 1, and K is an integer greater than 1.

Optionally, the processing unit 702 is specifically configured to:

determine the quantity of coded modulation symbols of the first UCI based on N and/or K;
determine the quantity of coded modulation symbols of the first UCI based on first information and second information; or
determine the quantity of coded modulation symbols of the first UCI based on second information, where the second information is determined based on N and/or K.

The first information includes at least one of the following: N or K.

The second information includes at least one of the following: a code rate compensation factor of the first UCI, or a parameter for adjusting an upper limit of the quantity of coded modulation symbols of the first UCI.

Optionally, the processing unit 702 is specifically configured to determine the quantity of coded modulation symbols of the first UCI based on a quantity of first symbols in one transmission occasion. The quantity of first symbols in one transmission occasion is determined based on L or based on L and N, the first symbol is a symbol occupied by the first channel in a time unit, L is a length of the first symbols, and L is a positive integer.

Optionally, the processing unit 702 is specifically configured to receive the first UCI from the terminal device on one transmission occasion through the communication unit 701. The transmission occasion includes N time units or first symbols in N time units, the N time units are N slots, and the first symbol is a symbol occupied by the first channel in a time unit.

Optionally, the processing unit 702 is specifically configured to determine the quantity of coded modulation symbols of the first UCI based on at least one set. The at least one set is determined based on at least one of N, S, and L, S is a start symbol of the first symbols, L is the length of the first symbols, and L is a positive integer.

The at least one set includes at least one of the following: a first set, a second set, a third set, or a fourth set.

The first set includes sequence numbers, in a first symbol set, of the first symbols in the N time units in the transmission occasion.

The second set includes a sequence number, in the first symbol set, of a first symbol in the $i^{th}$ time unit in the transmission occasion.

The third set includes sequence numbers, in a second symbol set, of second symbols in the N time units in the transmission occasion.

The fourth set includes a sequence number, in the second symbol set, of a second symbol in the $i^{th}$ time unit in the transmission occasion.

i is a positive integer, and i is greater than or equal to 1 and less than or equal to N.

The first symbol set includes the first symbols in the N time units in the transmission occasion.

The second symbol set includes the second symbols in the N time units in the transmission occasion.

The second symbol is a symbol that meets a first condition in a time unit.

The first condition is: The symbol is the $1^{st}$ symbol that does not carry a DMRS after the $1^{st}$ symbol that carries a DMRS in first symbols in one time unit, or the symbol is a symbol after the $1^{st}$ symbol that does not carry a DMRS after the $1^{st}$ symbol that carries a DMRS in first symbols in one time unit.

Optionally, the $i^{th}$ time unit is a time unit in which the first channel overlaps a physical uplink control channel PUCCH carrying the first UCI.

Optionally, the processing unit 702 is specifically configured to: when frequency hopping is configured for the first channel, after the first UCI is received from the terminal device, obtain the first UCI from the first channel based on third information, fourth information, fifth information, and sixth information.

The third information is a sequence number, in the first symbol set, of the $1^{st}$ symbol after a first group of consecutive symbols that carry a DMRS in the $1^{st}$ frequency hopping in the time unit in which the first channel overlaps the PUCCH carrying the first UCI.

The fourth information is a sequence number, in the first symbol set, of the $1^{st}$ symbol after a first group of consecutive symbols that carry a DMRS in the $2^{nd}$ frequency hopping in the time unit in which the first channel overlaps the PUCCH carrying the first UCI.

The fifth information is a sequence number, in the first symbol set, of the $1^{st}$ symbol that does not carry a DMRS in the $1^{st}$ frequency hopping in the time unit in which the first channel overlaps the PUCCH carrying the first UCI.

The sixth information is a sequence number, in the first symbol set, of the $1^{st}$ symbol that does not carry a DMRS in the $2^{nd}$ frequency hopping in the time unit in which the first channel overlaps the PUCCH carrying the first UCI.

The first symbol set includes the first symbols in the N time units in the transmission occasion. Optionally, the processing unit 702 is specifically configured to: when frequency hopping is not configured for the first channel, after the first UCI is received from the terminal device, obtain the first UCI from the first channel based on seventh information and eighth information.

The seventh information is a sequence number, in the first symbol set, of the $1^{st}$ symbol after a first group of consecutive symbols that carry a DMRS in the time unit in which the first channel overlaps the PUCCH carrying the first UCI.

The eighth information is a sequence number, in the first symbol set, of the $1^{st}$ symbol that does not carry a DMRS in the time unit in which the first channel overlaps the PUCCH carrying the first UCI.

The first symbol set includes the first symbols in the N time units in the transmission occasion.

It should be noted that division into the modules in the foregoing embodiments of this application is an example, and is merely logical function division. In actual implementation, there may be another division manner. In addition, function units in embodiments of this application may be integrated into one processing unit, or may exist alone physically, or two or more units may be integrated into one unit. The integrated unit may be implemented in a form of hardware, or may be implemented in a form of a software function unit.

When the integrated unit is implemented in a form of a software function unit and sold or used as an independent product, the integrated unit may be stored in a computer-readable storage medium.

Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

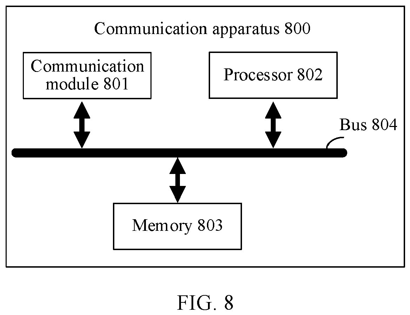

Based on a same technical concept, this application further provides a communication apparatus. The communication apparatus may be used in the terminal device or the network device in the communication system shown in FIG. 1C, may implement the communication method provided in the foregoing embodiments and examples of this application, and has a function of the communication apparatus shown in FIG. 7. As shown in FIG. 8, the communication apparatus 800 includes a processor 802 and a memory 803. Optionally, the communication apparatus further includes a communication module 801. The communication module 801, the processor 802, and the memory 803 are connected to each other.

Optionally, the communication module 801, the processor 802, and the memory 803 are connected to each other through a bus 804. The bus 804 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one bold line is used for representation in FIG. 8, but this does not mean that there is only one bus or only one type of bus.

The communication module 801 is configured to receive and send data, to implement communication interaction with another device. For example, when the communication apparatus 800 is used in a terminal device or a network device (in a scenario in which the network device interacts with the terminal device), the communication module 801 may be further implemented by using a transceiver.

In an implementation, the communication apparatus 800 is used in the terminal device in the embodiment of this application shown in FIG. 2 or FIG. 5. The processor 802 is specifically configured to: determine a quantity of coded modulation symbols of first UCI; and send the first UCI through the communication module 801. The first UCI is carried on a first channel, a quantity of time units occupied by the first channel is N, a scaling factor of a transport block carried on the first channel is K, at least one of N and K is used to determine the quantity of coded modulation symbols of the first UCI, N is an integer greater than 1, and K is an integer greater than 1.

In an implementation, the communication apparatus 800 is used in the network device in the embodiment of this application shown in FIG. 2 or FIG. 5. The processor 802 is specifically configured to: determine a quantity of coded modulation symbols of first UCI; and receive the first UCI through the communication module 801. The first UCI is carried on a first channel, a quantity of time units occupied by the first channel is N, a scaling factor of a transport block carried on the first channel is K, at least one of N and K is used to determine the quantity of coded modulation symbols of the first UCI, N is an integer greater than 1, and K is an integer greater than 1.

For a specific function of the processor 802, refer to the descriptions in the communication method provided in the foregoing embodiments and examples of this application, and the specific function descriptions of the communication apparatus 700 in the embodiment of this application shown in FIG. 7. Details are not described herein again.

The memory 803 is configured to store program instructions, data, and the like. Specifically, the program instructions may include program code, and the program code includes computer operation instructions. The memory 803 may include a random access memory (random access memory, RAM), and may further include a non-volatile memory (non-volatile memory), for example, at least one magnetic disk memory. The processor 802 executes the program instructions stored in the memory 803, and uses the data stored in the memory 803, to implement the foregoing function, so as to implement the communication method provided in the foregoing embodiments of this application.

It may be understood that the memory 803 in FIG. 8 in this application may be a volatile memory or a non-volatile memory, or may include both a volatile memory and a non-volatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), which is used as an external cache. By way of example and not limitation, many forms of RAMs are available, such as a static random access memory (Static RAM, SRAM), a dynamic random access memory (Dynamic RAM, DRAM), a synchronous dynamic random access memory (Synchronous DRAM, SDRAM), double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory for the system and the method described in this specification aims to include but is not limited to these memories and any memory of another appropriate type.

Based on the foregoing embodiments, an embodiment of this application further provides a computer program. When the computer program is run on a computer, the computer is enabled to perform the communication method provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the communication method provided in the foregoing embodiments.

The storage medium may be any usable medium that can be accessed by a computer. By way of example and not limitation, the computer-readable medium may include a RAM, a ROM, an EEPROM, a CD-ROM or another optical disk storage, a magnetic disk storage medium or another magnetic storage device, or any other medium that can be used to carry or store expected program code in a form of an instruction or a data structure and that can be accessed by a computer.

Based on the foregoing embodiments, an embodiment of this application further provides a computer-readable storage medium. The computer-readable storage medium stores a computer program or instructions. The computer program or the instructions are used to implement the communication method provided in the foregoing embodiments.

Based on the foregoing embodiments, an embodiment of this application provides a computer program product. The computer program product includes computer program code. When the computer program code is run by a computer, the computer is enabled to perform the method provided in the foregoing embodiments.

In conclusion, embodiments of this application provide a communication method and apparatus. In the method, after determining a quantity of coded modulation symbols of first UCI, a terminal device may send the first UCI to a network device through a first channel that occupies a plurality of time units. The quantity of coded modulation symbols of the first UCI is determined based on a quantity N of time units occupied by the first channel and/or a scaling factor K of a transport block carried on the first channel. In this way, transmission of the UCI can be performed through the channel that occupies the plurality of time units.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

A person skilled in the art should understand that embodiments of this application may be provided as a method, a system, or a computer program product. Therefore, this application may be in a form of a hardware-only embodiment, a software-only embodiment, or an embodiment combining software and hardware aspects. In addition, this application may be in a form of a computer program product implemented on one or more computer-usable storage media (including but not limited to a magnetic disk memory, a CD-ROM, an optical memory, and the like) including computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable storage that can indicate a computer or another programmable data processing device to work in a specific manner, so that the instructions stored in the computer-readable storage generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art may make various modifications and variations to this application without departing from the scope of this application. Thus, this application is intended to cover these modifications and variations, provided that they fall within the scope of the claims of this application and their equivalent technologies.

**Claims**

1. A communication method, applied to a terminal device, and comprising:

   determining a quantity of coded modulation symbols of first uplink control information UCI; and
   sending the first UCI, wherein
   the first UCI is carried on a first channel, a quantity of time units occupied by the first channel is N, a scaling factor of a transport block carried on the first channel is K, at least one of N and K is used to determine the quantity of coded modulation symbols of the first UCI, N is an integer greater than 1, and K is an integer greater than 1.

2. The method according to claim 1, wherein the determining a quantity of coded modulation symbols of first UCI comprises:

determining the quantity of coded modulation symbols of the first UCI based on N and/or K;

determining the quantity of coded modulation symbols of the first UCI based on first information and second information; or

determining the quantity of coded modulation symbols of the first UCI based on second information, wherein the second information is determined based on N and/or K, wherein

the first information comprises at least one of the following: N or K; and

the second information comprises at least one of the following: a code rate compensation factor of the first UCI, or a parameter for adjusting an upper limit of the quantity of coded modulation symbols of the first UCI.

3. The method according to claim 1 or 2, wherein the determining a quantity of coded modulation symbols of first UCI comprises:

   determining the quantity of coded modulation symbols of the first UCI based on a quantity of first symbols in one transmission occasion, wherein

   the quantity of first symbols in one transmission occasion is determined based on L or based on L and N, the first symbol is a symbol occupied by the first channel in a time unit, L is a length of the first symbols, and L is a positive integer.

4. The method according to any one of claims 1 to 3, wherein when the first UCI is a hybrid automatic repeat request-acknowledgement HARQ-ACK, the determining a quantity of coded modulation symbols of first UCI comprises: determining that a quantity of coded modulation symbols of the HARQ-ACK is:

$$
Q'_{AC} = min\left\{ \left\lceil \frac{(O_{ACK}+L_{ACK})\beta_{offset}^{PUSCH}\cdot\sum_{l=0}^{N_{symb,all}^{PUSCH}-1} M_{sc}^{UCI}(l)}{\frac{1}{K}\sum_{r=0}^{C_{UL-SCH}-1} K_r} \right\rceil, \left\lceil \alpha \cdot \sum_{l=l_0}^{N_{symb,all}^{PUSCH}-1} M_{sc}^{UCI}(l) \right\rceil \right\},
$$

wherein

min() represents taking a minimum value, and ⌈ ⌉ represents rounding up;

$O_{ACK}$ is a quantity of HARQ-ACK bits;

$L_{ACK}$ is a quantity of cyclic redundancy check CRC bits for the HARQ-ACK;

$\beta_{offset}^{PUSCH} = \beta_{offset}^{HARQ-ACK}$ , wherein $\beta_{offset}^{HARQ-ACK}$ is a code rate compensation factor of the HARQ-ACK;

$C_{UL-SCH}$ is a quantity of code blocks of the transport block carried on the first channel;

$K_r$ is a size of the $r^{th}$ code block of the transport block carried on the first channel;

$M_{sc}^{UCI}(l)$ is a quantity of resource elements REs that can be used for transmission of UCI in a symbol $l$ occupied by the first channel, and $l = 0,1,2,\ldots,N_{symb,all}^{PUSCH} - 1$ ;

$N_{symb,all}^{PUSCH}$ is the quantity of first symbols in one transmission occasion, and the first symbol is a symbol occupied by the first channel in a time unit;

$\alpha$ is a parameter for adjusting an upper limit of the quantity of coded modulation symbols of the HARQ-ACK; and

$l_0$ is a symbol index of the 1st symbol that does not carry a demodulation reference signal DMRS after the 1st symbol that carries a DMRS in first symbols in one time unit.

5. The method according to any one of claims 1 to 3, wherein when the first UCI is a channel state information CSI part 1, the determining a quantity of coded modulation symbols of first UCI comprises: determining that a quantity of coded modulation symbols of the CSI part 1 is:

$$Q'_{CSI-1} = min \left\{ \left\lceil \frac{\left(O_{CSI-1}+L_{CSI-1}\right)\beta^{PUSCH}_{offset} \cdot \sum_{l=0}^{N^{PUSCH}_{symb,all}-1} M^{UCI}_{sc}(l)}{\frac{1}{K}\sum_{r=0}^{C_{UL-SCH}-1} K_r} \right\rceil, \left\lceil \alpha \cdot \sum_{l=0}^{N^{PUSCH}_{symb,all}-1} M^{UCI}_{sc}(l) \right\rceil - Q'_{ACK/CG-UCI} \right\},$$

wherein

min() represents taking a minimum value, and ⌈ ⌉ represents rounding up;

$O_{CSI-1}$ is a quantity of bits for the CSI part 1;

$L_{CSI-1}$ is a quantity of CRC bits for the CSI part 1;

$Q'_{ACK/CG-UCI}$ is a quantity of coded modulation symbols of a HARQ-ACK or configured grant-uplink control information CG-UCI carried on the first channel;

$\beta^{PUSCH}_{offset} = \beta^{CSI-part1}_{offset}$, wherein $\beta^{CSI-part1}_{offset}$ is a code rate compensation factor of the CSI part 1;

$C_{UL-SCH}$ is a quantity of code blocks of the transport block carried on the first channel;

$K_r$ is a size of the $r^{th}$ code block of the transport block carried on the first channel;

$M^{UCI}_{sc}(l)$ is a quantity of REs that can be used for transmission of UCI in a symbol *l* occupied by the first channel, and $l = 0,1,2,\dots, N^{PUSCH}_{symb,all} - 1$;

$N^{PUSCH}_{symb,all}$ is the quantity of first symbols in one transmission occasion, and the first symbol is a symbol occupied by the first channel in a time unit; and

$\alpha$ is a parameter for adjusting an upper limit of the quantity of coded modulation symbols of the CSI part 1.

6. The method according to any one of claims 1 to 3, wherein when the first UCI is a CSI part 2, the determining a quantity of coded modulation symbols of first UCI comprises:
determining that a quantity of coded modulation symbols of the CSI part 2 is:

$$Q'_{CSI-2} = min \left\{ \left\lceil \frac{\left(O_{CSI-2}+L_{CSI-2}\right)\beta^{PUSCH}_{offset} \cdot \sum_{l=0}^{N^{PUSCH}_{symb,all}-1} M^{UCI}_{sc}(l)}{\frac{1}{K}\sum_{r=0}^{C_{UL-SCH}-1} K_r} \right\rceil, \left\lceil \alpha \cdot \sum_{l=0}^{N^{PUSCH}_{symb,all}-1} M^{UCI}_{sc}(l) \right\rceil - Q'_{ACK/CG-UCI} - Q'_{CSI-1} \right\},$$

wherein

min() represents taking a minimum value, and ⌈ ⌉ represents rounding up;

$O_{CSI-2}$ is a quantity of bits for the CSI part 2;

$L_{CSI-2}$ is a quantity of CRC bits for the CSI part 2;

$Q'_{CSI-1}$ is a quantity of coded modulation symbols of a CSI part 1 carried on the first channel;

$Q'_{ACK/CG-UCI}$ is a quantity of coded modulation symbols of a HARQ-ACK or CG-UCI carried on the first channel;

$\beta^{PUSCH}_{offset} = \beta^{CSI-part2}_{offset}$, wherein $\beta^{CSI-part2}_{offset}$ is a code rate compensation factor of the CSI part 2;

$C_{UL-SCH}$ is a quantity of code blocks of the transport block carried on the first channel;

$K_r$ is a size of the $r^{th}$ code block of the transport block carried on the first channel;

$M^{UCI}_{sc}(l)$ is a quantity of REs that can be used for transmission of UCI in a symbol *l* occupied by the first channel, and $l = 0,1,2, \dots, N_{symb,all}^{PUSCH} - 1$ ;

$N_{symb,all}^{PUSCH}$ is the quantity of first symbols in one transmission occasion, and the first symbol is a symbol occupied by the first channel in a time unit; and

$\alpha$ is a parameter for adjusting an upper limit of the quantity of coded modulation symbols of the CSI part 2.

7. The method according to any one of claims 1 to 3, wherein when the first UCI is CG-UCI, the determining a quantity of coded modulation symbols of first UCI comprises:

determining that a quantity of coded modulation symbols of the CG-UCI is:

$$Q'_{CG-UCI} = min \left\{ \left\lceil \frac{(O_{CG-UCI} + L_{CG-UCI})\beta_{offset}^{PUSCH} \cdot \sum_{l=0}^{N_{symb,all}^{PUSCH}-1} M_{sc}^{UCI}(l)}{\frac{1}{K}\sum_{r=0}^{C_{UL-SCH}-1} K_r} \right\rceil, \left\lceil \alpha \cdot \sum_{l=l_0}^{N_{symb,all}^{PUSCH}-1} M_{sc}^{UCI}(l) \right\rceil \right\},$$

wherein

min() represents taking a minimum value, and ⌈ ⌉ represents rounding up;

$O_{CG-UCI}$ is a quantity of CG-UCI bits;

$L_{CG-UCI}$ is a quantity of CRC bits for the CG-UCI;

$\beta_{offset}^{PUSCH} = \beta_{offset}^{CG-UCI}$ , wherein $\beta_{offset}^{CG-UCI}$ is a code rate compensation factor of the CG-UCI;

$C_{UL-SCH}$ is a quantity of code blocks of the transport block carried on the first channel;

$K_r$ is a size of the $r^{th}$ code block of the transport block carried on the first channel;

$M_{sc}^{UCI}(l)$ is a quantity of REs that can be used for transmission of UCI in a symbol $l$ occupied by the first channel, and $l = 0,1,2, \dots, N_{symb,all}^{PUSCH} - 1$ ;

$N_{symb,all}^{PUSCH}$ is the quantity of first symbols in one transmission occasion, and the first symbol is a symbol occupied by the first channel in a time unit;

$\alpha$ is a parameter for adjusting an upper limit of the quantity of coded modulation symbols of the CG-UCI; and

$l_0$ is a symbol index of the 1st symbol that does not carry a DMRS after the 1st symbol that carries a DMRS in first symbols in one time unit.

8. The method according to any one of claims 1 to 3, wherein when the first UCI is a HARQ-ACK and CG-UCI, the determining a quantity of coded modulation symbols of first UCI comprises: determining that a quantity of coded modulation symbols of the HARQ-ACK and the CG-UCI is:

$$Q'_{ACK} = min \left\{ \left\lceil \frac{(O_{ACK} + O_{CG-UCI} + L_{ACK})\beta_{offset}^{PUSCH} \cdot \sum_{l=0}^{N_{symb,all}^{PUSCH}-1} M_{sc}^{UCI}(l)}{\frac{1}{K}\sum_{r=0}^{C_{UL-SCH}-1} K_r} \right\rceil, \left\lceil \alpha \cdot \sum_{l=l_0}^{N_{symb,all}^{PUSCH}-1} M_{sc}^{UCI}(l) \right\rceil \right\},$$

wherein

min() represents taking a minimum value, and ⌈ ⌉ represents rounding up;

is a quantity of HARQ-ACK bits;

$O_{CG-UCI}$ is a quantity of CG-UCI bits;

$L_{AC}$ is a quantity of CRC bits for the HARQ-ACK;

$$\beta_{offset}^{PUSCH} = \beta_{offset}^{HARQ-ACK}$$ , wherein $\beta_{offset}^{HARQ-ACK}$ is a code rate compensation factor of the HARQ-ACK;

$C_{UL\text{-}SCH}$ is a quantity of code blocks of the transport block carried on the first channel;

$K_r$ is a size of the $r^{th}$ code block of the transport block carried on the first channel; $M_{sc}^{UCI}(l)$ is a quantity of REs that can be used for transmission of UCI in a symbol $l$ occupied by the first channel, and

$$l = 0,1,2, \ldots, N_{symb,all}^{PUSCH} - 1$$ ;

$N_{symb,all}^{PUSCH}$ is the quantity of first symbols in one transmission occasion, and the first symbol is a symbol occupied by the first channel in a time unit;

$\alpha$ is a parameter for adjusting the upper limit of the quantity of coded modulation symbols of the first UCI; and
$l_0$ is a symbol index of the 1st symbol that does not carry a DMRS after the 1st symbol that carries a DMRS in first symbols in one time unit.

9.  The method according to any one of claims 1 to 8, wherein K is equal to N.

10. The method according to any one of claims 1 to 9, wherein the sending the first UCI to a network device comprises:

    sending the first UCI to the network device on one transmission occasion, wherein
    the transmission occasion comprises N time units or first symbols in N time units, the N time units are N slots, and the first symbol is a symbol occupied by the first channel in a time unit.

11. The method according to claim 10, wherein the determining a quantity of coded modulation symbols of first UCI comprises:

    determining the quantity of coded modulation symbols of the first UCI based on at least one set, wherein
    the at least one set is determined based on at least one of N, S, and L, S is a start symbol of the first symbols, L is the length of the first symbols, and L is a positive integer;
    the at least one set comprises at least one of the following: a first set, a second set, a third set, or a fourth set;
    the first set comprises sequence numbers, in a first symbol set, of the first symbols in the N time units in the transmission occasion;
    the second set comprises a sequence number, in the first symbol set, of a first symbol in the $i^{th}$ time unit in the transmission occasion;
    the third set comprises sequence numbers, in a second symbol set, of second symbols in the N time units in the transmission occasion;
    the fourth set comprises a sequence number, in the second symbol set, of a second symbol in the $i^{th}$ time unit in the transmission occasion;
    i is a positive integer, and i is greater than or equal to 1 and less than or equal to N;
    the first symbol set comprises the first symbols in the N time units in the transmission occasion;
    the second symbol set comprises the second symbols in the N time units in the transmission occasion;
    the second symbol is a symbol that meets a first condition in a time unit; and
    the first condition is: the symbol is the 1st symbol that does not carry a DMRS after the 1st symbol that carries a DMRS in first symbols in one time unit, or the symbol is a symbol after the 1st symbol that does not carry a DMRS after the 1st symbol that carries a DMRS in first symbols in one time unit.

12. The method according to claim 11, wherein the $i^{th}$ time unit is a time unit in which the first channel overlaps a physical uplink control channel PUCCH carrying the first UCI.

13. The method according to any one of claims 10 to 12, wherein frequency hopping is configured for the first channel, and before the sending the first UCI to a network device, the method further comprises:

    multiplexing the first UCI onto the first channel based on third information, fourth information, fifth information, and sixth information, wherein
    the third information is a sequence number, in the first symbol set, of the 1st symbol after a first group of consecutive symbols that carry a demodulation reference signal DMRS in the 1st frequency hopping in the time unit in which the first channel overlaps the PUCCH carrying the first UCI;

the fourth information is a sequence number, in the first symbol set, of the 1st symbol after a first group of consecutive symbols that carry a DMRS in the 2nd frequency hopping in the time unit in which the first channel overlaps the PUCCH carrying the first UCI;

the fifth information is a sequence number, in the first symbol set, of the 1st symbol that does not carry a DMRS in the 1st frequency hopping in the time unit in which the first channel overlaps the PUCCH carrying the first UCI;

the sixth information is a sequence number, in the first symbol set, of the 1st symbol that does not carry a DMRS in the 2nd frequency hopping in the time unit in which the first channel overlaps the PUCCH carrying the first UCI; and

the first symbol set comprises the first symbols in the N time units in the transmission occasion.

14. The method according to any one of claims 10 to 12, wherein frequency hopping is not configured for the first channel, and before the sending the first UCI to a network device, the method further comprises:

multiplexing the first UCI onto the first channel based on seventh information and eighth information, wherein the seventh information is a sequence number, in the first symbol set, of the 1st symbol after a first group of consecutive symbols that carry a demodulation reference signal DMRS in the time unit in which the first channel overlaps the PUCCH carrying the first UCI;

the eighth information is a sequence number, in the first symbol set, of the 1st symbol that does not carry a DMRS in the time unit in which the first channel overlaps the PUCCH carrying the first UCI; and

the first symbol set comprises the first symbols in the N time units in the transmission occasion.

15. A communication method, applied to a network device, and comprising:

determining a quantity of coded modulation symbols of first uplink control information UCI; and receiving the first UCI, wherein

the first UCI is carried on a first channel, a quantity of time units occupied by the first channel is N, a scaling factor of a transport block carried on the first channel is K, at least one of N and K is used to determine the quantity of coded modulation symbols of the first UCI, N is an integer greater than 1, and K is an integer greater than 1.

16. The method according to claim 15, wherein the determining a quantity of coded modulation symbols of first UCI comprises:

determining the quantity of coded modulation symbols of the first UCI based on N and/or K;

determining the quantity of coded modulation symbols of the first UCI based on first information and second information; or

determining the quantity of coded modulation symbols of the first UCI based on second information, wherein the second information is determined based on N and/or K, wherein

the first information comprises at least one of the following: N or K; and

the second information comprises at least one of the following: a code rate compensation factor of the first UCI, or a parameter for adjusting an upper limit of the quantity of coded modulation symbols of the first UCI.

17. The method according to claim 15 or 16, wherein the determining a quantity of coded modulation symbols of first UCI comprises:

determining the quantity of coded modulation symbols of the first UCI based on a quantity of first symbols in one transmission occasion, wherein

the quantity of first symbols in one transmission occasion is determined based on L or based on L and N, the first symbol is a symbol occupied by the first channel in a time unit, L is a length of the first symbols, and L is a positive integer.

18. The method according to any one of claims 15 to 17, wherein when the first UCI is a hybrid automatic repeat request-acknowledgement HARQ-ACK, the determining a quantity of coded modulation symbols of first UCI comprises:
determining that a quantity of coded modulation symbols of the HARQ-ACK is:

$$Q'_{ACK} = min \left\{ \left\lceil \frac{(O_{ACK}+L_{ACK})\beta_{offset}^{PUSCH} \cdot \sum_{l=0}^{N_{symb,all}^{PUSCH}-1} M_{sc}^{UCI}(l)}{\frac{1}{K}\sum_{r=0}^{C_{UL-SCH}-1} K_r} \right\rceil, \left\lceil \alpha \cdot \sum_{l=l_0}^{N_{symb,all}^{PUSCH}-1} M_{sc}^{UCI}(l) \right\rceil \right\},$$

wherein

min() represents taking a minimum value, and ⌈ ⌉ represents rounding up;
is a quantity of HARQ-ACK bits;
$L_{ACK}$ is a quantity of cyclic redundancy check CRC bits for the HARQ-ACK;

$\beta_{offset}^{PUSCH} = \beta_{offset}^{HARQ-ACK}$ , wherein $\beta_{offset}^{HARQ-ACK}$ is a code rate compensation factor of the HARQ-ACK;

$C_{UL-SCH}$ is a quantity of code blocks of the transport block carried on the first channel;
$K_r$ is a size of the $r^{th}$ code block of the transport block carried on the first channel;

$M_{sc}^{UCI}(l)$ is a quantity of resource elements REs that can be used for transmission of UCI in a symbol $l$ occupied by the first channel, and $l = 0,1,2, ..., N_{symb,all}^{PUSCH} - 1$;

$N_{symb,all}^{PUSCH}$ is the quantity of first symbols in one transmission occasion, and the first symbol is a symbol occupied by the first channel in a time unit;

$\alpha$ is a parameter for adjusting an upper limit of the quantity of coded modulation symbols of the HARQ-ACK; and
$l_0$ is a symbol index of the 1st symbol that does not carry a demodulation reference signal DMRS after the 1st symbol that carries a DMRS in first symbols in one time unit.

19. The method according to any one of claims 15 to 17, wherein when the first UCI is a channel state information CSI part 1, the determining a quantity of coded modulation symbols of first UCI comprises:
determining that a quantity of coded modulation symbols of the CSI part 1 is:

$$Q'_{CS-1} = min \left\{ \left\lceil \frac{(O_{CSI-1}+L_{CSI-1})\beta_{offset}^{PUSCH} \cdot \sum_{l=0}^{N_{symb,all}^{PUSCH}-1} M_{sc}^{UCI}(l)}{\frac{1}{K}\sum_{r=0}^{C_{UL-SCH}-1} K_r} \right\rceil, \left\lceil \alpha \cdot \sum_{l=0}^{N_{symb,all}^{PUSCH}-1} M_{sc}^{UCI}(l) \right\rceil - Q'_{ACK/CG-UCI} \right\},$$

wherein

min() represents taking a minimum value, and ⌈ ⌉ represents rounding up;
$O_{CSI-1}$ is a quantity of bits for the CSI part 1;
$L_{CSI-1}$ is a quantity of CRC bits for the CSI part 1;

$Q'_{ACK/CG-UCI}$ is a quantity of coded modulation symbols of a HARQ-ACK or configured grant-uplink control information CG-UCI carried on the first channel;

$\beta_{offset}^{PUSCH} = \beta_{offset}^{CSI-part1}$ , wherein $\beta_{offset}^{CSI-part1}$ is a code rate compensation factor of the CSI part 1;

$C_{UL-SCH}$ is a quantity of code blocks of the transport block carried on the first channel;
$K_r$ is a size of the $r^{th}$ code block of the transport block carried on the first channel;

$M_{sc}^{UCI}(l)$ is a quantity of REs that can be used for transmission of UCI in a symbol $l$ occupied by the first channel, and $l = 0,1,2, ..., N_{symb,all}^{PUSCH} - 1$;

$N_{symb,all}^{PUSCH}$ is the quantity of first symbols in one transmission occasion, and the first symbol is a symbol occupied by the first channel in a time unit; and

$\alpha$ is a parameter for adjusting an upper limit of the quantity of coded modulation symbols of the CSI part 1.

20. The method according to any one of claims 15 to 17, wherein when the first UCI is a CSI part 2, the determining a quantity of coded modulation symbols of first UCI comprises:
determining that a quantity of coded modulation symbols of the CSI part 2 is:

$$Q'_{CSI-2} = min \left\{ \left\lceil \frac{(O_{CSI-2}+L_{CSI-2})\beta_{offset}^{PUSCH} \cdot \sum_{l=0}^{N_{symb,all}^{PUSCH}-1} M_{sc}^{UCI}(l)}{\frac{1}{K}\sum_{r=0}^{C_{UL-SCH}-1} K_r} \right\rceil, \left\lceil \alpha \cdot \sum_{l=0}^{N_{symb,all}^{PUSCH}-1} M_{sc}^{UCI}(l) \right\rceil - Q'_{ACK/CG-UCI} - Q'_{CSI-1} \right\},$$

wherein

min() represents taking a minimum value, and $\lceil \ \rceil$ represents rounding up;

$O_{CSI-2}$ is a quantity of bits for the CSI part 2;

$L_{CSI-2}$ is a quantity of CRC bits for the CSI part 2;

$Q'_{CSI-1}$ is a quantity of coded modulation symbols of a CSI part 1 carried on the first channel;

$Q'_{ACK/CG-UCI}$ is a quantity of coded modulation symbols of a HARQ-ACK or CG-UCI carried on the first channel;

$\beta_{ofset}^{PUSCH} = \beta_{offset}^{CSI-part2}$, wherein $\beta_{offset}^{CSI-part2}$ is a code rate compensation factor of the CSI part 2;

$C_{UL-SCH}$ is a quantity of code blocks of the transport block carried on the first channel;

$K_r$ is a size of the $r^{th}$ code block of the transport block carried on the first channel;

$M_{sc}^{UCI}(l)$ is a quantity of REs that can be used for transmission of UCI in a symbol $l$ occupied by the first channel, and $l = 0,1,2, ..., N_{symb,all}^{PUSCH} - 1$;

$N_{symb,all}^{PUSCH}$ is the quantity of first symbols in one transmission occasion, and the first symbol is a symbol occupied by the first channel in a time unit; and

$\alpha$ is a parameter for adjusting an upper limit of the quantity of coded modulation symbols of the CSI part 2.

21. The method according to any one of claims 15 to 17, wherein when the first UCI is CG-UCI, the determining a quantity of coded modulation symbols of first UCI comprises:
determining that a quantity of coded modulation symbols of the CG-UCI is:

$$Q'_{CG-UCI} = min \left\{ \left\lceil \frac{(O_{CG-UCI}+L_{CG-UCI})\beta_{offset}^{PUSCH} \cdot \sum_{l=0}^{N_{symb,all}^{PUSCH}-1} M_{sc}^{UCI}(l)}{\frac{1}{K}\sum_{r=0}^{C_{UL-SCH}-1} K_r} \right\rceil, \left\lceil \alpha \cdot \sum_{l=l_0}^{N_{symb,all}^{PUSCH}-1} M_{sc}^{UCI}(l) \right\rceil \right\},$$

wherein

min() represents taking a minimum value, and $\lceil \ \rceil$ represents rounding up;

$O_{CG-UCI}$ is a quantity of CG-UCI bits;

$L_{CG-UCI}$ is a quantity of CRC bits for the CG-UCI;

$\beta_{offset}^{PUSCH} = \beta_{offset}^{CG-UCI}$, wherein $\beta_{offset}^{CG-UCI}$ is a code rate compensation factor of the CG-UCI;

$C_{UL-SCH}$ is a quantity of code blocks of the transport block carried on the first channel;

$K_r$ is a size of the $r^{th}$ code block of the transport block carried on the first channel;

$M_{sc}^{UCI}(l)$ is a quantity of REs that can be used for transmission of UCI in a symbol $l$ occupied by the first channel, and $l = 0,1,2, \ldots, N_{symb,all}^{PUSCH} - 1$;

$N_{symb,all}^{PUSCH}$ is the quantity of first symbols in one transmission occasion, and the first symbol is a symbol occupied by the first channel in a time unit;

$\alpha$ is a parameter for adjusting an upper limit of the quantity of coded modulation symbols of the CG-UCI; and

$l_0$ is a symbol index of the 1st symbol that does not carry a DMRS after the 1st symbol that carries a DMRS in first symbols in one time unit.

22. The method according to any one of claims 15 to 17, wherein when the first UCI is a HARQ-ACK and CG-UCI, the determining a quantity of coded modulation symbols of first UCI comprises: determining that a quantity of coded modulation symbols of the HARQ-ACK and the CG-UCI is:

$$Q'_{ACK} = min \left\{ \left\lceil \frac{(O_{ACK} + O_{CG-UCI} + L_{ACK})\beta_{offset}^{PUSCH} \cdot \sum_{l=0}^{N_{symb,all}^{PUSCH}-1} M_{sc}^{UCI}(l)}{\frac{1}{K}\sum_{r=0}^{C_{UL-SCH}-1} K_r} \right\rceil , \left\lceil \alpha \cdot \sum_{l=l_0}^{N_{symb,all}^{PUSCH}-1} M_{sc}^{UCI}(l) \right\rceil \right\},$$

wherein

min() represents taking a minimum value, and ⌈ ⌉ represents rounding up;

is a quantity of HARQ-ACK bits;

$O_{CG-UCI}$ is a quantity of CG-UCI bits;

$L_{ACK}$ is a quantity of CRC bits for the HARQ-ACK;

$\beta_{offset}^{PUSCH} = \beta_{offset}^{HARQ-ACK}$, wherein $\beta_{offset}^{HARQ-ACK}$ is a code rate compensation factor of the HARQ-ACK;

$C_{UL-SCH}$ is a quantity of code blocks of the transport block carried on the first channel;

$K_r$ is a size of the $r^{th}$ code block of the transport block carried on the first channel; $M_{sc}^{UCI}(l)$ is a quantity of REs that can be used for transmission of UCI in a symbol $l$ occupied by the first channel, and $l = 0,1,2, \ldots, N_{symb,all}^{PUSCH} - 1$;

$N_{symb,all}^{PUSCH}$ is the quantity of first symbols in one transmission occasion, and the first symbol is a symbol occupied by the first channel in a time unit;

$\alpha$ is a parameter for adjusting the upper limit of the quantity of coded modulation symbols of the first UCI; and

$l_0$ is a symbol index of the 1st symbol that does not carry a DMRS after the 1st symbol that carries a DMRS in first symbols in one time unit.

23. The method according to any one of claims 15 to 22, wherein K is equal to N.

24. The method according to any one of claims 15 to 23, wherein the receiving the first UCI from a terminal device comprises:

receiving the first UCI from the terminal device on one transmission occasion, wherein the transmission occasion comprises N time units or first symbols in N time units, the N time units are N slots, and the first symbol is a symbol occupied by the first channel in a time unit.

25. The method according to claim 24, wherein the determining a quantity of coded modulation symbols of first UCI comprises:

determining the quantity of coded modulation symbols of the first UCI based on at least one set, wherein the at least one set is determined based on at least one of N, S, and L, S is a start symbol of the first symbols, L is the length of the first symbols, and L is a positive integer;

the at least one set comprises at least one of the following: a first set, a second set, a third set, or a fourth set;

the first set comprises sequence numbers, in a first symbol set, of the first symbols in the N time units in the transmission occasion;

the second set comprises a sequence number, in the first symbol set, of a first symbol in the $i^{th}$ time unit in the transmission occasion;

the third set comprises sequence numbers, in a second symbol set, of second symbols in the N time units in the transmission occasion;

the fourth set comprises a sequence number, in the second symbol set, of a second symbol in the $i^{th}$ time unit in the transmission occasion;

i is a positive integer, and i is greater than or equal to 1 and less than or equal to N;

the first symbol set comprises the first symbols in the N time units in the transmission occasion;

the second symbol set comprises the second symbols in the N time units in the transmission occasion;

the second symbol is a symbol that meets a first condition in a time unit; and

the first condition is: the symbol is the $1^{st}$ symbol that does not carry a demodulation reference signal DMRS after the $1^{st}$ symbol that carries a DMRS in first symbols in one time unit, or the symbol is a symbol after the $1^{st}$ symbol that does not carry a DMRS after the $1^{st}$ symbol that carries a DMRS in first symbols in one time unit.

26. The method according to claim 25, wherein the $i^{th}$ time unit is a time unit in which the first channel overlaps a physical uplink control channel PUCCH carrying the first UCI.

27. The method according to any one of claims 24 to 26, wherein frequency hopping is configured for the first channel, and after the receiving the first UCI from a terminal device, the method further comprises:

obtaining the first UCI from the first channel based on third information, fourth information, fifth information, and sixth information, wherein

the third information is a sequence number, in the first symbol set, of the $1^{st}$ symbol after a first group of consecutive symbols that carry a demodulation reference signal DMRS in the $1^{st}$ frequency hopping in the time unit in which the first channel overlaps the PUCCH carrying the first UCI;

the fourth information is a sequence number, in the first symbol set, of the $1^{st}$ symbol after a first group of consecutive symbols that carry a DMRS in the $2^{nd}$ frequency hopping in the time unit in which the first channel overlaps the PUCCH carrying the first UCI;

the fifth information is a sequence number, in the first symbol set, of the $1^{st}$ symbol that does not carry a DMRS in the $1^{st}$ frequency hopping in the time unit in which the first channel overlaps the PUCCH carrying the first UCI;

the sixth information is a sequence number, in the first symbol set, of the $1^{st}$ symbol that does not carry a DMRS in the $2^{nd}$ frequency hopping in the time unit in which the first channel overlaps the PUCCH carrying the first UCI; and

the first symbol set comprises the first symbols in the N time units in the transmission occasion.

28. The method according to any one of claims 24 to 26, wherein frequency hopping is not configured for the first channel, and after the receiving the first UCI from a terminal device, the method further comprises:

obtaining the first UCI from the first channel based on seventh information and eighth information, wherein

the seventh information is a sequence number, in the first symbol set, of the $1^{st}$ symbol after a first group of consecutive symbols that carry a demodulation reference signal DMRS in the time unit in which the first channel overlaps the PUCCH carrying the first UCI;

the eighth information is a sequence number, in the first symbol set, of the $1^{st}$ symbol that does not carry a DMRS in the time unit in which the first channel overlaps the PUCCH carrying the first UCI; and

the first symbol set comprises the first symbols in the N time units in the transmission occasion.

29. A communication apparatus, comprising:

a communication unit, configured to receive and send data; and

a processing unit, configured to perform the method according to any one of claims 1 to 28 by using the communication unit.

**30.** A communication apparatus, wherein the communication apparatus comprises a processor and a memory, the memory is configured to store a computer program or instructions, and the processor is configured to execute the computer program or the instructions in the memory, so that the method according to any one of claims 1 to 14 is performed, or the method according to any one of claims 15 to 28 is performed.

**31.** A computer-readable storage medium, storing a computer program or instructions, wherein the computer program or the instructions are used to implement the method according to any one of claims 1 to 14, or implement the method according to any one of claims 15 to 28.

**32.** A computer program product, wherein the computer program product comprises computer program code, and when the computer program code is run by a computer, the computer is enabled to perform the method according to any one of claims 1 to 14 or the method according to any one of claims 15 to 28.

TBoMS PUSCH transmission, N=4

| D | D | S | U | U | D | D | S | U | U |

Start symbol → 

L=10

FIG. 1A

TBoMS PUSCH transmission, N=4

| D | D | S | U | U | D | D | S | U | U |

Start symbol

L=2

FIG. 1B

Terminal device a
(in-vehicle device)

Terminal device b
(smartphone)

Network
device

FIG. 1C

FIG. 2

FIG. 3

TBoMS PUSCH transmission, N=8

TO

Start symbol →

L=10

D D S U U D D S U U D D S U U D D S U U

FIG. 4

Terminal device

Network device

S501: First signaling

S502: Second signaling

S503: Generate a first transport block

S504: Generate first UCI

S505: Multiplex the first UCI onto a first channel

S507: Determine a quantity of coded modulation symbols of the first UCI

S506: First UCI

S508: Obtain the first UCI from the first channel

FIG. 5

UCI is multiplexed onto a TBoMS PUSCH

▦ Slot occupied by DCI for scheduling the TBoMS PUSCH

▨ Slot occupied by DCI for scheduling a PDSCH

▨ Slot occupied by the PDSCH scheduled by the DCI

▨ Slot occupied by the TBoMS PUSCH scheduled by the DCI

▤ Slot occupied by a HARQ-ACK for the PDSCH

FIG. 6

Communication apparatus 700

Communication unit 701 —— Processing unit 702

FIG. 7

Communication apparatus 800

Communication module 801

Processor 802

Bus 804

Memory 803

FIG. 8

## INTERNATIONAL SEARCH REPORT

International application No.

**PCT/CN2022/121083**

**A. CLASSIFICATION OF SUBJECT MATTER**

H04L 5/00(2006.01)i

According to International Patent Classification (IPC) or to both national classification and IPC

**B. FIELDS SEARCHED**

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNTXT; CNKI; WPABSC; ENTXT; ENTXTC; 3GPP: 上行控制信息, 物理上行共享信道, 时间单元, 时隙, 子帧, 符号, 数, 缩放, 因子, 系数, 参数; UCI, uplink control information, physical uplink shared channel, PUSCH, time unit, slot, subframe, symbol, number, scale, factor, coefficient, parameter

**C. DOCUMENTS CONSIDERED TO BE RELEVANT**

| Category* | Citation of document, with indication, where appropriate, of the relevant passages | Relevant to claim No. |
|---|---|---|
| X | CN 110061805 A (CHINA ACADEMY OF INFORMATION AND COMMUNICATIONS TECHNOLOGY) 26 July 2019 (2019-07-26) description, paragraphs [0017]-[0046] | 1-3, 9, 10, 15-17, 23, 24, 29-32 |
| A | CN 110061805 A (CHINA ACADEMY OF INFORMATION AND COMMUNICATIONS TECHNOLOGY) 26 July 2019 (2019-07-26) entire document | 4-8, 11-14, 18-22, 25-28 |
| A | CN 110063039 A (SAMSUNG ELECTRONICS CO., LTD.) 26 July 2019 (2019-07-26) entire document | 1-32 |
| A | CN 110752908 A (CHINA ACADEMY OF INFORMATION AND COMMUNICATIONS TECHNOLOGY) 04 February 2020 (2020-02-04) entire document | 1-32 |
| A | WO 2021024922 A1 (SHARP K. K.) 11 February 2021 (2021-02-11) entire document | 1-32 |

☐ Further documents are listed in the continuation of Box C. ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 November 2022** | **28 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/121083**

| Patent document cited in search report | | | Publication date (day/month/year) | Patent family member(s) | | | Publication date (day/month/year) |
|---|---|---|---|---|---|---|---|
| CN | 110061805 | A | 26 July 2019 | WO | 2019233109 | A1 | 12 December 2019 |
| | | | | US | 2021092735 | A1 | 25 March 2021 |
| CN | 110063039 | A | 26 July 2019 | EP | 3806380 | A1 | 14 April 2021 |
| | | | | US | 2020077386 | A1 | 05 March 2020 |
| | | | | PH | 12019501291 | A1 | 02 December 2019 |
| | | | | US | 2021329626 | A1 | 21 October 2021 |
| | | | | AU | 2022203331 | A1 | 09 June 2022 |
| | | | | US | 2021274493 | A1 | 02 September 2021 |
| | | | | JP | 2020501456 | A | 16 January 2020 |
| | | | | EP | 3535920 | A1 | 11 September 2019 |
| | | | | PL | 3535920 | T3 | 28 June 2021 |
| | | | | CN | 114448589 | A | 06 May 2022 |
| | | | | MX | 2019006695 | A | 21 August 2019 |
| | | | | JP | 2022116039 | A | 09 August 2022 |
| | | | | KR | 20190095328 | A | 14 August 2019 |
| | | | | WO | 2018106063 | A1 | 14 June 2018 |
| | | | | US | 2018167931 | A1 | 14 June 2018 |
| | | | | CA | 3046451 | A1 | 14 June 2018 |
| | | | | US | 2018167932 | A1 | 14 June 2018 |
| | | | | ES | 2860475 | T3 | 05 October 2021 |
| | | | | AU | 2017373540 | A1 | 18 July 2019 |
| CN | 110752908 | A | 04 February 2020 | None | | | |
| WO | 2021024922 | A1 | 11 February 2021 | US | 2022295473 | A1 | 15 September 2022 |

Form PCT/ISA/210 (patent family annex) (January 2015)

**REFERENCES CITED IN THE DESCRIPTION**

**Patent documents cited in the description**

- CN 202111162151